(19) Europäisches Patentamt
European Patent Office
Office européen des brevets

(11) EP 2 110 416 A2

(12) EUROPEAN PATENT APPLICATION

(43) Date of publication:
21.10.2009 Bulletin 2009/43

(51) Int Cl.:
*C09D 11/00* *(2006.01)* *C09B 67/00* *(2006.01)*

(21) Application number: 09004249.0

(22) Date of filing: 25.03.2009

(84) Designated Contracting States:
AT BE BG CH CY CZ DE DK EE ES FI FR GB GR HR HU IE IS IT LI LT LU LV MC MK MT NL NO PL PT RO SE SI SK TR
Designated Extension States:
AL BA RS

(30) Priority: 26.03.2008 JP 2008081861
04.02.2009 JP 2009024320

(71) Applicant: Fujifilm Corporation
Tokyo 106-8620 (JP)

(72) Inventors:
- Sano, Satoshi
Fujinomiya-shi
Shizuoka 418-8666 (JP)
- Ishiji, Yohei
Fujinomiya-shi
Shizuoka 418-8666 (JP)
- Ohmoto, Makoto
Ashigarakami-gun
Kanagawa 258-8577 (JP)
- Sasaki, Daisuke
Fujinomiya-shi
Shizuoka 418-8666 (JP)
- Saito, Ryo
Fujinomiya-shi
Shizuoka 418-8666 (JP)

(74) Representative: HOFFMANN EITLE
Patent- und Rechtsanwälte
Arabellastrasse 4
81925 München (DE)

(54) **Dispersion of water-insoluble colorant, method of producing substance containing water-insoluble colorant, fine particles of water-insoluble colorant, dispersing agent for water-insoluble colorant, and recording liquid, ink set, printed article, method of forming image and image forming apparatus using the same**

(57) A dispersion of a water-insoluble colorant containing: a medium containing water; fine particles of the water-insoluble colorant; and a polymer compound or a surfactant that includes at least one kind of electron-withdrawing group or group of atoms represented by any one of formulae (I) to (IV) as its hydrophilic part:

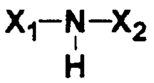

Formula (I)

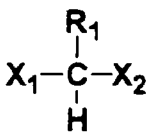

Formula (II)

$-B(OH)_2$

Formula (III)

$-SO_2M$

Formula (IV)

wherein at least one of $X_1$ and $X_2$ represents an electron-withdrawing linking group on the condition that when at least one of $X_1$ and $X_2$ is not the linking group, the at least one of $X_1$ and $X_2$ represents an electron-withdrawing substituent; $R_1$ represents a hydrogen atom or a substituent; and M represents a hydrogen atom or a metal atom.

EP 2 110 416 A2

Printed by Jouve, 75001 PARIS (FR)

## Description

### FIELD OF THE INVENTION

The present invention relates to a dispersion of a water-insoluble colorant, a method of producing a substance containing a water-insoluble colorant, fine particles of a water-insoluble colorant, a dispersing agent for a water-insoluble colorant, and a recording liquid, ink set, a printed article, a method of forming an image and an image forming apparatus using the same.

### BACKGROUND OF THE INVENTION

According to an inkjet recording method, high speed recording can be performed with a high freedom degree of imaging pattern and a low noise at the time of recording. Further, image recording can be performed at low cost. Still further, the inkjet recording method has advantages such that color recording can be readily performed. Therefore, recently the inkjet recording method is rapidly spreading and further developing. As a recording liquid for the method, hitherto a dye ink, in which a water-soluble dye is dissolved in an aqueous medium, has been widely used. However, the dye ink is poor in water resistance and weather resistance of the resultant printed article. Therefore, studies on the dye ink have been made to improve such disadvantage.

A pigment ink is ordinarily obtained by dispersing a water-insoluble pigment in an aqueous medium. It is general to use a method which includes adding a pigment together with one or plurality of dispersing agents such as various kinds of surfactants or water-soluble polymers to an aqueous solvent, and pulverizing them using a dispersion machine such as a sand mill, a bead mill, or a ball mill, to make the diameter of the pigment particle small to fine (see JP-A-2006-57044 ("JP-A" means unexamined published Japanese patent application) and JP-A-2006-328262). Besides, it is proposed to make pigments a solid solution in consideration of improving a coloring force and weather resistance (see JP-A-60-35055). Further, studies have been made of a method for preparing a pigment dispersion by dissolving an organic pigment together with a polymer dispersing agent or a polymer compound as a dispersing agent in an aprotic organic solvent in the presence of alkali, and then mixing the resultant solution with water (hereinafter the method is referred to as a build-up method), and of the predetermined polymer compounds per se and the like that are used in the above-described method (see JP-A-2003-113341, JP-A-2003-26972, JP-A-2004-43776, JP-A-2006-342316, and JP-A-2007-119586). Some documents (for example, see "Latest Pigments Dispersion Practice Know-How and Examples" published by TECHNICAL INFORMATION INSTITUTE CO., LTD; October, 2005, pp 208-211) disclose about dispersion stability of particles. However, further improvements and developments are demanded.

### SUMMARY OF THE INVENTION

The present invention resides in a dispersion of a water-insoluble colorant, comprising:

a medium containing water;
fine particles of the water-insoluble colorant; and
a polymer compound or a surfactant that includes at least one kind of electron-withdrawing group or group of atoms represented by any one of formulae (I) to (IV) as its hydrophilic part:

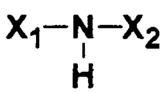

**Formula (I)**

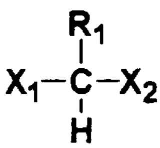

**Formula (II)**

$-B(OH)_2$

**Formula (III)**

$-SO_2M$

**Formula (IV)**

wherein at least one of $X_1$ and $X_2$ represents an electron-withdrawing linking group on the condition that when at least one of $X_1$ and $X_2$ is not the linking group, the at least one of $X_1$ and $X_2$ represents an electron-withdrawing substituent; $R_1$ represents a hydrogen atom or a substituent; and M represents a hydrogen atom or a metal atom.

Further, the present invention resides in a polymer dispersing agent for water-insoluble colorant, comprising repeating units represented by formula (VII):

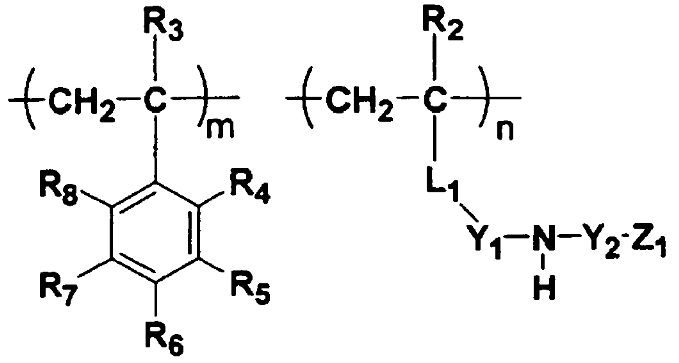

Formula (VII)

wherein $Y_1$ and $Y_2$ each independently represent -CO- or $-SO_2-$; $Z_1$ represents an alkyl group, a cycloalkyl group, an aryl group or a heterocyclic group; $R_2$ represents a hydrogen atom or a substituent; $L_1$ represents a single bond or a divalent linking group; $R_3$, $R_4$, $R_5$, $R_6$, $R_7$ and $R_8$ each independently represent a hydrogen atom or a substituent; and m and n each independently represents a copolymerization ratio of the repeating units.

Further, the present invention resides in fine particles of a water-insoluble colorant, comprising:
the water-insoluble colorant; and
a polymer compound or a surfactant that includes at least one kind of electron-withdrawing group or group of atoms represented by any one of formulae (I) to (IV) as its hydrophilic part:

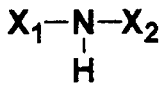

Formula (I)

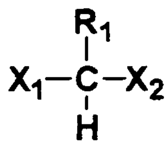

Formula (II)

$-B(OH)_2$

Formula (III)

$-SO_2M$

Formula (IV)

wherein at least one of $X_1$ and $X_2$ represents an electron-withdrawing linking group on the condition that when at least one of $X_1$ and $X_2$ is not the linking group, the at least one of $X_1$ and $X_2$ represents an electron-withdrawing substituent; $R_1$ represents a hydrogen atom or a substituent; and M represents a hydrogen atom or a metal atom.

Further, the present invention resides in a method of producing a substance containing a water-insoluble colorant, comprising:

dissolving an water-insoluble colorant into an aprotic water-soluble organic solvent in the presence of alkali; and making a solution of the water-insoluble colorant and an aqueous medium to contact each other, to give a dispersion in which fine particles of the water-insoluble colorant are generated;

wherein a polymer compound or a surfactant that includes at least one kind of electron-withdrawing group or group of atoms represented by any one of formulae (I) to (IV) as its hydrophilic part is contained into the solution of the water-insoluble colorant and/or the aqueous medium, to obtain the dispersion containing the fine particles of the water-insoluble colorant, and the polymer compound or surfactant:

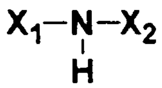

Formula (I)

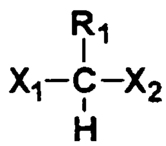

Formula (II)

$-B(OH)_2$

Formula (III)

$-SO_2M$

Formula (IV)

wherein at least one of $X_1$ and $X_2$ represents an electron-withdrawing linking group on the condition that when at least one of $X_1$ and $X_2$ is not the linking group, the at least one of $X_1$ and $X_2$ represents an electron-withdrawing substituent;

$R_1$ represents a hydrogen atom or a substituent; and M represents a hydrogen atom or a metal atom.

Further, the present invention resides in a dispersion of a water-insoluble colorant prepared by the method of producing a substance containing a water-insoluble colorant as described.

Further, the present invention resides in a recording liquid produced employing the dispersion as described, wherein the water-insoluble colorant is contained in an amount of 0.1 to 20% by mass with respect to a total mass of the recording liquid.

Further, the present invention resides in an ink set using the inkjet recording liquid as described.

Further, the present invention resides in a printed article having an image recorded thereon by a means that can provide, with a medium, the recording liquid as described, or the recording liquid by using the ink set as described, wherein the means has a function to adjust an applied amount or concentration of the recording liquid, thereby light-to-dark contrast of the printed article is adjusted.

Further, the present invention resides in an image-forming method, which comprises recording an image by providing, with a medium, the recording liquid as described, or the recording liquid by using the ink set as described.

Furthermore, the present invention resides in an image-forming apparatus having a means that can record an image by providing, with a medium, the recording liquid as described, or the recording liquid by using the ink set as described.

Other and further features and advantages of the invention will appear more fully from the following description.

DETAILED DESCRIPTION OF THE INVENTION

JP-A-2004-43776 specifically discloses a pigmentary water-based dispersion containing acrylic acid-based polymer. The dispersion utilizes electric charge repulsion due to an acid dissociative group represented by a carboxyl group or a sulfonic acid group possessed by a polymer compound, and secures dispersibility of the pigment particles. On the other hand, as a result of intensive researches and studies to overcome the above problems, the inventors have found that a polymer compound or a surfactant that includes a specific electron-withdrawing group gives superior dispersibility to a dispersion of a water-insoluble colorant. The present invention has been accomplished on the basis of the above finding.

According to the present invention, there is provided the following means:

(1) A dispersion of a water-insoluble colorant comprising:

a medium containing water;
fine particles of the water-insoluble colorant; and
a polymer compound or a surfactant that includes at least one kind of electron-withdrawing group or group of atoms represented by any one of formulae (I) to (IV) as its hydrophilic part:

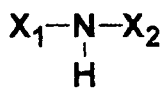
Formula (I)

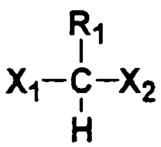
Formula (II)

$-B(OH)_2$
Formula (III)

$-SO_2M$
Formula (IV)

wherein at least one of $X_1$ and $X_2$ represents an electron-withdrawing linking group on the condition that when at least one of $X_1$ and $X_2$ is not the linking group, the at least one of $X_1$ and $X_2$ represents an electron-withdrawing substituent; $R_1$ represents a hydrogen atom or a substituent; and M represents a hydrogen atom or a metal atom.
(2) The dispersion as described in the above item (1), wherein $X_1$ and $X_2$ each are an electron-withdrawing linking group or an electron-withdrawing substituent whose $\sigma_m$-value in Hammett substituent constant is 0 or more.
(3) The dispersion as described in the above item (1) or (2), wherein $X_1$ and $X_2$ each are selected from the group consisting of -CO-, -SO-, $-SO_2-$, -CN, -NO, $-NO_2$, -OH, -PO-, a halogen atom, an aryl group, and a heterocyclic group.
(4) The dispersion as described in any one of the above items (1) to (3), wherein the group represented by formula (I) is a group of atoms represented by formula (V):

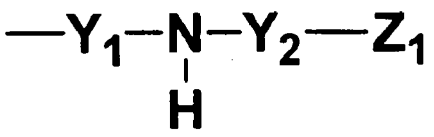

Formula (V)

wherein $Y_1$ and $Y_2$ each independently represent -CO- or -$SO_2$-; and $Z_1$ represents an alkyl group, a cycloalkyl group, an aryl group or a heterocyclic group.

(5) The dispersion as described in any one of the above items (1) to (4), wherein the polymer compound having the group of atoms represented by formula (I) as its hydrophilic part is a polymer compound having a repeating unit represented by formula (VI):

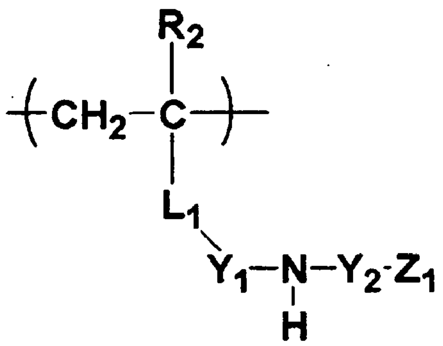

Formula (VI)

wherein $R_2$ represents a hydrogen atom or a substituent; $L_1$ represents a single bond or a divalent linking group; $Y_1$ and $Y_2$ each independently represent -CO- or -$SO_2$-; and $Z_1$ represents an alkyl group, a cycloalkyl group, an aryl group or a heterocyclic group.

(6) The dispersion as described in any one of the above items (1) to (5), wherein the polymer compound having the group of atoms represented by formula (I) as its hydrophilic part is a polymer compound having repeating units represented by formula (VII):

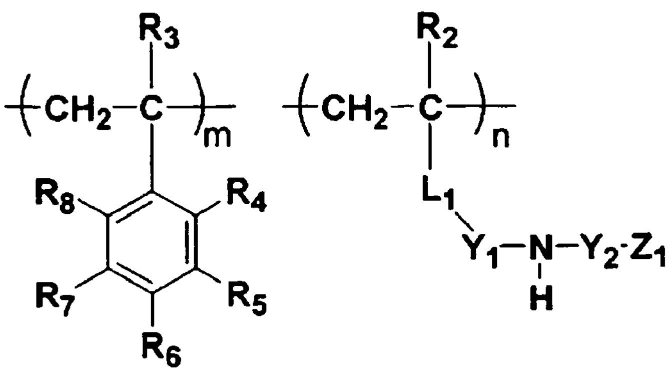

Formula (VII)

wherein $R_3$, $R_4$, $R_5$, $R_6$, $R_7$ and $R_8$ each independently represent a hydrogen atom or a substituent; $R_2$ represents a hydrogen atom or a substituent; $L_1$ represents a single bond or a divalent linking group; $Y_1$ and $Y_2$ each independently represent -CO-or -$SO_2$-; $Z_1$ represents an alkyl group, a cycloalkyl group, an aryl group or a heterocyclic group; and m and n each independently represents a copolymerization ratio of the repeating units.

(7) The dispersion as described in any one of the above items (1) to (5), wherein the polymer compound having the group of atoms represented by formula (I) as its hydrophilic part is a polymer compound having repeating units represented by any one of formula (VIII), formula (IX), formula (X) and formula (XI):

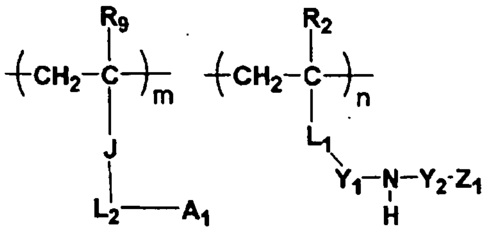

Formula (VIII)

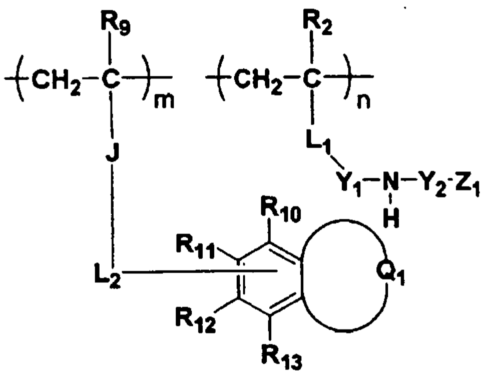

Formula (IX)

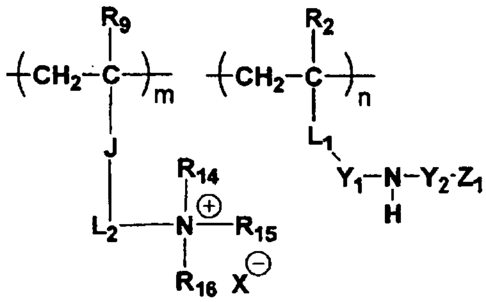

Formula (X)

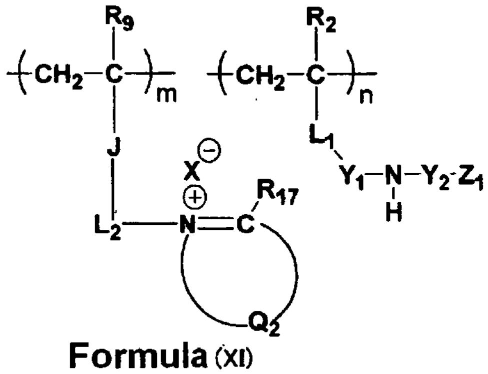

Formula (XI)

wherein, in formula (VIII), $R_9$ represents a hydrogen atom or a substituent; J represents -CO-, -COO-, -CONR$^{17}$-, -OCO- or a methylene group; $L_2$ represents a single bond or a divalent linking group; $A_1$ represents a heterocyclic group; $R_2$ represents a hydrogen atom or a substituent; $L_1$ represents a single bond or a divalent linking group; $Y_1$ and $Y_2$ each independently represent -CO- or -$SO_2$-; $Z_1$ represents an alkyl group, a cycloalkyl group, an aryl group or a heterocyclic group; and m and n each independently represents a copolymerization ratio of the repeating units;
wherein, in formula (IX), $R_9$ represents a hydrogen atom or a substituent; $R_{10}$, $R_{11}$, $R_{12}$ and $R_{13}$ each independently represent a single bond, a hydrogen atom or a substituent; when $R_{10}$ to $R_{13}$ each represent a substituent, they may bond to each other to a form ring; $Q_1$ represents a group of atoms necessary for forming, with the carbon atoms -C=C-, a ring; J represents -CO-, -COO-, -CONR$^{17}$-, -OCO- or a methylene group; $L_2$ represents a single bond or a divalent linking group; $R_2$ represents a hydrogen atom or a substituent; $L_1$ represents a single bond or a divalent linking group; $Y_1$ and $Y_2$ each independently represent -CO- or -$SO_2$-; $Z_1$ represents an alkyl group, a cycloalkyl group, an aryl group or a heterocyclic group; and m and n each independently represents a copolymerization ratio of the repeating units;
wherein, in formula (X), $R_9$ represents a hydrogen atom or a substituent; $R_{14}$, $R_{15}$ and $R_{16}$ each independently represents a substituted or unsubstituted alkyl group or a substituted or unsubstituted aryl group; $R_{14}$ to $R_{16}$ may bond each other to form a saturated or unsaturated ring; J represents -CO-, -COO-, -CONR$^{17}$-, -OCO- or a methylene group; $L_2$ represents a single bond or a divalent linking group; X is an anion group balancing with the cation electric charge on the nitrogen atom; $R_2$ represents a hydrogen atom or a substituent; $L_1$ represents a single bond or a divalent linking group; $Y_1$ and $Y_2$ each independently represent -CO- or -$SO_2$-; $Z_1$ represents an alkyl group, a cycloalkyl group, an aryl group or a heterocyclic group; and m and n each independently represents a copolymerization ratio of the repeating units; and
wherein, in formula (XI), $R_9$ represents a hydrogen atom or a substituent; $R_{17}$ represents a hydrogen atom or a substituent; $Q_2$ represents a group of atoms necessary for forming, with the carbon atom and the nitrogen atom -N=C($R_{17}$)-, a ring; J represents -CO-, -COO-, -CONR$^{17}$-, -OCO- or a methylene group; $L_2$ represents a single bond or a divalent linking group; $R_2$ represents a hydrogen atom or a substituent; $L_1$ represents a single bond or a divalent

linking group; $Y_1$ and $Y_2$ each independently represent -CO- or -$SO_2$-; $Z_1$ represents an alkyl group, a cycloalkyl group, an aryl group or a heterocyclic group; m and n each independently represents a copolymerization ratio of the repeating units; and X is an anion group balancing with the cation electric charge on the nitrogen atom.

(8) The dispersion as described in any one of the above items (1) to (7), wherein the average particle size of the fine particles of the water-insoluble colorant is 150 nm or less.

(9) The dispersion as described in any one of the above items (1) to (8), wherein the water-insoluble colorant is a pigment.

(10) The dispersion as described in any one of the above items (1) to (9),

wherein the fine particles show the same color as that shown by the water-insoluble colorant in the state of crystal, and wherein when the absorbance peak of the dispersion in a visible light region is set to 1, a light scattering intensity is 30,000 cps or less.

(11) A polymer dispersing agent for water-insoluble colorant, comprising repeating units represented by formula (VII):

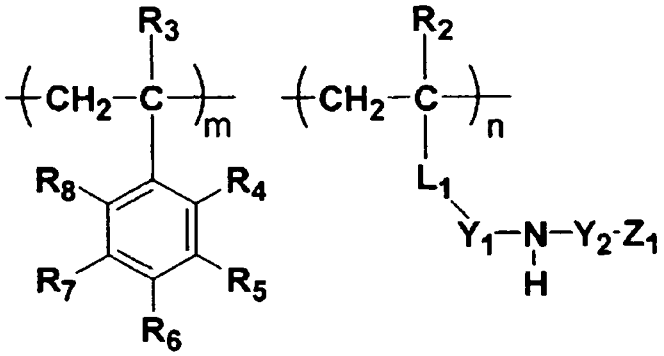

Formula (VII)

wherein $Y_1$ and $Y_2$ each independently represent -CO- or -$SO_2$-; $Z_1$ represents an alkyl group, a cycloalkyl group, an aryl group or a heterocyclic group; $R_2$ represents a hydrogen atom or a substituent; $L_1$ represents a single bond or a divalent linking group; $R_3$, $R_4$, $R_5$, $R_6$, $R_7$ and $R_8$ each independently represent a hydrogen atom or a substituent; and m and n each independently represents a copolymerization ratio of the repeating units.

(12) The polymer dispersing agent for water-insoluble colorant as described in the above item (11), wherein the repeating units represented by formula (VII) are repeating units represented by any one of formula (XII), formula (XIII), formula (XIV) and formula (XV):

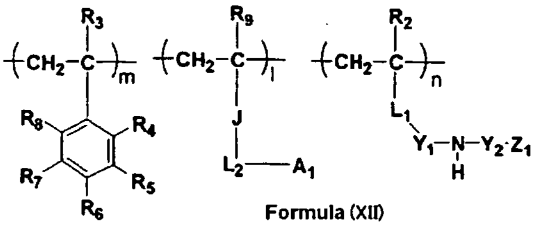

Formula (XII)

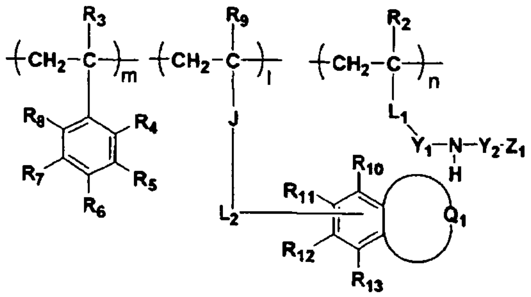

Formula (XIII)

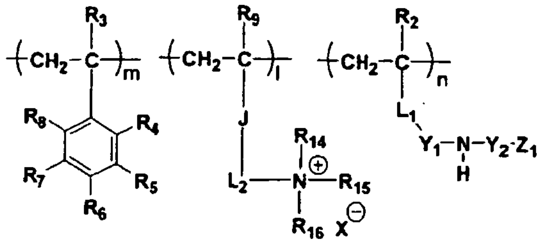

Formula (XIV)

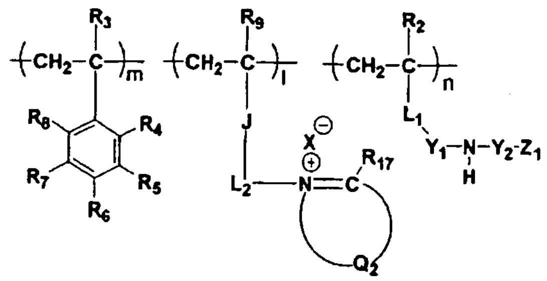

Formula (XV)

wherein, in formula (XII), 1, m and n each independently represents a copolymerization ratio of the repeating units; $R_9$ represents a hydrogen atom or a substituent; $L_2$ represents a single bond or a divalent linking group; J represents -CO-, -COO-, $-CONR^{17}-$, -OCO- or a methylene group; $A_1$ represents a heterocyclic group; and $R_2$ to $R_8$, $L_1$, $Y_1$, $Y_2$ and $Z_1$ have the same meanings as those in formula (VII), respectively;
wherein, in formula (XIII), 1, m and n each independently represents a copolymerization ratio of the repeating units; $R_9$ represents a hydrogen atom or a substituent; $R_{10}$, $R_{11}$, $R_{12}$ and $R_{13}$ each independently represent a single bond, a hydrogen atom or a substituent; when $R_{10}$ to $R_{13}$ each represent a substituent, they may bond each other to form a ring; $Q_1$ represents a group of atoms necessary for forming, with the carbon atoms -C=C-, a ring; J represents -CO-, -COO-, $-CONR^{17}-$, -OCO- or a methylene group; and $R_2$ to $R_8$, $L_1$, $Y_1$, $Y_2$ and $Z_1$ have the same meanings as those in formula (VII), respectively;
wherein, in formula (XIV), 1, m and n each independently represents a copolymerization ratio of the repeating units; $R_9$ represents a hydrogen atom or a substituent; $R_{14}$, $R_{15}$ and $R_{16}$ each independently represents a substituted or unsubstituted alkyl group or a substituted or unsubstituted aryl group; $R_{14}$ to $R_{16}$ may bond each other to form a saturated or unsaturated ring; J represents -CO-, -COO-, $-CONR^{17}-$, -OCO- or a methylene group; $L_2$ represents a single bond or a divalent linking group; X is an anion group balancing with the cation electric charge on the nitrogen atom; and $R_2$ to $R_8$, $L_1$, $Y_1$, $Y_2$ and $Z_1$ have the same meanings as those in formula (VII), respectively; and
wherein, in formula (XV), 1, m and n each independently represents a copolymerization ratio of the repeating units; $R_9$ represents a hydrogen atom or a substituent; $R_{17}$ represents a hydrogen atom or a substituent; $Q_2$ represents a group of atoms necessary for forming, with the carbon atom and the nitrogen atom $-N=C(R_{17})-$, a ring; J represents -CO-, -COO-, $-CONR^{17}-$, -OCO- or a methylene group; $L_2$ represents a single bond or a divalent linking group; $R_2$ to $R_8$, $L_1$, $Y_1$, $Y_2$ and $Z_1$ have the same meanings as those in formula (VII), respectively; and X is an anion group balancing with the cation electric charge on the nitrogen atom.
(13) Fine particles of a water-insoluble colorant, comprising:

the water-insoluble colorant; and
a polymer compound or a surfactant that includes at least one kind of electron-withdrawing group or group of atoms represented by any one of formulae (I) to (IV) as its hydrophilic part:

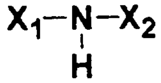

Formula (I)

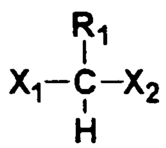

Formula (II)

$-B(OH)_2$

Formula (III)

$-SO_2M$

Formula (IV)

wherein at least one of $X_1$ and $X_2$ represents an electron-withdrawing linking group on the condition that when at least one of $X_1$ and $X_2$ is not the linking group, the at least one of $X_1$ and $X_2$ represents an electron-withdrawing substituent; $R_1$ represents a hydrogen atom or a substituent; and M represents a hydrogen atom or a metal atom.
(14) A method of producing a substance containing a water-insoluble colorant, comprising:

dissolving an water-insoluble colorant into an aprotic water-soluble organic solvent in the presence of alkali; and making a solution of the water-insoluble colorant and an aqueous medium to contact each other, to give a dispersion in which fine particles of the water-insoluble colorant are generated;

wherein a polymer compound or a surfactant that includes at least one kind of electron-withdrawing group or group of atoms represented by any one of formulae (I) to (IV) as its hydrophilic part is contained into the solution of the water-insoluble colorant and/or the aqueous medium, to obtain the dispersion containing the fine particles of the water-insoluble colorant, and the polymer compound or surfactant:

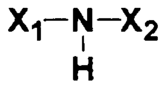

Formula (I)

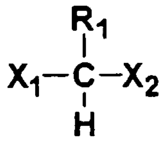

Formula (II)

$-B(OH)_2$

Formula (III)

$-SO_2M$

Formula (IV)

wherein at least one of $X_1$ and $X_2$ represents an electron-withdrawing linking group on the condition that when at least one of $X_1$ and $X_2$ is not the linking group, the at least one of $X_1$ and $X_2$ represents an electron-withdrawing substituent; $R_1$ represents a hydrogen atom or a substituent; and M represents a hydrogen atom or a metal atom.

(15) The method of producing a substance containing a water-insoluble colorant as described in the above item (14), wherein the polymer compound or the surfactant that includes at least one kind of group of atoms represented by any one of formulae (I) to (IV) as its hydrophilic part is contained into the aqueous medium.

(16) The method of producing a substance containing a water-insoluble colorant as described in the above item (14) or (15), wherein the solubility of the aprotic water-soluble organic solvent with respect to water is 5 mass% or more.

(17) The method of producing a substance containing a water-insoluble colorant as described in any one of the above items (14) to (16), wherein the alkali is at least one kind of alkali selected from the group consisting of hydroxides of alkaline metal, alkoxides of alkaline metal, hydroxides of alkaline earth metal, alkoxides of alkaline earth metal and organic strong bases.

(18) The method of producing a substance containing a water-insoluble colorant as described in any one of the above items (14) to (17), further comprising the steps of:

forming flocculated aggregates of the fine particles of the water-insoluble colorant included in the dispersion; and separating the aggregates of the fine particles of the water-insoluble colorant from the dispersion, to endow a re-dispersion property into water to the fine particles composing the aggregates.

(19) The method of producing a substance containing a water-insoluble colorant as described in the above item (18), wherein the aggregates are formed by adding an acid, and wherein the re-dispersion property is endowed to the aggregates by adding an alkali.

(20) The method of producing a substance containing a water-insoluble colorant as described in any one of the above items (14) to (19), which further comprises heating the dispersion or the aggregates.

(21) The method of producing a substance containing a water-insoluble colorant as described in any one of the above items (18) to (20), further comprising the steps of; dissociating the aggregation in the aggregates; and re-dispersing them into a medium containing water.

(22) A dispersion of a water-insoluble colorant obtained in accordance with the method as described in any one of the above items (14) to (21).

(23) The dispersion of a water-insoluble colorant as described in any one of the above items (1) to (10) and (22), wherein the water-insoluble colorant is an organic pigment selected from the group consisting of quinacridone organic pigments, diketopyrrolopyrrole organic pigments, perylene organic pigments, mono azo yellow organic pigments, condensed azo organic pigments, quinophthalone organic pigments, benz-imidazolone organic pigments, disazo yellow pigments and phthalocyanine pigments.

(24) A recording liquid produced employing the dispersion as described in any one of the above items (1) to (10), (22) and (23), wherein the water-insoluble colorant is contained in an amount of 0.1 to 20% by mass with respect to a total mass of the recording liquid.

(25) The recording liquid as described in the above item (24), wherein the recording liquid is an inkjet recording liquid.

(26) An ink set using the inkjet recording liquid as described in the above item (25).

(27) A printed article having an image recorded thereon by a means that can provide, with a medium, the recording liquid as described in the above item (24) or (25), or the recording liquid by using the ink set as described in the above item (26), wherein the means has a function to adjust an applied amount or concentration of the recording liquid, thereby light-to-dark contrast of the printed article is adjusted.

(28) An image-forming method, which comprises recording an image by providing, with a medium, the recording liquid as described in the above item (24) or (25), or the recording liquid by using the ink set as described in the above item (26).

(29) An image-forming apparatus having a means that can record an image by providing, with a medium, the recording liquid as described in the above item (24) or (25), or the recording liquid by using the ink set as described in the above item (26).

Next, the present invention will be explained in detail, but it should be noted that the present invention is not limited to the following specific examples.

The dispersion of a water-insoluble colorant of the present invention contains fine particles of the water-insoluble colorant, and a polymer compound or a surfactant (low molecular compound) that includes at least one kind of electron-withdrawing group or group of atoms represented by any one of formulae (I) to (IV) as its hydrophilic part (moiety).

The formula (I) will be described in detail below. In formula (I), at least one of $X_1$ and $X_2$ represents an electron-withdrawing linking group on the condition that when at least one of $X_1$ and $X_2$ is not the linking group, the at least one of $X_1$ and $X_2$ represents an electron-withdrawing substituent. In the present specification, a property of a substituent having an effect of attenuating the electron density is defined as "electron-withdrawing property", while a property in a case of having an effect of increasing the electron density is defined as "electron-donative property". The substituents each having such an effect are called as "electron-withdrawing group" and "electron donative group", respectively. As an indicator about such an effect of the substituent, Hammett rule is known as an empirical rule to quantitatively evaluate and predict the effect on the basis of acid dissociation constant of a para- or meta-substituted benzoic acid (see Ryoji Noyori, Masakatsu Shibazaki, Keisuke Suzuki, Kouhei Tamao, Kazuhiro Nakasuji, Koichi Narasaka editing; graduate school lectures, Organic Chemistry I, pp 174-179; Hammett, L. P. "The Effect of Structure upon the Reactions of Organic Compounds. Benzene Derivatives", J. Am. Chem. Soc. 1937, vol. 59, p.96-103).

When $\sigma_m$-value in Hammett substituent constant of a substituent is 0 or more, the substituent is nominated as a typical electron-withdrawing substituent, and is described in detail in, for example, C. Hansch, A. Leo, and R. W. Taft, "A Survey of Hammett Substituent Constants and Resonance and Field Parameters", Chem. Rev. 1991, 91, pp. 165-195.

Examples of $X_1$ and $X_2$ include a group selected from the group consisting of -CO-, -SO-, $-SO_2-$, -CN, -NO, $-NO_2$, -OH, -PO-, a halogen atom, an aryl group, and a heterocyclic group.

When $X_1$ and $X_2$ each represents an electron-withdrawing linking group, they each are preferably -CO-, -SO-, $-SO_2-$, -PO-, an arylene group (e.g., an arylene group having preferably 6 to 30 carbon atoms, more preferably 6 to 15 carbon atoms; such as phenylene, cumenylene, mesitylene, tolylene, and xylylene) or a heterocyclic linking group; more preferably -CO-, $-SO_2-$, or an arylene group; and particularly preferably -CO- or $-SO_2-$. These may be further substituted by at least any one substituent selected from the "substituent group A" below.

When $X_1$ and $X_2$ each represents the electron-withdrawing substituent, examples of the electron-withdrawing substituent include an alkenyl group, an alkynyl group, an aryl group, an alkoxy group, an aryloxy group, an acyl group, an aryloxycarbonyl group, an acyloxy group, a sulfamoyl group, a carbamoyl group, a heterocyclic-thio group, a sulfonyl group, a sulfinyl group, an ureide group, a hydroxy group, a halogen atom, a cyano group, a sulfo group, a carboxyl group, an oxo group, a nitro group, a hydroxamic acid group, a sulfino group, a hydrazino group, an imino group, and a heterocyclic group. The preferred range is the same as the preferred range described about the "substituent group A" described below. These substituents may be further substituted by at least any one substituent selected from the "substituent group A" below.

Examples of the substituent group A include an alkyl group (preferably an alkyl group having 1 to 30 carbon atoms, more preferably 1 to 20 carbon atoms, and most preferably 1 to 10 carbon atoms, e.g., methyl, ethyl, isopropyl, *tert*-butyl, *n*-octyl, *n*-decyl, *n*-hexadecyl), a cycloalkyl group (preferably a cycloalkyl group having 3 to 30 carbon atoms, more preferably 1 to 20 carbon atoms, and most preferably 3 to 10 carbon atoms, e.g., cyclopropyl, cyclopentyl, cyclohexyl), an alkenyl group (preferably an alkenyl group having 2 to 30 carbon atoms, more preferably 2 to 20 carbon atoms, and most preferably 2 to 10 carbon atoms, e.g., vinyl, allyl, 2-butenyl, 3-pentenyl), an alkynyl group (preferably an alkynyl group having 2 to 30 carbon atoms, more preferably 2 to 20 carbon atoms, and most preferably 2 to 10 carbon atoms, e.g., propargyl, 3-pentynyl), an aryl group (preferably an aryl group having 6 to 30 carbon atoms, more preferably 6 to 20 carbon atoms, and most preferably 6 to 12 carbon atoms, e.g., phenyl, p-methylphenyl, naphthyl, anthranyl), an amino group (preferably an amino group having 0 to 30 carbon atoms, more preferably 0 to 20 carbon atoms, most preferably 0 to 10 carbon atoms, e.g., amino, methylamino, dimethylamino, diethylamino, dibenzylamino, diphenylamino, ditolylamino), an alkoxy group (preferably an alkoxy group having 1 to 30 carbon atoms, more preferably 1 to 20 carbon atoms, most preferably 1 to 10 carbon atoms, e.g., methoxy, ethoxy, butoxy, 2-ethylhexyloxy), an aryloxy group (preferably an aryloxy group having 6 to 30 carbon atoms, more preferably 6 to 20 carbon atoms, most preferably 6 to 12 carbon atoms, e.g., phenyloxy, 1-naphthyloxy, 2-naphthyloxy), a heterocyclicoxy group (preferably a heterocyclicoxy group having 1 to 30 carbon atoms, more preferably 1 to 20 carbon atoms, most preferably 1 to 12 carbon atoms, e.g., pyridyloxy, pyrazyloxy, pyrimidyloxy, quinolyloxy), an acyl group (preferably an acyl group having 1 to 30 carbon atoms, more

preferably 1 to 20 carbon atoms, most preferably 1 to 12 carbon atoms, e.g., acetyl, benzoyl, formyl, pivaloyl), an alkoxycarbonyl group (preferably an alkoxycarbonyl group having 2 to 30 carbon atoms, more preferably 2 to 20 carbon atoms, most preferably 2 to 12 carbon atoms, e.g., methoxycarbonyl, ethoxycarbonyl), an aryloxycarbonyl group (preferably an aryloxycarbonyl group having 7 to 30 carbon atoms, more preferably 7 to 20 carbon atoms, most preferably 7 to 12 carbon atoms, e.g., phenyloxycarbonyl), an acyloxy group (preferably an acyloxy group having 2 to 30 carbon atoms, more preferably 2 to 20 carbon atoms, and most preferably 2 to 10 carbon atoms, e.g., acetoxy, benzoyloxy), an acylamino group (preferably an acylamino group having 2 to 30 carbon atoms, more preferably 2 to 20 carbon atoms, and most preferably 2 to 10 carbon atoms, e.g., acetylamino, benzoylamino), an alkoxycarbonylamino group (preferably an alkoxycarbonylamino group having 2 to 30 carbon atoms, more preferably 2 to 20 carbon atoms, and most preferably 2 to 12 carbon atoms, e.g., methoxycarbonylamino), an aryloxycarbonylamino group (preferably an aryloxycarbonylamino group having 7 to 30 carbon atoms, more preferably 7 to 20 carbon atoms, and most preferably 7 to 12 carbon atoms, e.g., phenyloxycarbonylamino), a sulfonylamino group (preferably a sulfonylamino group having 1 to 30 carbon atoms, more preferably 1 to 20 carbon atoms, and most preferably 1 to 12 carbon atoms, e.g., methanesulfonylamino, benzenesulfonylamino), a sulfamoyl group (preferably a sulfamoyl group having 0 to 30 carbon atoms, more preferably 0 to 20 carbon atoms, and most preferably 0 to 12 carbon atoms, e.g., sulfamoyl, methylsulfamoyl, dimethylsulfamoyl, phenylsulfamoyl), a carbamoyl group (preferably a carbamoyl group having 1 to 30 carbon atoms, more preferably 1 to 20 carbon atoms, and most preferably 1 to 12 carbon atoms, e.g., carbamoyl, methylcarbamoyl, diethylcarbamoyl, phenylcarbamoyl), an alkylthio group (preferably an alkylthio group having 1 to 30 carbon atoms, more preferably 1 to 20 carbon atoms, and most preferably 1 to 12 carbon atoms, e.g., methylthio, ethylthio), an arylthio group (preferably an arylthio group having 6 to 30 carbon atoms, more preferably 6 to 20 carbon atoms, and most preferably 6 to 12 carbon atoms, e.g., phenylthio), a heterocyclicthio group (preferably a heterocyclicthio group having 1 to 30 carbon atoms, more preferably 1 to 20 carbon atoms, most preferably 1 to 12 carbon atoms, e.g., pyridylthio, 2-benzimidazolylthio, 2-benzoxazolylthio, 2-benzothiazolylthio), a sulfonyl group (preferably a sulfonyl group having 1 to 30 carbon atoms, more preferably 1 to 20 carbon atoms, and most preferably 1 to 12 carbon atoms, e.g., mesyl, tosyl), a sulfinyl group (preferably a sulfinyl group having 1 to 30 carbon atoms, more preferably 1 to 20 carbon atoms, and most preferably 1 to 12 carbon atoms, e.g., methanesulfinyl, benzenesulfinyl), a ureido group (preferably a ureido group having 1 to 30 carbon atoms, more preferably 1 to 20 carbon atoms, and most preferably 1 to 12 carbon atoms, e.g., ureido, methylureido, phenylureido), a phosphoric acid amido group (preferably a phosphoric acid amido group having 1 to 30 carbon atoms, more preferably 1 to 20 carbon atoms, and most preferably 1 to 12 carbon atoms, e.g., diethylphosphoric acid amido, phenylphosphoric acid amido), a hydroxyl group, a mercapto group, a halogen atom (e.g., a fluorine atom, a chlorine atom, a bromine atom, an iodine atom; more preferably a fluorine atom), a cyano group, a sulfo group, a carboxyl group, an oxo group, a nitro group, a hydroxamic acid group, a sulfino group, a hydrazino group, an imino group, a heterocyclic group (preferably a heterocyclic group having 1 to 30 carbon atoms, and more preferably 1 to 12 carbon atoms; as hetero atoms, e.g., nitrogen, oxygen, sulfur; and specifically, e.g., imidazolyl, pyridyl, quinolyl, furyl, thienyl, piperidyl, morpholino, benzoxazolyl, benzimidazolyl, benzothiazolyl, carbazolyl, azepinyl), a silyl group (preferably a silyl group having 3 to 40 carbon atoms, more preferably 3 to 30 carbon atoms, most preferably 3 to 24 carbon atoms, e.g., trimethylsilyl, triphenylsilyl), and a silyloxy group (preferably a silyloxy group having 3 to 40 carbon atoms, more preferably 3 to 30 carbon atoms, most preferably 3 to 24 carbon atoms, e.g., trimethylsilyloxy, triphenylsilyloxy). These substituents may be further substituted with any of the substituent selected from the substituent group A.

The formula (II) is described below. In formula (II), $X_1$ and $X_2$ have the same meanings as $X_1$ and $X_2$ in formula (I), respectively. $R_1$ represents a hydrogen atom or a substituent, and examples of the substituent are selected from the above mentioned substituent group A.

In formula (II), the preferred range of $X_1$ and $X_2$ are the same as the preferred range described about $X_1$ and $X_2$ in formula (I). $R_1$ is preferably a hydrogen atom, an aryl group, an acyl group, an aryloxycarbonyl group, a sulfonyl group, a sulfinyl group, a hydroxyl group, a halogen atom, a cyano group, a sulfo group, a carboxyl group, a nitro group, a hydroxamic acid group, or a heterocyclic group; more preferably a hydrogen atom, an aryl group, an acyl group, a sulfonyl group, a hydroxyl group, a halogen atom, a cyano group, a sulfo group, a carboxyl group, a hydroxamic acid group, or a heterocyclic group; and further preferably a hydrogen atom, a halogen atom, or a cyano group.

The group of atoms represented by formula (I) is preferably the group of atoms represented by formula (V). In formula (V), $Y_1$ and $Y_2$ each independently represent -CO- or $-SO_2-$; and $Z_1$ represents an alkyl group, a cycloalkyl group, an aryl group or a heterocyclic group. When $Z_1$ is the alkyl group, $Z_1$ may be a substituted alkyl group substituted by a halogen atom, and in particular, it may be a fluoroalkyl group substituted by a fluorine atom. The alkyl group is preferably an alkyl group having 1 to 30 carbon atoms, more preferably 1 to 20 carbon atoms, and most preferably 1 to 10 carbon atoms; and preferred examples thereof include methyl, ethyl, isopropyl, *tert*-butyl, *n*-octyl, *n*-decyl, and *n*-hexadecyl. The cycloalkyl group is preferably a cycloalkyl group having 3 to 30 carbon atoms, more preferably 3 to 20 carbon atoms, and most preferably 3 to 10 carbon atoms; and preferred examples thereof include cyclopropyl, cyclopentyl and cyclohexyl. The aryl group is preferably an aryl group having 6 to 30 carbon atoms, more preferably 6 to 20 carbon atoms, and most preferably 6 to 12 carbon atoms; and preferred examples thereof include phenyl, p-methylphenyl,

naphthyl, and anthranyl. The heterocyclic group is preferably a heterocyclic group having 1 to 30 carbon atoms, and more preferably 1 to 12 carbon atoms, and, as hetero atoms, nitrogen, oxygen, sulfur; and preferred examples thereof include imidazolyl, pyridyl, quinolyl, furyl, thienyl, piperidyl, morpholino, benzoxazolyl, benzimidazolyl, benzothiazolyl, carbazolyl, and azepinyl.

It is preferable that the polymer compound having the group of atoms represented by formula (V) as its hydrophilic part is a polymer compound having a repeating unit represented by formula (VI) including the group of atoms represented by formula (V). The term "hydrophilic part" in the present specification is used as the general term of a polar group having affinity with water, a group of atoms including this group and a repeating unit including these groups. In formula (VI), $R_2$ represents a hydrogen atom or a substituent. The substituent exhibits the same meaning as the substituent group being explained about the above substituent group A. Although a content (polymerization ratio) of the repeating unit represented by formula (VI) in the polymer compound is not particularly limited, it is preferable to be from 0.05 to 0.8.

$L_1$ represents a single bond or a divalent linking group. Examples of the divalent linking group represented by $L_1$ in formula (VI) a straight-chain, branched or cyclic alkylene group (preferably an alkylene group having 1 to 30 carbon atoms, more preferably 1 to 12 carbon atoms, and most preferably 1 to 4 carbon atoms, e.g., methylene, ethylene, propylene, butylene, pentylene, hexylene, octylene and decylene), an aralkylene group (preferably an aralkylene group having 7 to 30 carbon atoms, and more preferably 7 to 13 carbon atoms, e.g., benzylidene and cinnamylidene), and an arylene group (preferably an arylene group having 6 to 30 carbon atoms, and more preferably 6 to 15 carbon atoms, e.g., phenylene, cumenylene, mesitylene, tolylene and xylylene). These substituents may be further substituted with a substituent.

$Y_1$, $Y_2$ and $Z_1$ in formula (VI) have the same meanings as $Y_1$, $Y_2$ and $Z_1$ in formula (V). When the polymer compound is expressed by a constitutional formula with the repeating unit in the present invention, the terminal end of the polymer compound is not particularly limited, and it may be, for example, either a hydrogen atom or a polymerization terminator residue group.

It is preferable that the polymer compound having the repeating unit represented by formula (VI) is a polymer compound having repeating units represented by formula (VII), formula (VIII), formula (IX), formula (X) or formula (XI).

In formula (VII), $R_3$ to $R_8$ each independently represents a hydrogen atom or a substituent. It is preferable that the substituent is selected from the foregoing substituent group A, and it may bond each other to form a ring.

$R_2$ and $L_1$ in formulae (VII), (VIII), (IX), (X) and (XI) have the same meanings as $R_2$ and $L_1$ in formula (VI). $Y_1$, $Y_2$ and $Z_1$ in formulae (VII), (VIII), (IX), (X) and (XI) have the same meanings as $Y_1$, $Y_2$ and $Z_1$ in formula (V). m and n each represents a copolymerization ratio of the repeating units, and when there is no other copolymerization component, (m + n) = 1. For example, it is preferable for m to be from 0.2 to 0.95, though not specifically limited thereto.

Next, among the repeating units represented by formula (VII), preferable repeating units are described below. In formula (VII), $R_3$ to $R_8$ each are preferably a hydrogen atom, an alkyl group, a cycloalkyl group, an alkenyl group, an alkynyl group, an aryl group, an amino group, an alkoxy group, an aryloxy group, a heterocyclic oxy group, an acyl group, an alkoxycarbonyl group, an aryloxycarbonyl group, an acyloxy group, an acylamino group, an alkoxycarbonylamino group, an aryloxycarbonylamino group, a sulfonylamino group, a sulfamoyl group, a carbamoyl group, an alkylthio group, an arylthio group, a heterocyclic thio group, a sulfonyl group, a sulfinyl group, a ureido group, a phosphoric acid amido group, a hydroxyl group, a mercapto group, a halogen atom, a cyano group, a sulfo group, a carboxyl group, an oxo group, a nitro group, a hydroxamic acid group, a sulfino group, a hydrazino group, an imino group, a heterocyclic group, or a silyl group; more preferably a hydrogen atom, an alkyl group, an aryl group, an alkoxy group, an aryloxy group, a heterocyclic group, an acyl group, an alkoxycarbonyl group, an aryloxycarbonyl group, an acyloxy group, an acylamino group, a sulfonylamino group, a sulfamoyl group, a carbamoyl group, a heterocyclic thio group, a sulfonyl group, a ureido group, a halogen atom, a cyano group, a sulfo group, a carboxyl group, a nitro group, a hydrazino group, or a heterocyclic group; and further preferably a hydrogen atom, an alkyl group, an aryl group, an alkoxy group, an aryloxy group, an acyl group, an alkoxycarbonyl group, an aryloxycarbonyl group, an acyloxy group, an acylamino group, a sulfonylamino group, a heterocyclic thio group, a sulfonyl group, a ureido group, a halogen atom, a cyano group, or a carboxyl group.

$L_1$ is preferably a single bond, an alkylene group or arylene-group; more preferably a single bond or an alkylene group; and further preferably a single bond. $Y_1$ is preferably -CO-. $Y_2$ is preferably $-SO_2-$. $R_2$ is preferably a hydrogen atom, an alkyl group, a cycloalkyl group or an aryl group; and more preferably a hydrogen atom or an alkyl group.

In formula (VII), the group represented by $-Y_1-NH-Y_2-Z_1$, that is the group of atoms represented by formula (V), is preferably $-CO-NH-SO_2-Z_1$ or $-SO_2-NH-CO-Z_1$.

The polymer dispersing agent comprising the repeating units represented by formula (VII) is preferably a polymer dispersing agent comprising repeating units represented by any one of formula (XII), formula (XIII), formula (XIV) and formula (XV).

In formula (XII), I, m and n each independently represents a copolymerization ratio of the repeating units; $R_9$ represents a hydrogen atom or a substituent; $L_2$ represents a single bond or a divalent linking group; J represents -CO-, -COO-, $-CONR^{17}-$, -OCO- or a methylene group; $A_1$ represents a heterocyclic group; and $R_2$ to $R_8$, $L_1$, $Y_1$, $Y_2$ and $Z_1$ have the same meanings as those in formula (VII), respectively.

In formula (XIII), 1, m and n each independently represents a copolymerization ratio of the repeating units; $R_{10}$, $R_{11}$, $R_{12}$ and $R_{13}$ each independently represent a single bond, a hydrogen atom or a substituent; when $R_{10}$ to $R_{13}$ each represent a substituent, they may bond each other to form a ring; $Q_1$ represents a group of atoms necessary for forming, with the carbon atoms -C=C-, a ring; J represents -CO-, -COO-, -CONR$^{17}$-, -OCO- or a methylene group; and $R_2$, $L_1$, $Y_1$, $Y_2$ and $Z_1$ have the same meanings as those in formula (VII), respectively.

In formula (XIV), 1, m and n each independently represents a copolymerization ratio of the repeating units; $R_{14}$, $R_{15}$ and $R_{16}$ each independently represents a substituted or unsubstituted alkyl group or a substituted or unsubstituted aryl group; $R_{14}$ to $R_{16}$ may bond each other to form a saturated or unsaturated ring; J represents -CO-, -COO-, -CONR$^{17}$-, -OCO- or a methylene group; $L_2$ represents a single bond or a divalent linking group; X is an anion group balancing with the cation electric charge on the nitrogen atom; and $R_2$, $L_1$, $Y_1$, $Y_2$ and $Z_1$ have the same meanings as those in formula (VII), respectively.

In formula (XV), l, m and n each independently represents a copolymerization ratio of the repeating units; $R_{17}$ represents a hydrogen atom or a substituent; $Q_2$ represents a group of atoms necessary for forming, with the carbon atom and the nitrogen atom -N=C($R_{17}$)-, a ring; J represents -CO-, -COO-, -CONR$^{17}$-, -OCO- or a methylene group; $L_2$ represents a single bond or a divalent linking group; $R_2$, $L_1$, $Y_1$, $Y_2$ and $Z_1$ have the same meanings as those in formula (VII), respectively; and X is an anion group balancing with the cation electric charge on the nitrogen atom.

Next, an explanation will be described about a preferred range of formula (VIII). $R_9$ represents a hydrogen atom or a substituent, the substituent represents the group described regarding the foregoing substituent group A; it is preferably a hydrogen atom, an alkyl group or an aryl group, and more preferably the hydrogen atom or the alkyl group.

J represents -CO-, -COO-, -CONR$^{17}$-, -OCO- or a methylene group. J is preferably -CO- or -CONR$^{17}$-. $R^{17}$ represents a hydrogen atom, an alkyl group, an aryl group or an aralkyl group; it is preferably the hydrogen atom, the alkyl group, or the aryl group; and the preferred range has the same meaning as the preferred range of the alkyl group and the aryl group described about the substituent A.

$A_1$ represents a heterocyclic group; the heterocyclic group has the same meaning as the heterocyclic group described regarding the foregoing substituent group A; and the preferable ranges thereof are also the same.

$L_2$ represents a single bond or a divalent linking group. Examples of the divalent linking group represented by $L_2$ in formula (VIII) include a straight-chain, branched or cyclic alkylene group (preferably an alkylene group having 1 to 30 carbon atoms, more preferably 1 to 12 carbon atoms, and most preferably 1 to 4 carbon atoms, e.g., methylene, ethylene, propylene, butylene, pentylene, hexylene, octylene and decylene), an aralkylene group (preferably an aralkylene group having 7 to 30 carbon atoms, and more preferably 7 to 13 carbon atoms, e.g., benzylidene and cinnamylidene), and an arylene group (preferably an arylene group having 6 to 30 carbon atoms, and more preferably 6 to 15 carbon atoms, e.g., phenylene, cumenylene, mesitylene, tolylene and xylylene). These substituents may be further substituted with a substituent. It is also preferable that the divalent linking group has an ether linkage in its molecule.

$L_2$ is preferably a single bond, an alkylene group or arylene group; more preferably a single bond or an alkylene group; and further preferably a single bond:

$R_2$, $L_1$, m, n, $Y_1$, $Y_2$ and $Z_1$ in formula (VIII) have the same meanings as $R_2$, $L_1$, m, n, $Y_1$, $Y_2$ and $Z_1$ in formula (VII), respectively, and the preferable ranges thereof are also the same.

Next, among the repeating units represented by formula (IX), preferable repeating units are described below. In formula (IX), $R_9$, J and $L_2$ have the same meanings as $R_9$, J and $L_2$ in formula (VIII), respectively, and the preferable ranges thereof are also the same.

$R_{10}$, $R_{11}$, $R_{12}$ and $R_{13}$ each independently represent a single bond, a hydrogen atom or a substituent. $R_{10}$, $R_{11}$, $R_{12}$ and $R_{13}$ each are preferably a single bond, a hydrogen atom, an alkyl group, a cycloalkyl group, an alkenyl group, an alkynyl group, an aryl group, an amino group, an alkoxy group, an aryloxy group, a heterocyclic oxy group, an acyl group, an alkoxycarbonyl group, an aryloxycarbonyl group, an acyloxy group, an acylamino group, an alkoxycarbonylamino group, an aryloxycarbonylamino group, a sulfonylamino group, a sulfamoyl group, a carbamoyl group, an alkylthio group, an arylthio group, a heterocyclic thio group, a sulfonyl group, a sulfinyl group, a ureido group, a phosphoric acid amido group, a hydroxyl group, a mercapto group, a halogen atom, a cyano group, a sulfo group, a carboxyl group, an oxo group, a nitro group, a hydroxamic acid group, a sulfino group, a hydrazino group, an imino group, a heterocyclic group or a silyl group; more preferably a single bond, a hydrogen atom, an alkyl group, an aryl group, an alkoxy group, an aryloxy group, a heterocyclic oxy group, an acyl group, an alkoxycarbonyl group, an aryloxycarbonyl group, an acyloxy group, an acylamino group, a sulfonylamino group, a sulfamoyl group, a carbamoyl group, a heterocyclic thio group, a sulfonyl group, a ureido group, a halogen atom, a cyano group, a sulfo group, a carboxyl group, a nitro group, a hydrazino group or a heterocyclic group; and further preferably a single bond, a hydrogen atom, an alkyl group, an aryl group, an alkoxy group, an aryloxy group, an acyl group, an alkoxycarbonyl group, an aryloxycarbonyl group, an acyloxy group, an acylamino group, a sulfonylamino group, a heterocyclic thio group, a sulfonyl group, a ureido group, a halogen atom, a cyano group or a carboxyl group. Among $R_{10}$ to $R_{13}$, at least one of $R_{10}$ to $R_{13}$ is preferably a single bond. When $R_{10}$ to $R_{13}$ each represent a substituent, they may bond

each other to form a ring.

$Q_1$ represents a group of atoms necessary for forming, with the carbon atoms, a ring. The atoms for constituting a ring are preferably carbon atoms, nitrogen atoms, oxygen atoms, silicon atoms, phosphor atoms or sulfur atoms. Preferred atoms are the carbon atoms, the nitrogen atoms, the oxygen atoms or the sulfur atoms; further preferred atoms are the carbon atoms, the nitrogen atoms or the oxygen atoms; and more preferred atoms are the carbon atoms or the nitrogen atoms. $Q_1$ which is composed of these atoms may be saturated or unsaturated, and when $Q_1$ is possibly substituted, it may be substituted by a substituent. The substituent has the same meaning as the group which was explained about the above mentioned A.

$R_2$, $L_1$, m, n, $Y_1$, $Y_2$ and $Z_1$ in formula (IX) have the same meanings as $R_2$, $L_1$, m, n, $Y_1$, $Y_2$ and $Z_1$ in formula (VII), respectively, and the preferable ranges thereof are also the same.

Next, among the repeating units represented by formula (X), preferable repeating units are described below. $R_{14}$, $R_{15}$ and $R_{16}$ each independently represent a substituted or unsubstituted alkyl or aryl group. $R_{14}$, $R_{15}$ and $R_{16}$ each are preferably an alkyl group. When $R_{14}$ to $R_{16}$ each represent a substituent, they may bond to each other to form a saturated or unsaturated ring.

X is an anion group balancing with the cationic electric charge on the nitrogen atom, and is preferably selected from the group consisting of $F^-$, $Cl^-$, $Br^-$, $I^-$, $BF_4^-$, $PF_6^-$, $SbF_6^-$, carboxylate anion (for example, acetate anion, benzoic acid anion), and sulfonate anion (for example, methanesulfonate anion, p-toluenesulfonate anion). It is further preferably $F^-$, $Cl^-$, $Br^-$, $I^-$, $BF_4^-$, $PF_6^-$ or $SbF_6^-$; and more preferably $Cl^-$, $Br^-$, $BF_4^-$, $PF_6^-$, $SbF_6^-$.

$R_9$, J and $L_2$ in formula (X) have the same meanings as $R_9$, J and $L_2$ in formula (VIII), respectively, and the preferable ranges thereof are also the same.

$R_2$, $L_1$, m, n, $Y_1$, $Y_2$ and $Z_1$ in formula (X) have the same meanings as $R_2$, $L_1$, m, n, $Y_1$, $Y_2$ and $Z_1$ in formula (VII), respectively.

Next, among the repeating units represented by formula (IX), preferable repeating units are described below. $Q_2$ represents a group of atoms necessary for forming, with the carbon atom and the nitrogen atom $-N=C(R_{17})-$, a ring. The atoms for constituting a ring are preferably carbon atoms, nitrogen atoms, oxygen atoms, silicon atoms, phosphor atoms or sulfur atoms. Preferred atoms are the carbon atoms, the nitrogen atoms, the oxygen atoms or the sulfur atoms; further preferred atoms are the carbon atoms, the nitrogen atoms or the oxygen atoms; and more preferred atoms are the carbon atoms or the nitrogen atoms. $Q_2$ which is composed of these atoms may be saturated or unsaturated, and when $Q_2$ is possibly substituted, it may be substituted by a substituent. The substituent has the same meaning as the group which was explained about the above mentioned A.

$R_{17}$ represents a hydrogen atom or a substituent. Preferable ranges thereof are also the same as those of $R^{17}$.

$R_9$, J and $L_2$ in formula (XI) have the same meanings as $R_9$, J and $L_2$ in formula (VIII), respectively, and the preferable ranges thereof are also the same.

$R_2$, $L_1$, m, n, $Y_1$, $Y_2$ and $Z_1$ in formula (XI) have the same meanings as $R_2$, $L_1$, m, n, $Y_1$, $Y_2$ and $Z_1$ in formula (VII), respectively.

X in formula (XI) has the same meaning as X in formula (X), and the preferable range thereof is also the same.

Except the repeating units represented by formulae (VII), (VIII), (IX), (X) and (XI), in addition to monomers such as $\alpha$-olefinic aromatic hydrocarbons having 8 to 20 carbon atoms such as styrene, 4-methylstyrene, 4-ethyl styrene, vinylnaphthalene, and vinylnaphthalene derivatives; vinylesters having 3 to 20 carbon atoms such as vinyl acetate and propionate vinyl; olefin carboxylates having 4 to 20 carbon atoms such as methyl methacrylate, ethyl methacrylate, propyl methacrylate, butyl methacrylate, benzyl methacrylate, 2-ethylhexyl methacrylate, stearyl methacrylate, methyl acrylate, ethyl acrylate, butyl acrylate, benzyl acrylate, 2-ethylhexyl acrylate, methyl crotonate, and ethyl crotonate; vinyl-series aromatic amines having 8 to 20 carbon atoms such as 4-vinylpyridine and 4-vinyl aniline; vinyl-series amide compound having 3 to 20 carbon atoms such as acrylamide, methacrylamide and benzyl methacrylamide; olefin phenols having 8 to 20 carbon atoms such as 4-vinylphenol; dienic compounds having 4 to 20 carbon atoms such as butadiene and isoprene; it is possible that polyfunctional monomers, macro-monomers, and polymer compounds to be obtained as a result of combination with a monomer appropriately selected from other monomers and the derivatives can be also used in the present invention.

It is preferable that, as another preferred embodiment different from the above description, the dispersion of the present invention contains a polymer compound or a surfactant having an electron-withdrawing group represented by formula (III) as its hydrophilic part. Although a polymerization ratio of the repeating unit represented by formula (III) in the polymer compound is not particularly limited, it is preferable to be from 0.05 to 0.8.

It is preferable that, as further another preferred embodiment different from the above description, the dispersion of the present invention contains a polymer compound or a surfactant having an electron-withdrawing group represented by formula (IV) as its hydrophilic part. Although a polymerization ratio of the repeating unit represented by formula (IV) in the polymer compound is not particularly limited, it is preferable to be from 0.05 to 0.8.

In the present invention, it is preferable for the polymer compound or the surfactant having a hydrophilic part

composed of the electron-withdrawing group represented by any one of formulae (I) to (IV) or a group of atoms including it that the hydrophilic part dissociates under an alkali condition of pH8 to pHl4. The polymer compound or the surfactant may be used as a solution dissociated under the alkali condition in advance or as its salt dissociated singly. Further in the present invention, for the purpose of functioning the polymer compound or the surfactant as a dispersing agent, an embodiment of using the solution dissociated under the alkali condition or the salt is preferable. Especially, in the viewpoint of stability, it is practical and preferable for the group represented by formula (IV) that $-SO_2-$ and cation (metallic cation) form salt. From such a viewpoint, M in formula (IV) is preferably an alkaline metal atom or an alkaline earth metal atom, and is more preferably a sodium atom. As thus described, whether the above polymer compound or surfactant is used as salt should be appropriately decided depending on the function and stability as the dispersing agent, performances and usages required for the dispersing agent, and physical property of the water-insoluble colorant or affinity with the colorant.

Specific examples of the group of atoms represented by any one of formulae (I) to (IV), the repeating unit comprising the group of atoms, the polymer compound comprising the repeating unit, and the surfactant comprising the group of atoms are illustrated below. However, the present invention is not limited to the following.

(1) 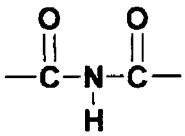

(2) 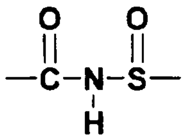

(3) 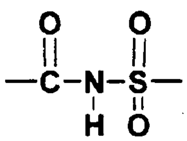

(4) 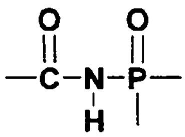

(5) 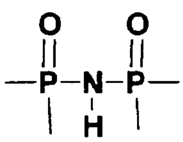

(6) 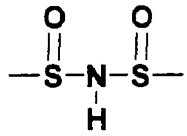

(7) 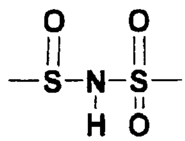

(8) 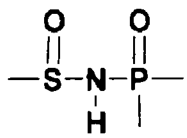

(9) 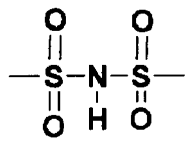

(10) 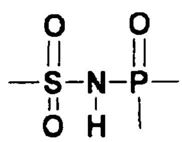

(11)

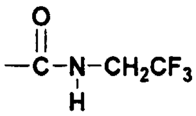

(16)

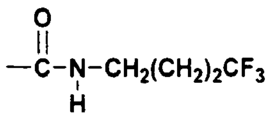

(12)

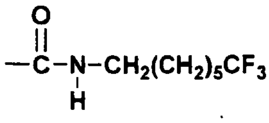

(17)

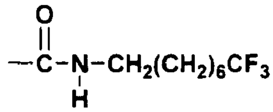

(13)

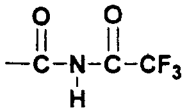

(18)

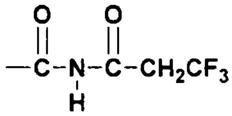

(14)

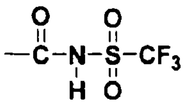

(19)

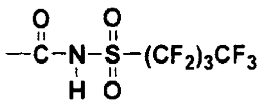

(15)

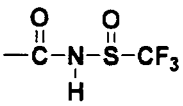

(20)

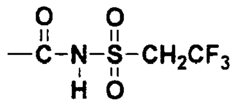

(21)

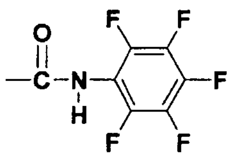

(26)

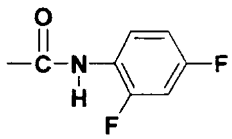

(22)

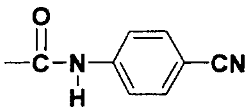

(27)

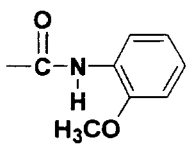

(23)

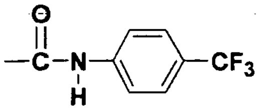

(28)

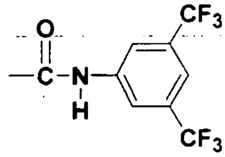

(24)

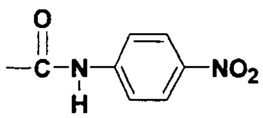

(29)

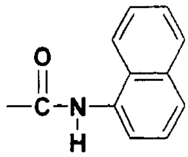

(25)

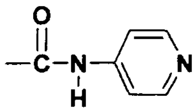

(30)

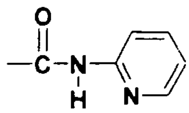

(31)

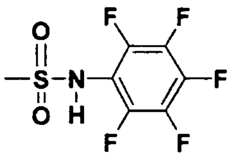

(36)

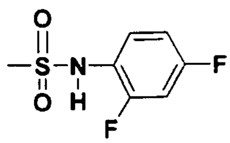

(32)

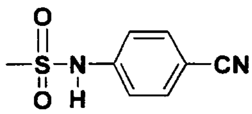

(37)

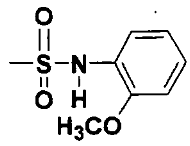

(33)

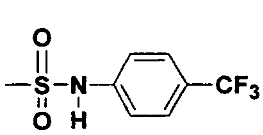

(38)

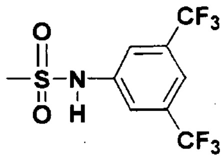

(34)

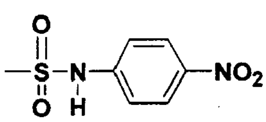

(39)

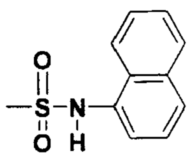

(35)

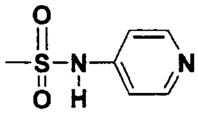

(40)

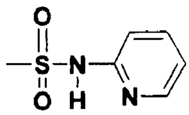

(41)

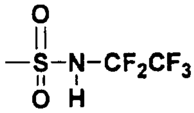

(46)

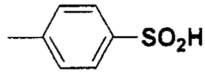

(42)

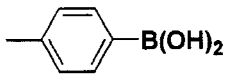

(47)

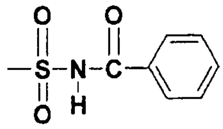

(43)

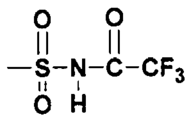

(48)

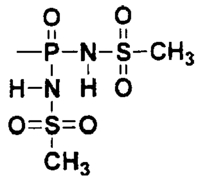

(44)

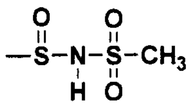

(49)

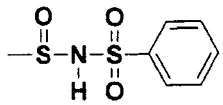

(50)

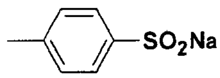

(45)

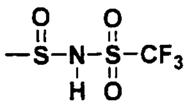

(51)

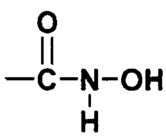

(56)

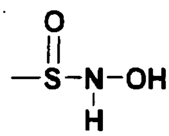

(52)

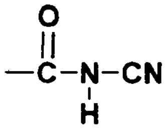

(57)

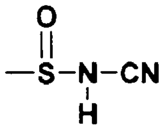

(53)

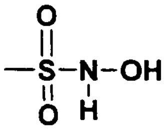

(58)

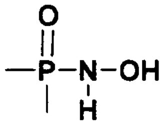

(54)

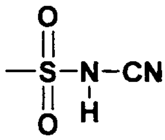

(59)

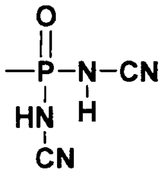

(55)

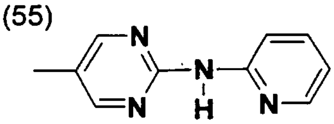

(60)

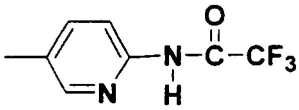

(61)

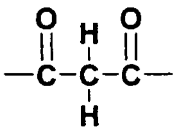

(66)

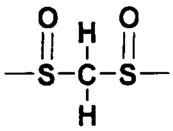

(62)

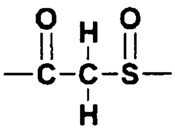

(67)

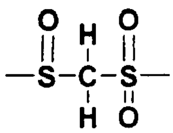

(63)

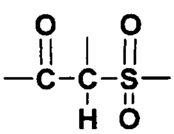

(68)

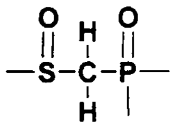

(64)

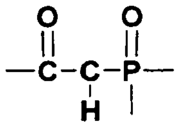

(69)

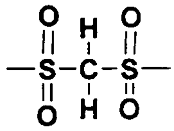

(65)

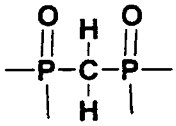

(70)

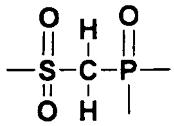

(71)

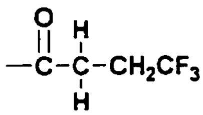

(76)

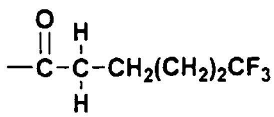

(72)

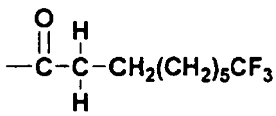

(77)

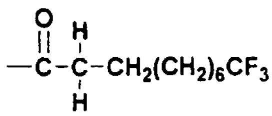

(73)

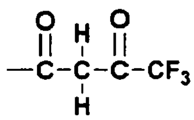

(78)

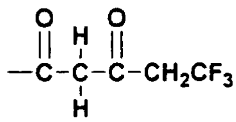

(74)

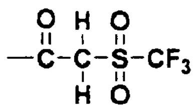

(79)

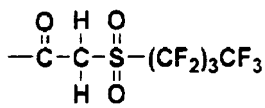

(75)

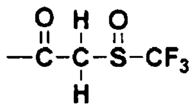

(80)

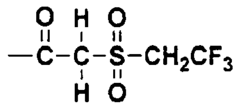

(81)

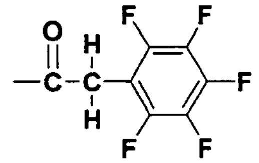

(82)

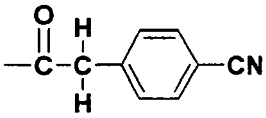

(83)

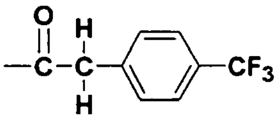

(84)

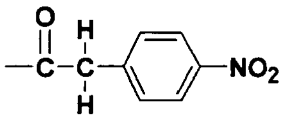

(85)

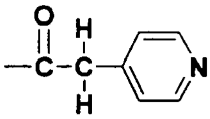

(86)

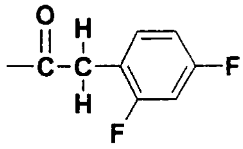

(87)

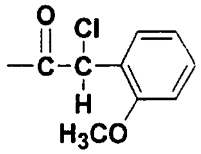

(88)

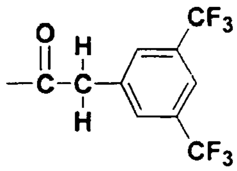

(89)

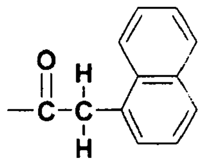

(90)

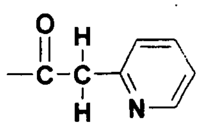

(91)

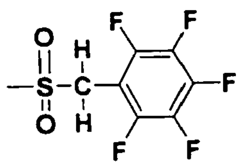

(92)

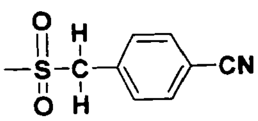

(96)

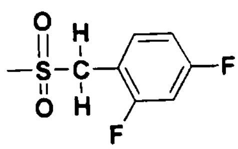

(97)

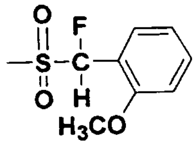

(93)

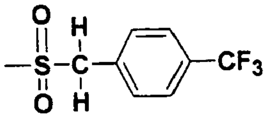

(94)

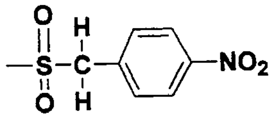

(95)

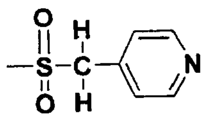

(98)

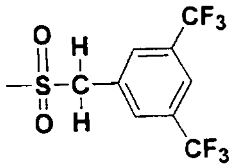

(99)

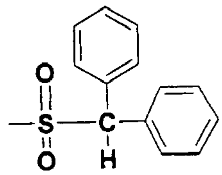

(100)

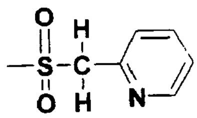

(101)

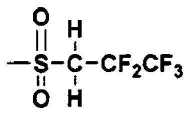

(102)

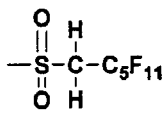

(103)

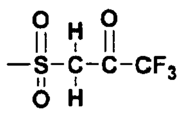

(104)

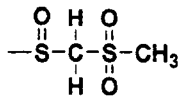

(106)

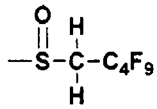

(107)

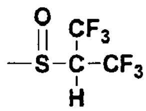

(108)

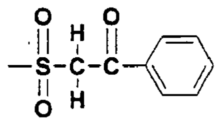

(109)

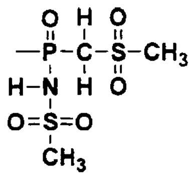

(105) 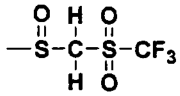

(110) 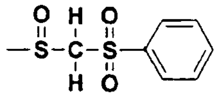

(111) 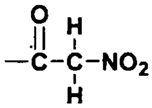

(112) 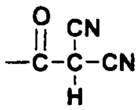

(113) 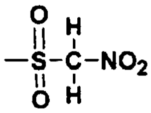

(114) 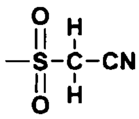

(115) 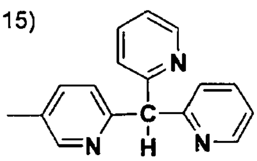

(116) 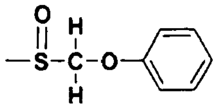

(117) 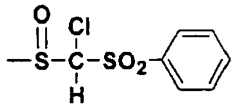

(118) 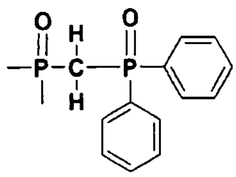

(119) 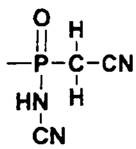

(120) 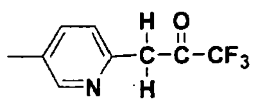

(121)
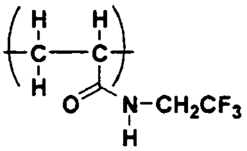

(122)
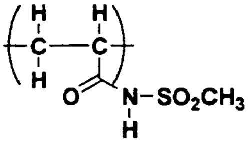

(126)
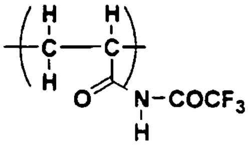

(127)
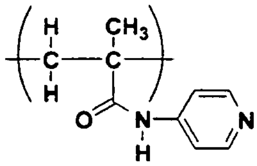

(123)
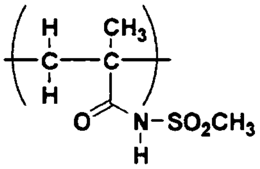

(124)
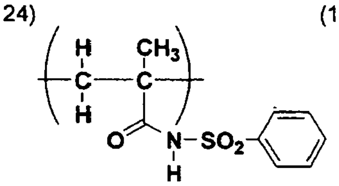

(125)
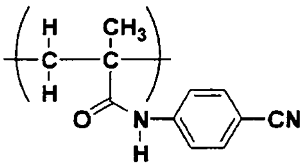

(128)
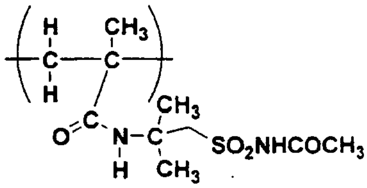

(129)
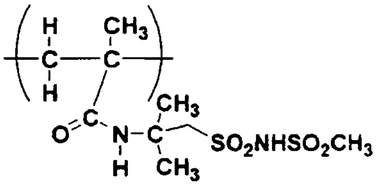

(130)
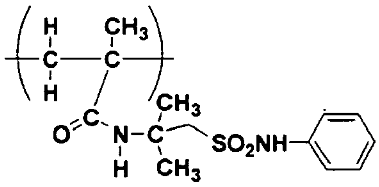

(131)
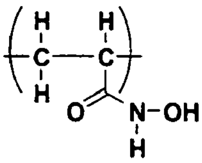

(136)
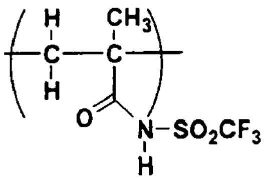

(132)
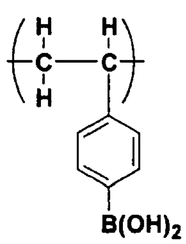

(137-1)
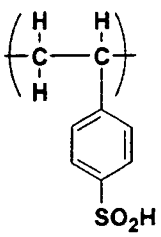

(137-2)
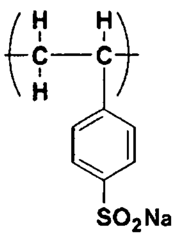

(133)
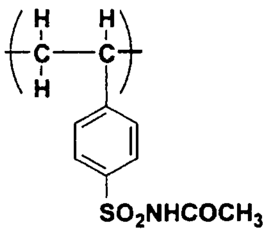

(138)
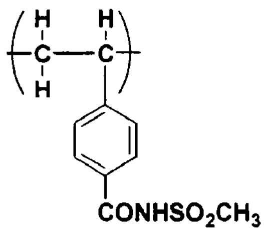

(134)
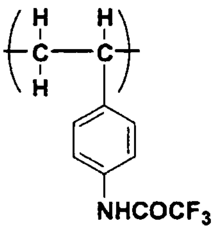

(139)
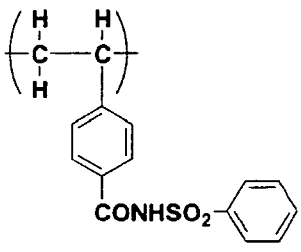

(135)
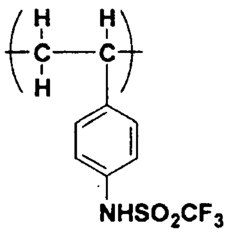

(140)
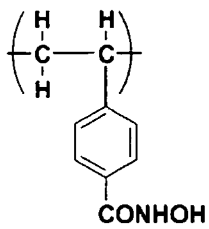

(141)

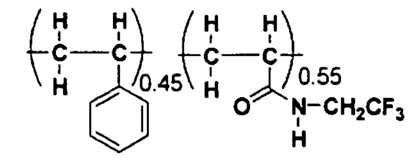

(142)

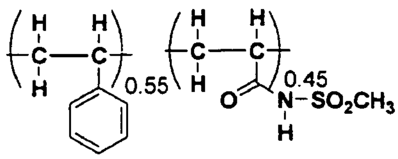

(143)

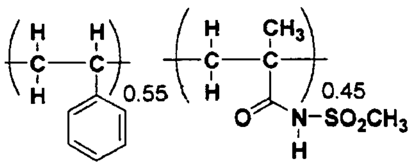

(144)

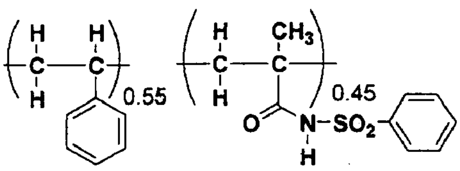

(145)

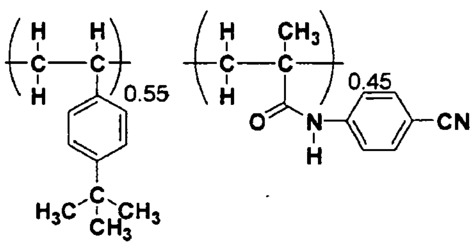

(146)

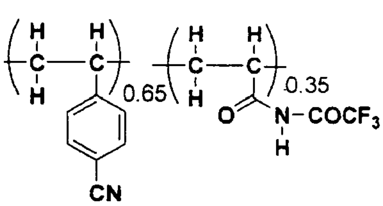

(147-1)

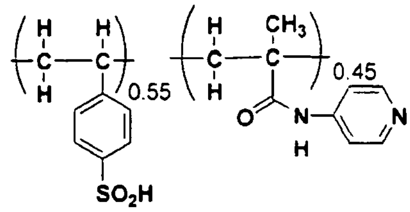

(147-2)

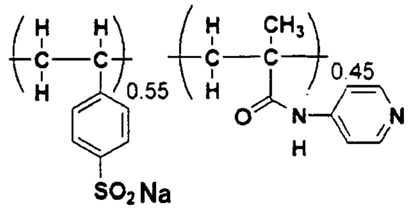

(148-1)

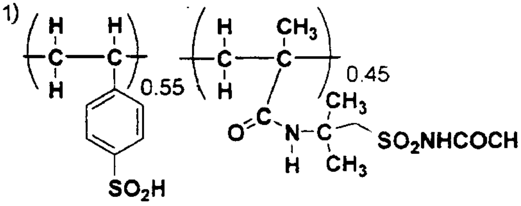

(148-2)

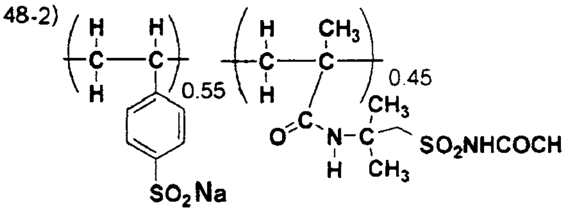

(149)

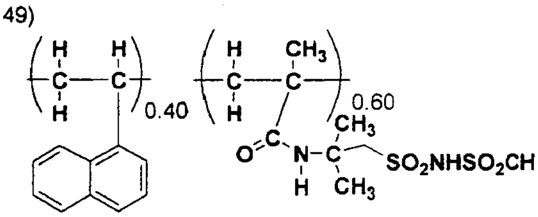

(150)

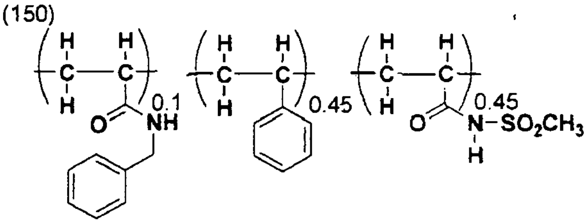

(151)

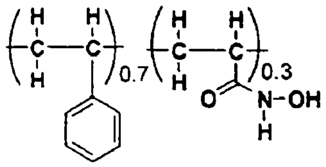

(152)

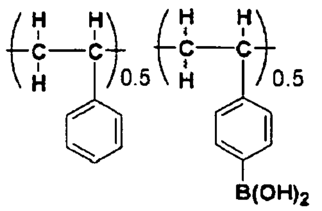

(153)

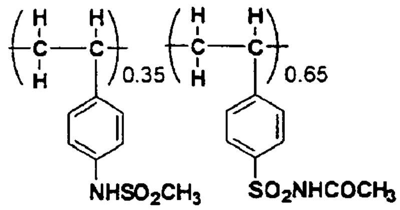

(154)

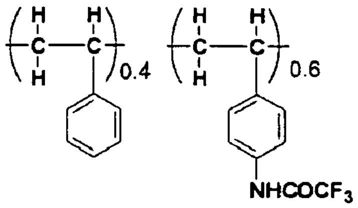

(155)

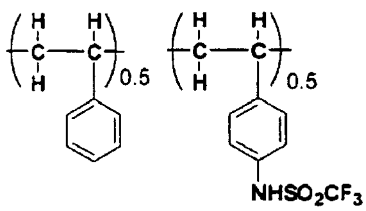

(156)

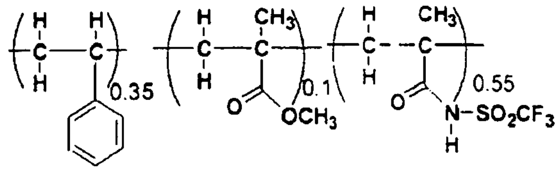

(157)

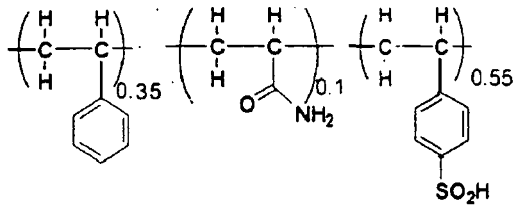

(158)

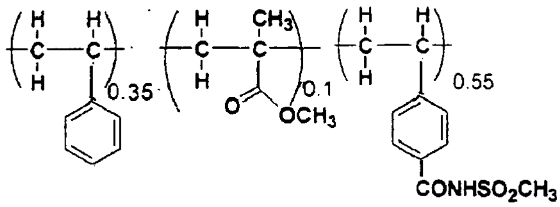

(159)

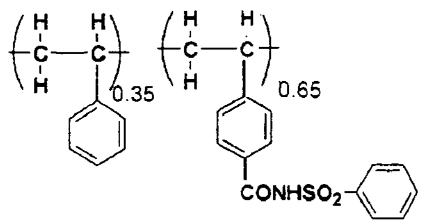

(160)

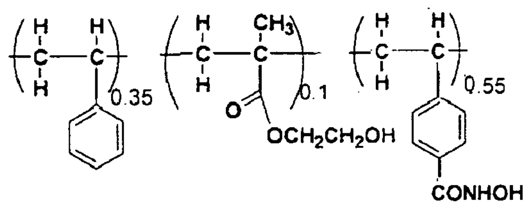

(161)

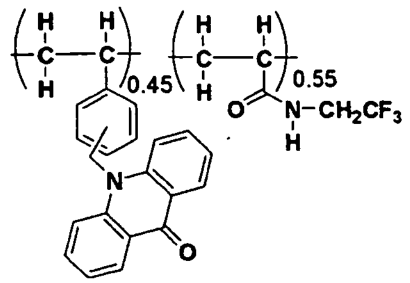

(176)

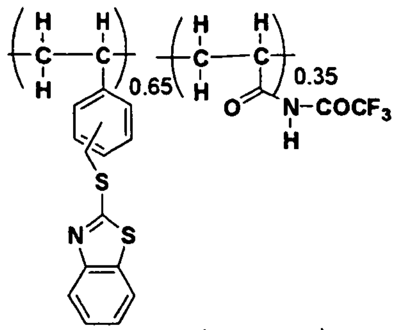

(162)

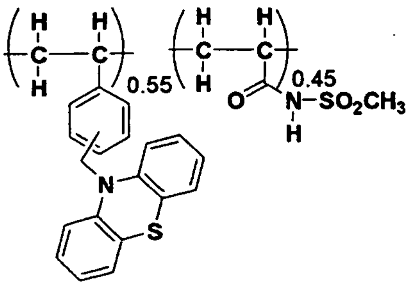

(167)

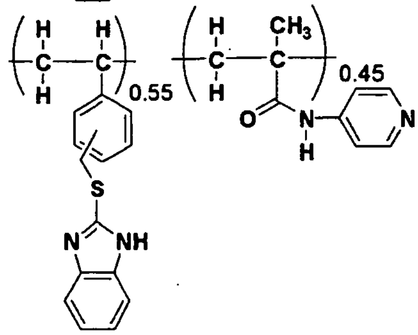

(163)

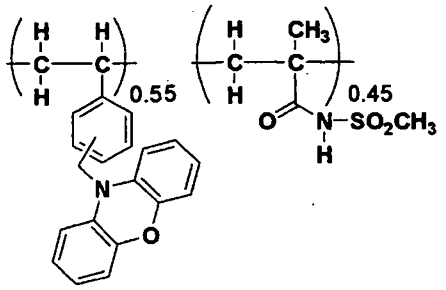

(168)

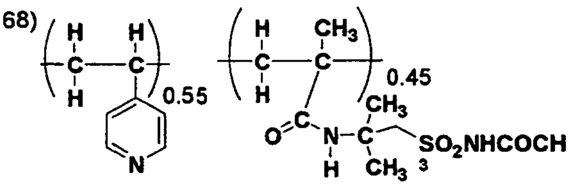

(164)

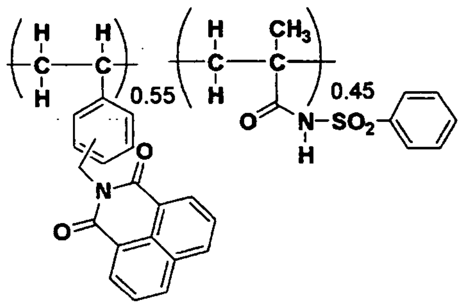

(169)

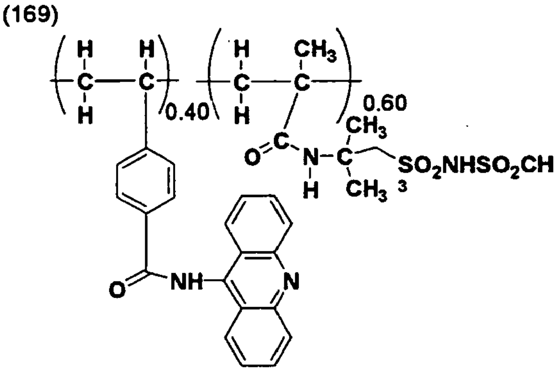

(165)

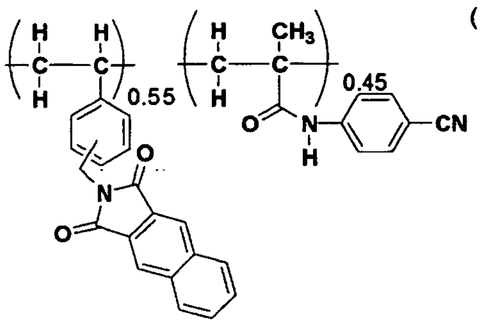

(170)

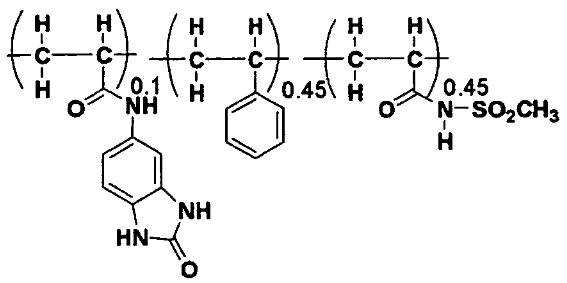

(171)

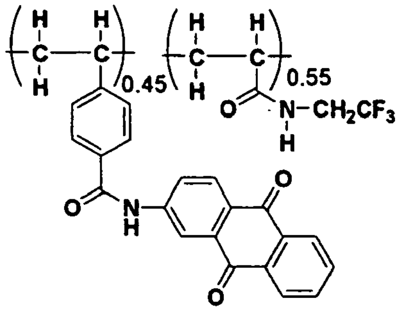

(176)

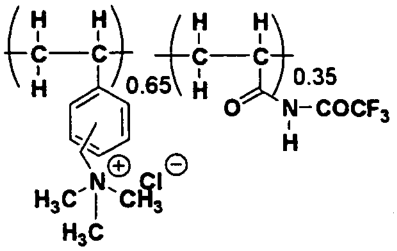

(172)

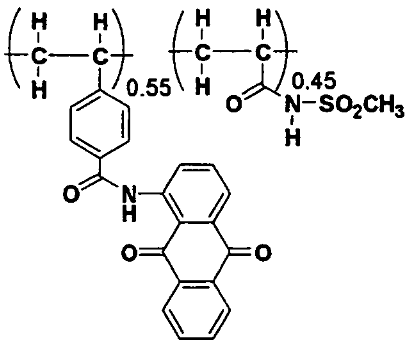

(177)

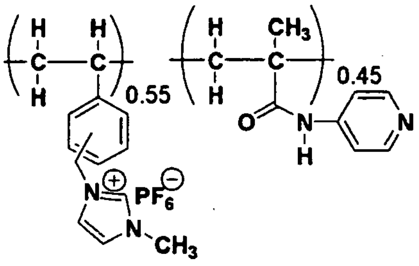

(173)

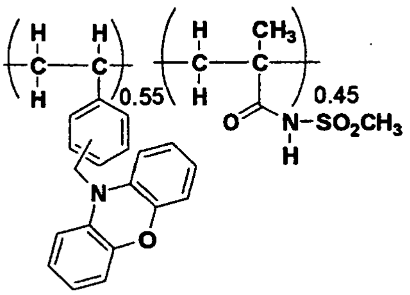

(178)

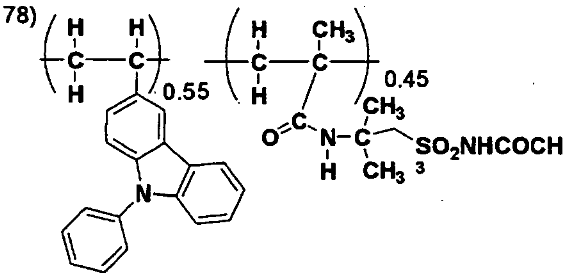

(174)

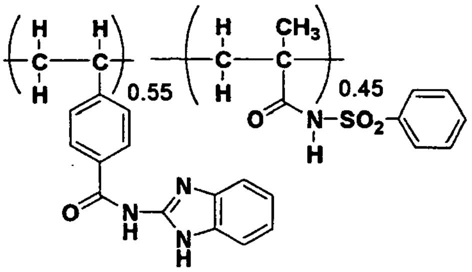

(179)

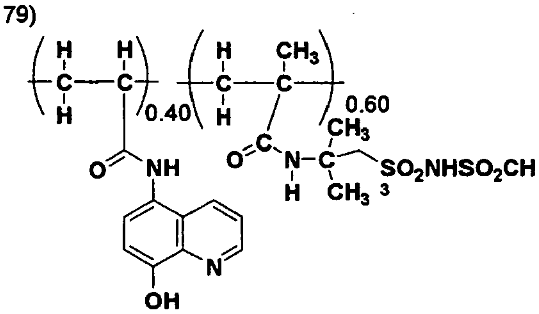

(175)

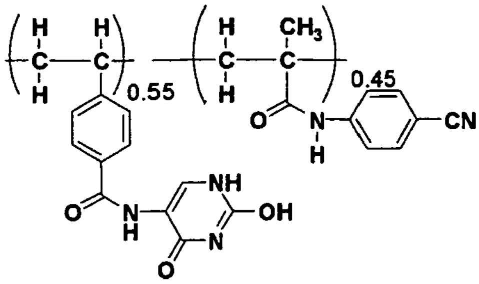

(180)

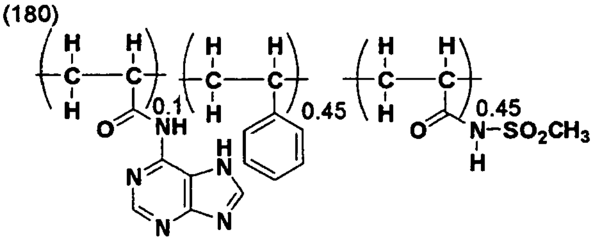

(181)

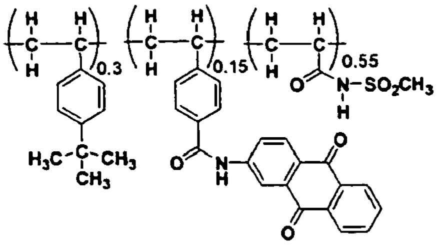

(186)

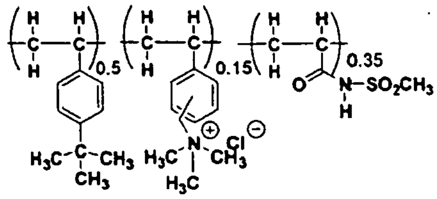

(182)

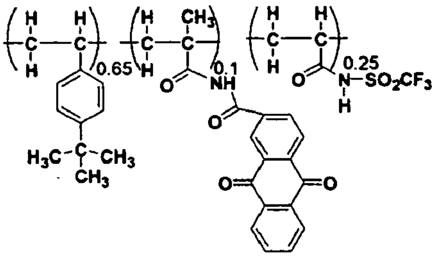

(187)

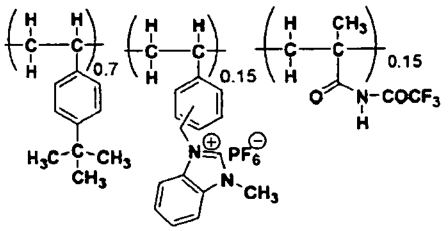

(183)

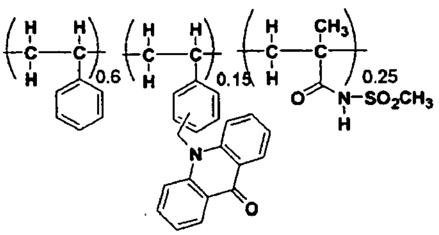

(188)

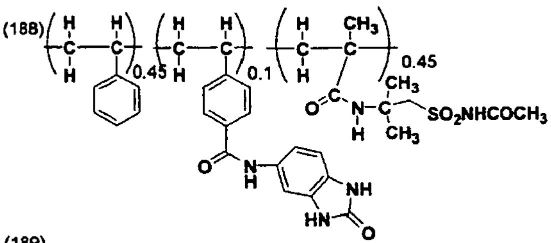

(184)

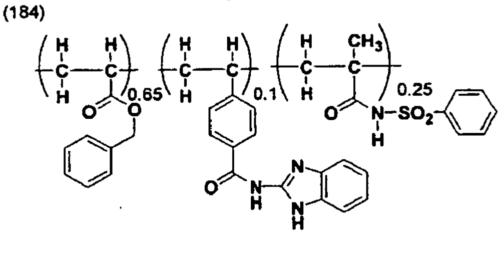

(189)

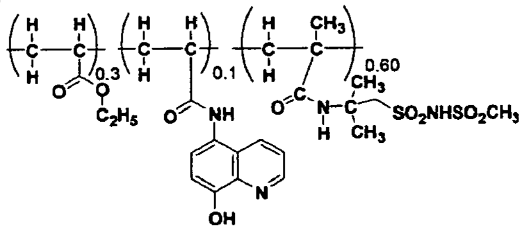

(185)

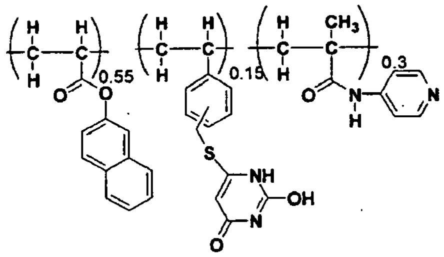

(190)

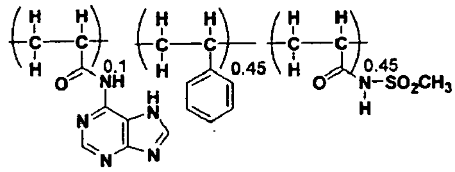

(191)

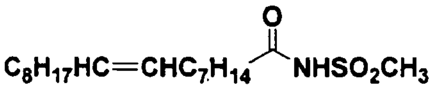

(196)

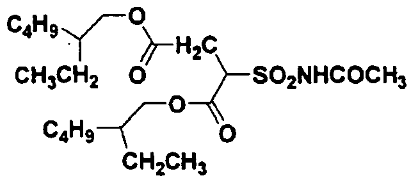

(192)

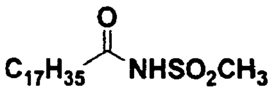

(197)

$C_8F_{17}SO_2NHCOCH_3$

(193)

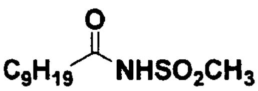

(198)

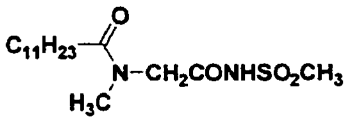

(194)

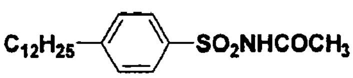

(199)

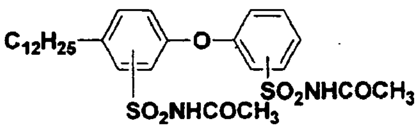

(195)

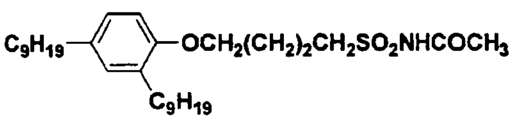

(200)

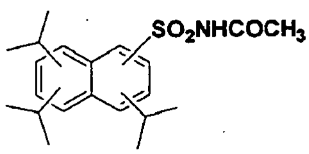

The content of the specific polymer compound or surfactant that includes the electron-withdrawing group is not

particularly limited in the dispersion of the present invention. It is preferable to be from 5 to 90 mass% with respect to the whole amount of the dispersion, and more preferable to be from 10 to 80 mass%. Although the molecular weight of the specific polymer compound or surfactant is not particularly limited. In the case of the polymer compound, the weight average molecular weight is preferably from 1,000 to 100,000, more preferably from 5,000 to 50,000. In the case of the surfactant (low molecular weight compound), it is practical that the weight average molecular weight is from 150 to 900. The specific polymer compound may be homopolymer, block copolymer, or random copolymer.

The containing mode in the dispersion of the specific polymer compound or surfactant having the electron-withdrawing group is not limited in particular, and either being contained independently from other component or being collectively contained together with other component may be suitable. Thus, in the "dispersion containing the water-insoluble colorant fine particles together with the specific polymer compound or surfactant" in the present invention, the polymer compound or the like may be contained in the water-insoluble colorant fine particles in the dispersion or separately with the fine particles in the dispersion. Accordingly, the state in which part of the polymer compound may be in dissociation equilibrium between adsorption on and release from the fine particles, is also included in the concept.

The acid value of the specific polymer compound having an electron-withdrawing group described above is not particularly limited. The acid value is preferable 65 to 300, more preferably 150 to 250.

An organic pigment that can be used in the dispersion of the present invention is not limited in hue and structure thereof, and examples include a perylene, perynone, quinacridone, quinacridonequinone, anthraquinone, anthanthrone, benzimidazolone, condensed disazo, disazo, azo, indanthrone, indanthrene, quinophthalone, quinoxalinedione, metallic complex azo, phthalocyanine, triaryl carbonium, dioxazine, aminoanthraquinone, diketopyrrolopyrrole, naphthole AS, thioindigo, isoindoline, isoindolinone, pyranthrone or isoviolanthrone-series organic pigment, or a mixture thereof.

More specifically, examples of the organic pigment include perylene-series organic pigments, such as C.I. Pigment Red 179, C.I. Pigment Red 190, C.I. Pigment Red 224, and C.I. Pigment Violet 29; perynone-series organic pigments, such as C.I. Pigment Orange 43, and C.I. Pigment Red 194; quinacridone-series organic pigments, such as C.I. Pigment Violet 19, C.I. Pigment Violet 42, C.I. Pigment Red 122, C.I. Pigment Red 192, C.I. Pigment Red 202, C.I. Pigment Red 207, and C.I. Pigment Red 209; quinacridonequinone-series organic pigments, such as C.I. Pigment Red 206, C.I. Pigment Orange 48, and C.I. Pigment Orange 49; anthraquinone-series organic pigments, such as C.I. Pigment Yellow 147; anthanthrone-series organic pigments, such as C.I. Pigment Red 168; benzimidazolone-series organic pigments, such as C.I. Pigment Brown 25, C.I. Pigment Violet 32, C.I. Pigment Yellow 120, C.I. Pigment Yellow 180, C.I. Pigment Yellow 181, C.I. Pigment Orange 36, C.I. Pigment Orange 62, and C.I. Pigment Red 185; condensed disazo-series organic pigments, such as C.I. Pigment Yellow 93, C.I. Pigment Yellow 94, C.I. Pigment Yellow 95, C.I. Pigment Yellow 128, C.I. Pigment Yellow 166, C.I. Pigment Orange 34, C.I. Pigment Orange 13, C.I. Pigment Orange 31, C.I. Pigment Red 144 (C.I. No. 20735), C.I. Pigment Red 166, C.I. Pigment Yellow 219, C.I. Pigment Red 220, C.I. Pigment Red 221, C.I. Pigment Red 242, C.I. Pigment Red 248, C.I. Pigment Red 262, and C.I. Pigment Brown 23; disazo-series organic pigments, such as C.I. Pigment Yellow 13, C.I. Pigment Yellow 83, C.I. Pigment Yellow 155, and C.I. Pigment Yellow 188; azo-series organic pigments, such as C.I. Pigment Red 187, C.I. Pigment Red 170, C.I. Pigment Yellow 74, C.I. Pigment Red 48, C.I. Pigment Red 53, C.I. Pigment Orange 64, and C.I. Pigment Red 247; indanthrone-series organic pigments, such as C.I. Pigment Blue 60; indanthrene-series organic pigments, such as C.I. Pigment Blue 60; quinophthalone-series organic pigments, such as C.I. Pigment Yellow 138; quinoxalinedione-series organic pigments, such as C.I. Pigment Yellow 213; metallic complex azo-series organic pigments, such as C.I. Pigment Yellow 129, and C.I. Pigment Yellow 150; phthalocyanine-series organic pigments, such as C.I. Pigment Green 7, C.I. Pigment Green 36, C.I. Pigment Green 37, C.I. Pigment Blue 16, C.I. Pigment Blue 75, and C.I. Pigment Blue 15 (including 15:1, 15:6, others); triaryl carbonium-series organic pigments, such as C.I. Pigment Blue 56, and C.I. Pigment Blue 61; dioxazine-series organic pigments, such as C.I. Pigment Violet 23, and C.I. Pigment Violet 37; aminoanthraquinone-series organic pigments, such as C.I. Pigment Red 177; diketopyrrolopyrrole-series organic pigments, such as C.I. Pigment Red 254, C.I. Pigment Red 255, C.I. Pigment Red 264, C.I. Pigment Red 272, C.I. Pigment Orange 71, and C.I. Pigment Orange 73; naphthole AS-series organic pigments, such as C.I. Pigment Red 187, and C.I. Pigment Red 170; thioindigo-series organic pigments, such as C.I. Pigment Red 88; isoindoline-series organic pigments, such as C.I. Pigment Yellow 139, C.I. Pigment Orange 66; isoindolinone-series organic pigments, such as C.I. Pigment Yellow 109, C.I. Pigment Yellow 110, and C.I. Pigment Orange 61; pyranthrone-series organic pigments, such as C.I. Pigment Orange 40, and C.I. Pigment Red 216; and isoviolanthrone-series organic pigments, such as C.I. Pigment Violet 31.

In the dispersion of the present invention, a content of the water-insoluble colorant in the dispersion is not particularly limited. In consideration of application to an ink, for example, it is preferably from 0.01 % by mass to 30% by mass, more preferably from 1.0% by mass to 20% by mass, and most preferably from 1.1 % by mass to 15% by mass.

In the dispersion of the present invention, even though a concentration of the dispersion is high, a change of tint is small, while a viscosity of the dispersion is kept at a low level. For example, when the dispersion is applied to a recording liquid, a freedom degree of the kind and addition amount of additives that can be used in the recording liquid is increased. Accordingly, the water-insoluble colorant can be preferably used in the above content range.

Only one kind of water-insoluble colorant may be contained into the dispersion of the present invention, or,

alternatively, two or more kinds of water-insoluble colorants may be commonly contained into the dispersion. A combination of two or more kinds of water-insoluble colorant is not particularly limited. However, it is preferred to combine the same type of organic compounds such as a combination of azo-series organic pigments, or a combination of diketopyrrolopyrrole-series organic pigments. In other words, it is preferred to use a combination of organic pigments having a similar skeleton to each other. Specifically, there are preferable combinations such as C.I. pigment violet 19 and C.I. pigment red 122; C.I. pigment violet 19, C.I. pigment red 122 and C.I. pigment red 209; C.I. pigment yellow 128 and C.I. pigment yellow 74; and C.I. pigment yellow 128 and C.I. pigment orange 13. Further, it is preferred to use at least another kind of organic pigment that is different by the range of 10 nm to 200 nm, especially from 10 nm to 100 nm from the maximum absorption wavelength (λmax) of one organic pigment of two or more kinds of organic pigment components. It should be noted that the absorption wavelength of the pigment used in the present invention means a wavelength in the state of particles, namely the state of particles coated on or incorporated in a medium, but it does not mean a wavelength in the state of solution of the pigment dissolved in a specific medium such as alkali or acid.

The maximum absorption wavelength (λmax) of a primary organic pigment component is not particularly limited. However, it is practical in a coloring application to use organic pigment compounds having the maximum absorption wavelength within the visible light region. For example, it is preferred to use an organic pigment compound having the maximum absorption wavelength in the range of 300 nm to 750 nm.

It is preferable that the dispersion of the present invention is produced by dissolving an water-insoluble colorant into an aprotic water-soluble organic solvent in the presence of alkali, and making the solution of the water-insoluble colorant and an aqueous medium to contact each other, to give a dispersion in which fine particles of the water-insoluble colorant are generated, in which a polymer compound or a surfactant that includes at least one kind of electron-withdrawing group or group of atoms represented by any one of formulae (I) to (IV) as its hydrophilic part is contained into the solution of the water-insoluble colorant and/or the aqueous medium to obtain the dispersion containing the fine particles of the water-insoluble colorant and the polymer compound or surfactant. Especially, it is preferable that the polymer compound or the surfactant that includes at least one kind of group of atoms represented by any one of formulae (I) to (IV) as its hydrophilic part is contained into the aqueous medium.

The specific polymer compound or surfactant that includes the electron-withdrawing group is mainly operable as particles formation controller of the water-insoluble colorant or as a dispersibility improver. The addition amount of the above specific polymer compound or surfactant into the solution of the water-insoluble colorant and/or aqueous medium is preferably from 0.001 to 10,000 mass parts with respect to the water-insoluble colorant. It is more preferable to be from 0.05 to 1,000 mass parts, further preferable to be from 0.05 to 500 mass parts, and particularly preferable to be from 0.1 to 200 mass parts.

In the dispersion of the present invention, in addition to the above specific polymer compound or surfactant that includes the electron-withdrawing group, another polymer compound and/or low molecular weight compound may be commonly used. With regard to the another polymer compound to be used, a polymer compound which is soluble into an aprotic organic solvent in the presence of alkali, and when a solution prepared by dissolving the water-insoluble colorant and the dispersing agent and the aqueous medium are allowed to mix each other, which achieves the effect of dispersion by forming particles containing the water-insoluble colorant in an aqueous medium is appropriately employable. The polymer compounds having at least one kind of group, for example, selected from a carboxylic group, a sulfonic group and a phosphoric group as its hydrophilic part and having the hydrophilic part and the hydrophobic part in the same molecule, and further capable of achieving the object of the present invention are not particularly limited. Examples of the hydrophilic part include monomers represented by (meth)acrylic acid, maleic acid, itaconic acid, fumaric acid, β-CEA, styrene sulfonate, vinyl sulfonate, 4-vinylbenzene sulfonate, allyl sulfonate, 3-(meth)acryloyloxypropane sulfonate, 2-methylallyl sulfonate, 2-(meth)acryloyloxyethane sulfonate, 2-acrylamide-2-methylpropane sulfonate and salts of those, mono{2-(meth)acryloyloxy ethyl} acid phosphate, and 2-methacryloxyethyl phosphonate; α-olefinic aromatic hydrocarbons having 8 to 20 carbon atoms such as styrene, 4-methylstyrene, 4-ethylstyrene, vinylnaphthalene, vinylnaphthalene derivatives; and vinylesters having 3 to 20 carbon atoms such as vinyl acetate and propionate vinyl; olefin carboxylates having 4 to 20 carbon atoms such as methyl methacrylate, ethyl methacrylate, propyl methacrylate, butyl methacrylate, benzyl methacrylate, 2-ethylhexyl methacrylate, stearyl methacrylate, methyl acrylate, ethyl acrylate, butyl acrylate, benzyl acrylate, 2-ethylhexyl acrylate, methyl crotonate, and ethyl crotonate; vinylic aromatic amines having 8 to 20 carbon atoms such as 4-vinylpyridine, and 4-vinyl aniline; vinylic amide compounds having 3 to 20 carbon atoms such as acrylamide, methacrylamide, and benzyl methacrylamide; olefin phenols having 8 to 20 carbon atoms such as 4-vinylphenol; and dienic compounds having 4 to 20 carbon atoms such as butadiene, and isoprene. In addition to those, polyfunctional monomers, macro-monomers, conventionally well known monomers, and polymer compounds to be obtained as a result of combination with a monomer appropriately selected from other monomers and the derivatives may be used in the present invention. Those other polymer compounds function as a dispersing agent, and only one kind of polymer compound may be used, or, alternatively, two or more kinds of polymer compounds may be commonly used.

Furthermore, it is preferable to use, as the polymer compounds having at least one kind of group selected from

the carboxylic group, the sulfonic group, and the phosphoric group as its hydrophilic part, a polymer compound prepared by copolymerizing monomers having those acidic group salt and hydrophilic monomer components such as vinyl ethers and allyl ethers each having a polyether chain (e.g., polyoxyethylene alkylether, polyoxyethylene higher fatty acid ester, and polyoxyethylene alkyl phenyl ether) at those side-chains. Regarding with the polymerization method, there is no limitation, in particular, generally in any of radical polymerization, ionic polymerization, living polymerization, and coordinating polymerization; solutions as the medium; and measure such as bulk, emulsification. The radical polymerization with solution is preferable in the viewpoint of being convenient of manipulation.

The above copolymers for obtaining the other polymer compound may have any form such as block-copolymers, random copolymers, and graft copolymers. Use of the block-copolymers, or graft copolymers is especially preferable because those copolymers impart an excellent dispersibility to a water-insoluble colorant.

The amount of the other polymer compound to be used is not particularly limited. For the purpose of improving dispersion stability of the water-insoluble colorant fine particles, and of enhancing color density as an aqueous dispersion, it is preferable that the other polymer compound is used within the range of from 0.001 to 10 mass parts with respect to 1 mass part of the water-insoluble colorant. The use rate is more preferably from 0.01 to 4 mass parts, and particularly preferably from 0.1 to 2 mass parts.

The range of the ratio of the hydrophilic part and the hydrophobic part is not particularly limited so long as stably achieving dissolution commonly with the organic pigment in an aprotic organic solvent in the presence of alkali. However, when as the polymer compound, a polymer having much hydrophobic monomer component is used, it sometimes becomes difficult to impart good dispersion stability to a water-insoluble colorant. It should be noted that the term "hydrophilic" means a good affinity with water and a high water solubility, whereas the "hydrophobic" means a poor affinity with water and a sparse water solubility. When a hydrophilic component (part) of the dispersing agent is composed of only other group (s) than the above groups, such as a primary, secondary, or tertiary amino group and a quaternary ammonium group, a dispersion property is sufficient in aqueous dispersion of the organic pigment containing alkali. However, a degree of dispersion stability sometimes becomes relatively small. Besides, in the conventional pigment dispersion method, it is necessary to think out, for example, to select a dispersing agent that can efficiently contact with a surface of the pigments dispersed in a medium. In the present invention, both the pigment and the dispersing agent are present in the dissolution state in the medium, so that a desired function between them can be easily achieved. As a result, no limitation to the dispersing agent owing to contact efficiency on the pigment surface is required, which is different from the conventional pigment dispersion method. Accordingly, a wide range of dispersing agents may be used in the present invention.

Any kind of aprotic organic solvent may be used in the present invention, so long as the solvent is able to dissolve the water-insoluble colorant and the polymer compound. Aprotic organic solvents having 5% by mass or more of solubility to water are preferably used. Furthermore, aprotic organic solvents that can be freely mixed with water are preferable.

Specifically, examples of preferable solvents include dimethylsulfoxide, dimethylimidazolidinone, sulfolane, N-methyl pyrrolidone, dimethylformamide, N,N-dimethylacetoamide, acetonitrile, acetone, dioxane, tetramethylurea, hexamethylphosphoramide, hexamethylphosphoro triamide, pyridine, propionitrile, butanone, cyclohexanone, tetrahydrofuran, tetrahydro pyran, ethyleneglycol diacetate, and γ-butyrolactone. Of these solvents, dimethylsulfoxide, N-methyl pyrrolidone, dimethylformamide, N,N-dimethylacetoamide, dimethylimidazolidinone, sulfolane, acetone, acetonitrile, and tetrahydrofuran are preferable; and dimethylsulfoxide and N-methyl pyrrolidone are more preferable. Further, these solvents may be used singly or in a combination thereof.

A proportion of the aprotic solvent to be used is not particularly limited. However, it is preferred to use the solvent in the proportion of 2 parts by mass to 500 parts by mass, more preferably from 5 parts by mass to 100 parts by mass with respect to 1 part by mass of the water-insoluble colorant respectively, in order to improve a dissolution state of the water-insoluble colorant, to form easily fine particles having a desired particle size, and to improve a color density of aqueous dispersion.

The alkali used for dissolving the water-insoluble colorant may be any one. Particularly, hydroxide of alkali metal, alkoxide of alkali metal, hydroxide of alkaline-earth metal, alkoxide of alkaline-earth metal, and organic strong base may preferably be used in terms of high solubilizing ability for the water-insoluble colorant. Examples thereof include inorganic bases such as sodium hydroxide, potassium hydroxide, cesium hydroxide, lithium hydroxide, magnesium hydroxide, calcium hydroxide, and barium hydroxide; trialkylamine, diazabicyclo undecene (DBU), sodium methoxide, *tert*-butoxy sodium, *tert*-butoxy potassium, quaternary ammonium compounds such as tetramethylammonium hydroxide, benzyltrimethylammonium hydroxide, chlorine hydroxide, and tetrabutylammonium hydroxide; and inorganic bases and organic bases such as guanidine, 1,8-diazabicyclo[5.4.0]-7-undecene, and 1,8-diazabicyclo[4,3,0]-7-nonene.

Especially, potassium hydroxide, sodium hydroxide, tetramethylammonium hydroxide, benzyltrimethylammonium hydroxide, chlorine hydroxide, and the quaternary ammonium compounds such as tetrabutylammonium hydroxide are preferable as the above alkalis.

Further, only one kind of alkali may be used, or, alternatively, two or more kinds of alkalis may be commonly

used. An amount of use of the alkali is not particularly limited but the alkali may preferably be used in an amount of 0.1 to 10 mass parts, more preferably 0.5 to 5 mass parts, and further preferably 1 to 4 mass parts, per 1 mass part of the water-insoluble colorant.

In the present invention, the "aqueous medium" refers to water alone, or a mixed solvent of water and an organic solvent soluble in water. The addition of the organic solvent is preferably used, for example, (i) in the case where only water is not sufficient for uniformly dissolving a water-insoluble colorant and a dispersing agent, (ii) in the case where only water is not sufficient for obtaining viscosity required for the flow through a flow path, and the like. In the case of alkaline, for example, the organic solvent is preferably an amide series solvent or a sulfur-containing compound solvent, more preferably the sulfur-containing-compound solvent, and particularly preferably dimethylsulfoxide (DMSO). In the case of acidic, the organic solvent is preferably a carboxylic acid series solvent, a sulfur-containing compound solvent or a sulfonic acid series solvent, more preferably a sulfonic acid series solvent, and particularly preferably methanesulfonic acid. Additionally, an inorganic compound salt, a dispersing agent as described below or the like may be dissolved into the aqueous solvent as required.

In this case, the embodiment wherein a solution of a water-insoluble colorant homogeneously dissolved therein and an aqueous solvent are mixed is not particularly limited. Examples of the embodiment include an embodiment in which a water-insoluble colorant solution is added to an aqueous solvent with being stirred, and an embodiment in which a water-insoluble colorant solution and an aqueous solvent are each delivered to a certain length of flow path in the same longitudinal direction, and both the solution and the solvent contact with each other in the course of getting through the flow path, thereby to deposit fine particles of the water-insoluble colorant. With respect to the former (the embodiment of stirring and mixing), it is especially preferred to use an embodiment in which a feed pipe or the like is introduced in an aqueous solvent so that a water-insoluble colorant solution is fed from the pipe for addition in liquid. More specifically, the addition in liquid can be performed by using an apparatus described in International Publication WO 2006/121018 pamphlet, paragraph Nos. 0036 to 0047. With respect to the latter (the embodiment of mixing both the liquid and the solvent by using the flow path), there can be used micro reactors described in JP-A-2005-307154, paragraph Nos. 0049 to 0052 and FIGS. 1 to 4, and JP-A-2006-39643, paragraph Nos. 0044 to 0050.

A condition for deposition and formation of the particles of the water-insoluble colorant is not particularly limited, and can be selected from a range from a normal pressure condition to a subcritical or supercritical condition. The temperature at which the particles are prepared under normal pressure is preferably -30 to 100°C, more preferably -10 to 60°C, and particularly preferably 0 to 30°C. A mixing ratio of the water-insoluble colorant solution to the aqueous medium is preferably 1/50 to 2/3, more preferably 1/40 to 1/2, and particularly preferably 1/20 to 3/8 in volume ratio. The concentration of the particles of the water-insoluble colorant in the mixed liquid at the time of deposition of the particles is not particularly limited, but the amount of the particles of the water-insoluble colorant is preferably 10 to 40,000 mg, more preferably 20 to 30,000 mg, and particularly preferably 50 to 25,000 mg, per 1,000 ml of the solvent.

For the purpose of further enhancing the stability of the dispersion of the present invention, another dispersing agent (surfactants, polymer dispersing agents) can be also added. Specifically, another surfactant that can be used in the present invention may be properly selected from previously known surfactants and derivatives thereof, including anionic surfactants such as alkylbenzene sulfonic acid salts, alkylnaphthalene sulfonic acid salts, higher fatty acid salts, sulfonic acid salts of higher fatty acid esters, sulfuric acid ester salts of higher alcohol ether, sulfonic acid salts of higher alcohol ether, alkylcarboxylic acid salts of higher alkylsulfonamide, and alkylphosphoric acid salts; nonionic surfactants such as polyoxyethylene alkylethers, polyoxyethylene alkylphenylethers, polyoxyethylene fatty acid esters, sorbitan fatty acid esters, ethyleneoxide adducts of acetylene glycol, ethyleneoxide adducts of glycerol, and polyoxyethylene sorbitan fatty acid esters; and in addition to the above, amphoteric surfactants such as alkyl betaines and amido betaines; and silicone-based surfactants and fluorine-based surfactants.

Specific examples of the polymer dispersing agent include polyvinyl pyrrolidone, polyvinyl alcohol, polyvinyl methyl ether, polyethylene oxide, polyethyleneglycol, polypropyleneglycol, and polyacrylamide. Polyvinyl pyrrolidone is preferably used.

As the polymer compound that are used as a dispersing agent, there can be preferably used natural polymer compounds such as albumin, gelatin, rosin, shellac, starch, gum Arabic, and sodium alginate; and their modified compounds. Further, these dispersing agents may be used singly, or in a combination thereof. A ratio of these dispersing agents to be used is not particularly limited. However, it is preferred to use the dispersing agent in a proportion of 0.05 parts by mass or more with respect to 1 part by mass of the water-insoluble colorant, and 50 parts by mass or less with respect to 100 parts by mass of the aprotic organic solvent. When the proportion of the dispersing agent is too large with respect to the aprotic organic solvent, it is sometimes difficult to make the dispersing agent completely dissolve in the solvent. On the other hand, when the proportion of the dispersing agent is too small with respect to the water-insoluble colorant, it is sometimes difficult to achieve a sufficient dispersion effect.

In order to improve weather resistance when the dispersion of the present invention is used as an ink that is described below, the above-described polymer compounds, surfactants and/or dispersing agents can be preferably used. However, it is especially preferred to use a polymer dispersing agent or a polymer compound, each of which is

soluble or dispersible in a particular organic solvent that is used for a cleaning process that is described below, in consideration of providing weather resistance and maintaining the dispersion at a low viscosity level even though the dispersion are concentrated. The molecular weight of the polymer dispersing agent or the polymer compound is not particularly limited, but is preferably in the range of 500 to 1,000,000, and more preferably from 1,000 to 1,000,000 in terms of weight average molecular weight respectively. When the molecular weight is too small, the polymer cannot function as a dispersing agent. On the other hand, when the molecular weight is too large, entanglement among polymeric chains becomes too large. As a result, it becomes difficult for them to serve as a dispersing agent, which occasionally makes it difficult to maintain a good dispersion state. It should be noted that when described simply as a molecular weight in the present invention, the molecular weight means weight average molecular weight, and the weight average molecular weight, unless indicated otherwise, means an average molecular mass calculated in terms of polystyrene that is measured by gel permeation chromatography (carrier:

tetrahydrofuran). It should be also noted that the term "dispersion" that is used in the present invention means a composition having prescribed fine particles dispersed therein. The form of the dispersion is not particularly limited. The dispersion is used as a meaning to embrace a liquid composition (dispersion liquid), a past-like composition, and a solid composition.

In order to improve a homogeneous dispersion property and a storage stability of the water-insoluble colorant still more, a containing amount of the dispersing agent aiming to improve the performance as the above ink into the solution prepared by dissolving the water-insoluble colorant to be used in the preparation of the dispersion is preferably within the range of from 0.1 to 1,000 parts by mass with respect to 100 parts by mass of the water-insoluble colorant. The amount is more preferably from 1 to 500 mass parts, and particularly preferably from 10 to 250 mass parts. When the amount is too small, there may be a case wherein the dispersion stability of the water-insoluble colorant fine particles is not improved. The amount of the dispersing agent for improving the performance in the above ink contained in the dispersion of the present invention is not particularly limited, and it is practical to be from 10 to 1,000 mass parts with respect to 100 mass parts of the water-insoluble colorant.

[Average particle diameter from observation by electron microscope]

In the present invention, a form of the water-insoluble colorant particles that are contained in the dispersion is observed by using a scanning electron microscopy (SEM) or a transmission electron microscope (TEM), to calculate an average particle diameter thereof as described below. In the case of using the TEM, the dispersion (dispersion liquid) containing fine particles of water-insoluble colorant is diluted. The diluted dispersion is dropped onto a Cu 200 mesh to which a carbon film is attached, and then the fine particles are dried on the mesh. The diameter of each of 300 particles is measured from images of the particles photographed to 100000 times using TEM (1200EX, manufactured by JEOL Ltd.), and then an average particle diameter is calculated. At this time, because the dispersion is dried on the Cu 200 mesh as described above, even the water-insoluble colorant is in a state well dispersed in the dispersion, there is a case where particles of the water-insoluble colorant apparently aggregate during the dry step, which makes it difficult to discriminate an accurate particle size. In this case, an average particle diameter is calculated by using isolated 300 particles that are not piled on other particles. When the particles of the water-insoluble colorant are not spherical, the width of the particle major axis (the longest size of the particle) is measured.

In one embodiment of the present invention, an average particle size of the water-insoluble colorant is preferably 150 nm or less, and more preferably from 5 nm to 60 nm. Especially, the average particle size of the water-insoluble colorant that is calculated from observation by using the transmission electron microscope (TEM) is preferably from 5 nm to 50 nm, and more preferably from 5 nm to 45 nm. It is especially preferable that the average particle size is from 5 nm to 40 nm from a viewpoint of transparency of the dispersion and compatibility of dispersion stability and resistance to light in the dispersion. When the average particle size is too small, it is sometimes difficult to keep a stable dispersion state in the dispersion for a long time, or it is sometimes difficult to obtain excellent resistance to light. On the other hand, when the average particle size is too large, it is sometimes difficult to obtain good transparency of the dispersion. In the present invention, the fine particles of the water-insoluble colorant may consist of only the water-insoluble colorant, or may contain other compound than the water-insoluble colorant, for example, a specific polymer compound having an electron-withdrawing group. At this time, it is preferable that the particles of the water-insoluble colorant are composed of a solid solution of two or more kinds of pigments. However, a mixture of a portion having a crystalline structure and another portion having a non-crystalline structure may be present in the particle. Further, the particle may be composed of a core to which the above dispersing agent (a polymer compound, a surfactant or the like) is adhered so as to cover the core therewith, a component of the core being water-insoluble colorants or a mixture of the pigments and another compound.

The water-insoluble colorant that is used in the present invention may be contained in resin fine particles or

inorganic fine particles. At this time, it is preferable that the resin fine particles and inorganic fine particles are a non-colored component in order not to degrade a tint of the water-insoluble colorant. An average particle size of the resin fine particles or the inorganic fine particles is preferably from 6 nm to 200 nm. When the dispersion of the water-insoluble colorant is used as an inkjet recording liquid, the average particle size is more preferably from 6 nm to 150 nm, and especially preferably from 6 nm to 100 nm, from a viewpoint of obtaining excellent discharge (emission) stability.

[Average particle diameter according to a dynamic light-scattering method]

In the present invention, a dispersion state of the water-insoluble colorant may be also evaluated according to a dynamic light-scattering method. Thereby, an average particle diameter of the water-insoluble colorant can be calculated. The principle of evaluation is detailed below. Particles with the size ranging from about 1 nm to about 5 μm are momentarily changing their position and direction in Brownian motion such as translation and rotation. Accordingly, by irradiating a laser light to these particles and then detecting the resultant scattered light, fluctuation of the scattered light intensity depending on Brownian motion is observed. By observing the fluctuation of the scattered light intensity with respect to time, a speed (diffusion coefficient) of the particles in Brownian motion is calculated and the size of the particles can be known.

Applying the above principle, an average particle diameter of the water-insoluble colorant is measured. When the measured value is similar to the average particle diameter that is obtained from the electron microscope observation, in particular TEM observation, it means that the particles in a liquid are in mono dispersion (the situation in which particles are neither bonding nor aggregating to each other). Namely, particles are each dispersed in a dispersion medium with keeping an interval between particles, so that they can move singly and independently.

In the present invention, it is preferable that the arithmetic average particle diameter of the water-insoluble colorant in a dispersion medium measured in accordance with the dynamic light-scattering method is almost the same level as the average particle diameter obtained from TEM observation. In other words, it is preferable that a mono dispersion of the water-insoluble colorant fine particles in a dispersion medium can be attained. The arithmetic average particle size of the water-insoluble colorant in the dispersion medium according to the dynamic light-scattering method is preferably 50 nm or less, and more preferably 45 nm or less, and especially preferably 40 nm or less. Thus, a preferable range of the arithmetic average particle size is not substantially different from that obtained from TEM observation. In the present invention, unless indicated otherwise, the simply described "average particle diameter" means the aforementioned average diameter.

Further, it is preferable that a particle diameter distribution of the water-insoluble colorant dispersed in a dispersion medium in the present invention is monodispersion. Monodisperse particles are advantageous because adverse influence owing to light-scatting at large-sized particles can be reduced. In addition, when aggregate is formed by using the dispersion at printing, recording, or the like, the mono dispersion has advantages to control of a filling form of the formed aggregate or the like. As an indicator that is used to evaluate dispersity of the dispersion, for example, there can be used a difference between the diameter (D90) of particles that occupy 90% by number and the diameter (D10) of particles that occupy 10% by number of the total particle numbers, in the following integral equation of the particle diameter distribution function with respect to the arithmetic average particle diameter that is obtained according to the dynamic light-scattering method:

$$dG = f(D) \times d(D)$$

(Where, G represents the number of particles; and D represents a primary particle size.) In the present invention, the above difference between the size (D90) and the size (D10) is preferably 45 nm or less, and more preferably from 1 nm to 30 nm, and especially preferably from 1 nm to 20 nm. It should be noted that the above method can be suitably used in the particle diameter distribution curve that is prepared by using the particle diameter that is obtained from observation by using the above-described electron microscope.

Further, as another indicator that is used to evaluate dispersity, there can be also used a ratio of a volume average particle size (Mv) to a number average particle size (Mn), namely a ratio of (Mv)/(Mn). Both Mv and Mn are obtained by the dynamic light-scattering method. In the dispersion of the present invention, the aforementioned ratio (Mv)/(Mn) is preferably 1.7 or less, and more preferably 1.6 or less, and still more preferably 1.5 or less.

In the dispersion of the present invention, particles of the water-insoluble colorant are dispersed in a medium containing water. In one embodiment, when a peak intensity of light absorbance in the visible light wavelength region (for example, about 380 nm to about 700 nm) is 1, the light-scattering intensity is preferably 30,000 cps or less. This means that even though the particles contain the water-insoluble colorant in such an amount that a peak intensity of

light absorbance in the visible light wavelength region becomes 1, the light-scattering intensity is as low as 30,000 cps or less. When the light-scattering intensity is low, high transparency can be recognized in the above dispersion, or a recording liquid in which the dispersion is used. In the conventional pigment ink, when a peak intensity of light absorbance in the visible light wavelength region is 1, the light-scattering intensity is in the range of about 150,000 cps to about 250,000 cps, for example, in the case where an average particle size of the colorant in the ink is about 150 nm. For this reason, high visible transparency is understood.

In the present invention, it is preferable that the specific polymer compound or surfactant that includes the electron-withdrawing group are contained into a solution of the water-insoluble colorant and/or an aqueous medium; that a dispersion in which fine particles of the water-insoluble colorant are dispersed into a medium containing water by allowing the above resultant solution and an aqueous medium to mix each other; that the fine particles of the water-insoluble colorant of this dispersion are aggregated allowing re-dispersion to obtain flocculation; and that the flocculation is separated from the dispersion. It is also preferable that the re-dispersing property is endowed to the flocculation, and that the aggregation is dissociated and re-dispersed into a re-dispersion medium. As thus described, it is preferred because the above re-dispersion medium is made to a medium containing desired water as an occasion demand, and the dispersion after the re-dispersion can be changed into a water dispersion endowing a desired performance.

In the present invention, gases such as air or oxygen may coexist at the time of generation of particles. For example, these gases may be used as an oxidant. The embodiment of making the gases coexist is not particularly limited. For example, the gases may be dissolved in a liquid of the water-insoluble colorant and/or an aqueous medium in advance. Alternatively, the gases may be introduced into another medium different from these liquids, and followed by contacting said another medium with these liquids.

In the preparation of the dispersion of the present invention, it is preferable to introduce a heating process. Regarding with the significance of introducing the heating process, there are the effect described in Japanese Patent No. 3936558 and being representative by so-called Ostwald maturing. It is preferable that the above heating is carried out at from 30°C to 110°C, and that the heating time is from 10 to 360 minutes. It is also preferable that the heating treatment is carried out after allowing the water-insoluble colorant solution and the aqueous medium to mix each other to obtain the dispersion among which the fine particles are dispersed.

In the production method of the dispersion in the present invention, the process that the particles of the water-insoluble colorant are aggregated allowing re-dispersion to obtain flocculation and that the flocculation is separated from the dispersion will be explained in detail.

In the aqueous dispersion of the present invention, a mixture having particles of the water-insoluble colorant generated is subjected to an acid treatment that is specifically described below. Preferably, in the acid treatment, the acid is added during formation of aggregate, to form aggregate of particles. The acid-using treatment preferably includes steps of aggregation of pigment particles with an acid, separation of the resultant aggregate from a solvent (dispersing medium), concentration, solvent removal and desalting (deacidification). By making a system acidic, it enables to reduce electrostatic repulsion of particles owing to a hydrophilic portion of the acid, and to aggregate the pigment particles.

As the acid that is used in the aggregation of particles, any acid may be used so long as the compound is able to make hardly precipitating fine-particles in the aqueous dispersion aggregate in a form such as slurry, paste, powder-like, granular, cake-like (bulk), sheet-like, short (discontinuous) fiber-like or flake-like form, and able to efficiently separate the resultant aggregate from a solvent according to an ordinary separation method. As the acid, it is preferred to use an acid that forms a water-soluble salt with alkali. It is more preferable that the acid itself has a high solubility to water. In order to conduct desalting as efficiently as possible, it is preferable that the amount of acid used is as small as possible so long as the particles aggregate in the amount of the acid. Examples of the acid include hydrochloric acid, sulfuric acid, nitric acid, acetic acid, phosphoric acid, trifluoroacetic acid, dichloroacetic acid, and methane sulfonic acid. Of these acids, hydrochloric acid, acetic acid, and sulfuric acid are particularly preferable. An aqueous dispersion of colorant particles that has been processed with the acid so as to be easily separable can be easily separated by using a centrifugal separator, a filter, a slurry liquid-solid separator or the like. At this time, a degree of desalting or solvent removal can be controlled by adding diluent water, or by increasing frequency of decantation and washing. Regarding with the aggregation method, inorganic compounds such as alum or so and polymer aggregation agents may be used in combination.

The thus-obtained aggregate can be used as a paste or slurry as it is, each of which has high water content. If necessary, it is also possible to use fine powder that is obtained by drying the paste or slurry according to a drying method such as a spray-dry method, centrifugal separation drying method, a filter drying method, or a freeze-drying method.

In the production method of the present invention, the process that the aggregation of the flocculation is dissociated and re-dispersed into a re-dispersion medium will be explained in detail. In the dispersion of the present invention, it is preferred to re-disperse the flocculation (soft aggregate). As the re-dispersion treatment, there can be exemplified an alkali treatment. Namely, it is preferred to neutralize the particles aggregated with using the acid, with alkali, and then to re-disperse the particles into water or the like with maintenance of a primary particle size at the time of deposition of the particles. Since desalting and solvent removal have been already conducted, a concentrated-base of aqueous

dispersion containing a little impurity can be obtained. As the alkali used herein, any alkali can be used, so long as they act as a neutralizing agent for a dispersing agent having an acidic hydrophilic portion and enhance solubility to water. Specific examples of the alkali include various kinds of organic amines such as aminomethylpropanol, dimethylaminopropanol, dimethylethanolamine, ditehyltriamine, monoethanolamine, diethanolamine, triethanolamine, butyldiethanolamine, and morpholine; alkali metal hydroxides such as sodium hydroxide, lithium hydroxide, and potassium hydroxide; and ammonia. They may be used solely or in a combination of two or more compounds.

The amount of the alkali used is not particularly limited within the range in which the aggregated particles can be re-dispersed stably in water. However, when the dispersion is used for end use such as a printing ink or inkjet printer ink, the alkali sometimes causes corrosion of various kinds of parts. Therefore, it is preferred to use the alkali in such an amount that pH is within the range of 6 to 12, and more preferably from 7 to 11.

Further, in accordance with the dispersing agent that is used in the time of deposition of particles, a method different from the above alkali treatment may be used. Examples of the method include a re-dispersion treatment using a low molecular dispersing agent or polymer dispersing agent described above. At this time, means for a dispersion treatment that are known from the past may be used. For example, it is possible to use a dispersing machine such as sand mill, bead mill, ball mill, and Dissolver, or an ultrasonic treatment. These re-dispersion treatments may be used in combination with the above alkali treatment.

When the aggregated particles are re-dispersed, re-dispersion can be easily performed by adding a water-soluble organic solvent as a medium for the re-dispersion. The organic solvent used is not particularly limited. Specific examples of the organic solvent include lower alcohols such as methanol, ethanol, *n*-propanol, isopropanol, *n*-butanol, isobutanol, and *tert*-butanol; aliphatic ketones such as acetone, methylethylketone, methylisobutylketone, and diacetone alcohol; ethylene glycol, diethylene glycol, triethylene glycol, glycerol, propylene glycol, ethylene glycol monomethyl or monoethyl ether, propylene glycol monomethyl ether, dipropylene glycol methyl ether, tripropylene glycol methyl ether, ethylene glycol phenyl ether, propylene glycol phenyl ether, diethylene glycol monomethyl or monoethyl ether, diethylene glycol monobutyl ether, triethylene glycol monomethyl or monoethyl ether, N-methylpyrrolidone, 2-pyrrolidone, N,N-dimethylformamide, dimethylimidazolidinone, dimethylsulfoxide, and N,N-dimethylacetoamide. These solvents may be used singly or in a combination of two or more compounds. When colorant particles are re-dispersed to prepare an aqueous dispersion thereof, the water content is preferably in the range of 99 to 20% by mass and, more preferably from 95 to 30% by mass of the aqueous dispersion respectively. The content of the water-soluble organic solvent is preferably in the range of 50 to 0.1 % by mass and, more preferably from 30 to 0.05% by mass of the aqueous dispersion respectively.

When water, the above-described alkali and water-soluble organic solvent are added to the aggregated particles, if necessary, a stirrer, a mixer, a dispersing machine (such as a sand mill, a beads mill, a ball mill, a dissolver) or a ultrasonic dispersing machine may be used. When a paste or slurry of a water-insoluble colorant which is high in water content is used, addition of water is unnecessary. Further, heating, cooling, distillation or the like may be conducted for the purpose of enhancing efficiency of re-dispersion and another purpose of removing unnecessary water-soluble organic solvent, or an excessive alkali or the like.

The recording liquid of the present invention may be prepared by using the above dispersion of the present invention, and mixing the dispersion with each of prescribed components such as a polymer compound, a surfactant and an aqueous solvent, and then uniformly dissolving or dispersing them. It is preferable that the recording liquid of the present invention contains the above water-insoluble colorant in an amount of 0.1% by mass to 15% by mass of the recording liquid. When an excessive amount of polymer compounds or other additives are contained in the prepared ink, these materials may be properly removed according to a method such as centrifugal separation and dialysis, thereby to re-prepare the ink composition. The recording liquid of the present invention may be used alone. Alternatively, the recording liquid may be combined with another ink to prepare an ink set of the present invention.

The recording liquid of the present invention may be used in various image-forming methods and apparatuses, such as a variety of printing methods, inkjet process, and electrophotography. Imaging can be performed according to an image-forming method using the apparatuses. Further, according to the inkjet process, fine patterns may be formed, or dosage of drugs may be conducted.

It is preferable that the recording liquid of the present invention is used as an inkjet recording liquid. It is also preferred to prepare an ink set using the inkjet recording liquid. It is also preferred to prepare a printed article having an image recorded by use of the recording liquid or the ink set of the present invention and tools that can provide the recording liquid with a recording medium. It is more preferred to prepare a printed article having an image with a shading nuance adjusted by the means that has a function to adjust an applying amount or concentration of the recording liquid. It is also preferable that the recording liquid or ink set is used in an image-forming method that includes a process of recording an image by providing the recording liquid with a medium. Further, according to the present invention, it is also possible to produce an image-forming apparatus having the means for recording an image by using the above recording liquid or ink set and providing the recording liquid with a medium.

The dispersion of the present invention having superior performance can realize an image recording of high

quality and high vividness when the dispersion is used as ink. In addition, it can be suitably used as a material for forming color filters.

According to the present invention, it is possible to provide a dispersion containing fine particles of a water-insoluble colorant of nanometer size having minute and uniform particle diameters and a production method of the dispersion. Further, according to the present invention, it is possible to provide a dispersion of a water-insoluble colorant a production method of the water-insoluble colorant, fine particles of the water-insoluble colorant, a dispersing agent for the water-insoluble colorant, and a recording liquid, an ink set, a printed article, an image forming method and an image forming apparatus with the use of these each capable of making kinds of a polymer compounds for stably dispersing the water-insoluble colorant abundant, and enhancing storage stability, discharging property and transparency of an ink prepared from the dispersion.

In the dispersion of the present invention, the fine particles of the water-insoluble colorant are made small to fine down to nanometer size, and the particle diameters are uniform. Accordingly, the present invention achieves a supreme effect of maintaining a stable dispersed state of the fine particles for a long term by suppressing an aggregation. Further, the polymer dispersing agent of the present invention enables to stably disperse fine particles of a water-insoluble colorant. Furthermore, the present invention enables to use many kinds of the polymer compounds for dispersing the water-insoluble colorant. Furthermore, the present invention enables to enhance storage stability, discharging property and transparency of an ink prepared from the dispersion containing the water-insoluble colorant. In addition, the recording liquid, the ink set and the printed article using the dispersion of a water-insoluble colorant of the present invention have high transparency and color fastness to light compatibly, and the recording liquid and the ink set are superior in discharging property. In addition, the image forming method and the image forming apparatus with the use of the recording liquid or the ink set of the present invention enable to form images of high accuracy and high quality.

## EXAMPLES

The present invention will be described in more detail based on the following examples, but the invention is not intended to be limited thereto. In the following examples, the terms "part(s)" and "%" are values by mass, unless otherwise specified. Average particle size of each of the dispersion s according to the dynamic scattering method is measured by using LB-500 (trade name, manufactured by HORIBA, Ltd.) after dilution with ion-exchanged water. At this time, inputting 1.600 as the volume refractive index, and also inputting 1.333 as the refractive index of ion-exchange water in the dispersant, a volume-average particle size Mv of each of the dispersions, and a number-average particle size Mn thereof are measured. Further, evaluation of the average particle diameter from observation of the transmission electron microscope (TEM) was conducted by dropping a diluted dispersion onto a Cu 200 mesh to which a carbon film is attached, and then dried, and thereafter measuring the major axis of each of 300 particles that were isolated and not piled, from images of the particles photographed to 100,000 times using TEM (1200EX, manufactured by JEOL Ltd.), thereby calculating an average value as an average particle diameter. Hereinafter, the average particle diameter calculated from TEM observation is described as a TEM average particle size.

< Scheme 1 >

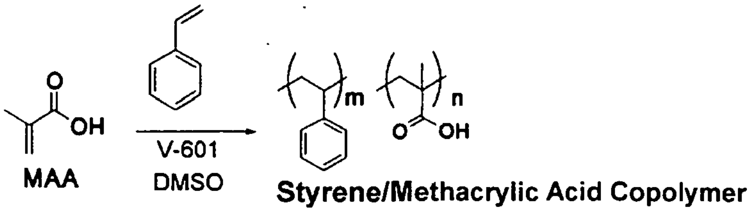


< Scheme 2 >

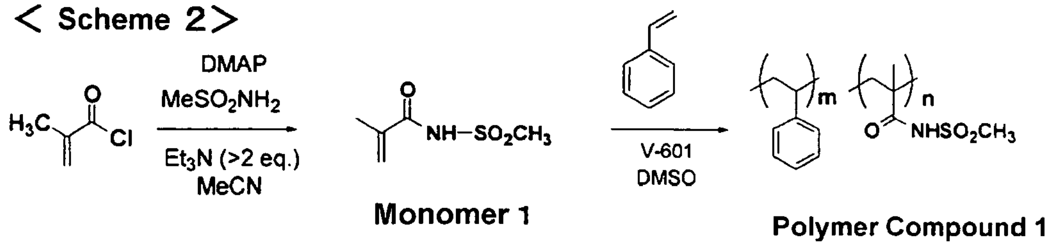


< Scheme 3 >

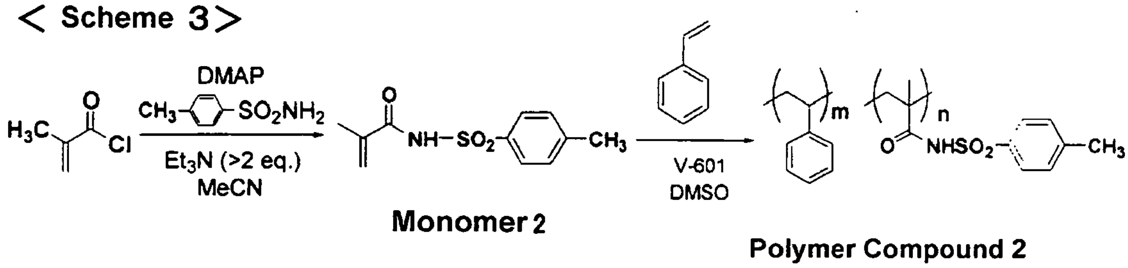


<Scheme 4>

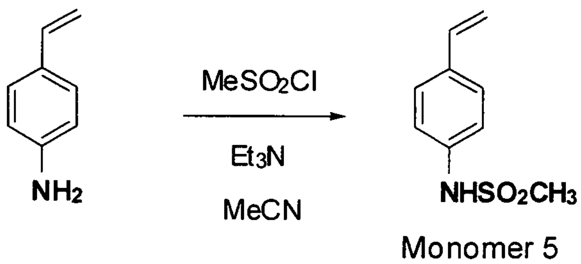


Synthesis of Monomer 1

Entering 95.1 g (1.0 mol) of methane sulfonamide, 500 ml of acetonitrile, 308 ml (2.40 mol) of triethylamine, and 12.2 g (0.010 mol) of 4-dimethylaminopyridine into a 2-L three-neck flask, and while stirring the resultant solution being cooled by ice and under a nitrogen gas flow, 120 g (1.15 mol) of methacryl chloride was dropped into the solution over one hour. After completing the dropping and after stirring the mixture for 5 hours as it was, the triethylamine hydrochloride generated was removed by filtration. Adding water and a concentrated hydrochloric acid into the filtrate liquid to make the solution acidic, the filtrate was extracted using ethyl acetate. After washing the thus-collected organic layer using water and saturated sodium chloride solution, the organic layer was dried over magnesium sulfate. Then, after filtrating out the inorganic salt, it was concentrated by means of a rotary evaporator. Onto the residue obtained, 500 ml of 2-propanol was added and, as a result, white crystals precipitated. After filtrating again, the crystals were washed with 2-propanol to obtain 51.4 g of Monomer 1 as white crystals. (Yield: 31 %) $^1$H-NMR (300 MHz, $CDCl_3$) $\delta$ = 2.0 (br.s, 3H), 3.38 (s, 3H), 5.68-5.71 (m, 1H), 5.92 (br.s, 1 H), 8.4-8.6 (br.1H)

Synthesis of Monomer 2

In the same manner as the synthesis of Monomer 1, 23 g of Monomer 2 was obtained from 47 g (0.27 mol) of p-toluene sulfonamide. (Yield: 35%) $^1$H-NMR (300 MHz, in $CDCl_3$) $\delta$ = 1.91 (br.s, 3H), 2.48 (s, 3H), 5.57-5.5.61 (m, 1H),

5.82-5.85 (m, 1H), 7.37 (br.d, J = 9.3 Hz, 2H), 8.0 (br.d, J = 9.3 Hz, 2H).

Synthesis of Monomer 3

Monomer 3 was synthesized in accordance with a document (Analytical Chemistry; vol. 56, No. 9; pp. 721-728 (2007)). Without isolating Monomer 3, it was used in the next polymerization reaction immediately.

Monomer 4

A commercial product 4-vinylbenzene sulfinic acid sodium (product code: V0074) (trade name) manufactured by Tokyo Chemical Industry Co., Ltd. was used as Monomer 4.

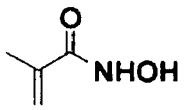

Monomer3

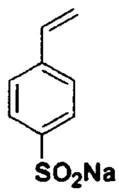

Monomer4

Synthesis of Monomer 5

Entering 20.0 g (0.168 mol) of *p*-aminostyrene, 100 ml of acetonitrile, and 28.2 ml (0.201 mol) of triethylamine into a 500-mL three-neck flask, and while stirring the resultant liquid being cooled by ice and under a nitrogen gas flow, 21.1 g (0.184 mol) of methacryl chloride was dropped into the solution over 30 minutes. After completing the dropping and after stirring the mixture for 5 hours as it was, the resultant mixture was left standing overnight. The resultant triethylamine hydrochloride was removed by filtration. Adding water and a concentrated hydrochloric acid into the filtrate liquid to make the solution acidic, the filtrate was extracted with ethyl acetate. After washing the thus-collected organic layer using water and saturated sodium chloride solution, the organic layer was dried over magnesium sulfate. Then, after filtrating out the inorganic salt, it was concentrated by means of a rotary evaporator. Onto the residue obtained, hexane and ethyl acetate were added and, as a result, white crystals precipitated. After filtrating again, 22.0 g of Monomer 5 was obtained as white crystals. (Yield: 67 %) $^1$H-NMR (300 MHz, dmso-d6) $\delta$ = 3.01 (br.s, 3H), 5.22 (br.d, 1H,J = 11.7 Hz), 5.76 (br.d, 1H,J = 18.0 Hz), 6.75 (br.dd, 1H,J = 11.7, 18.0 Hz), 7.20 (br.d, 2H,J = 9.0 Hz), 7.46 (br.d, 2H, 9.0 Hz), 9.84 (br.s, 1H)

Synthesis of Monomer 6

<Scheme 5>

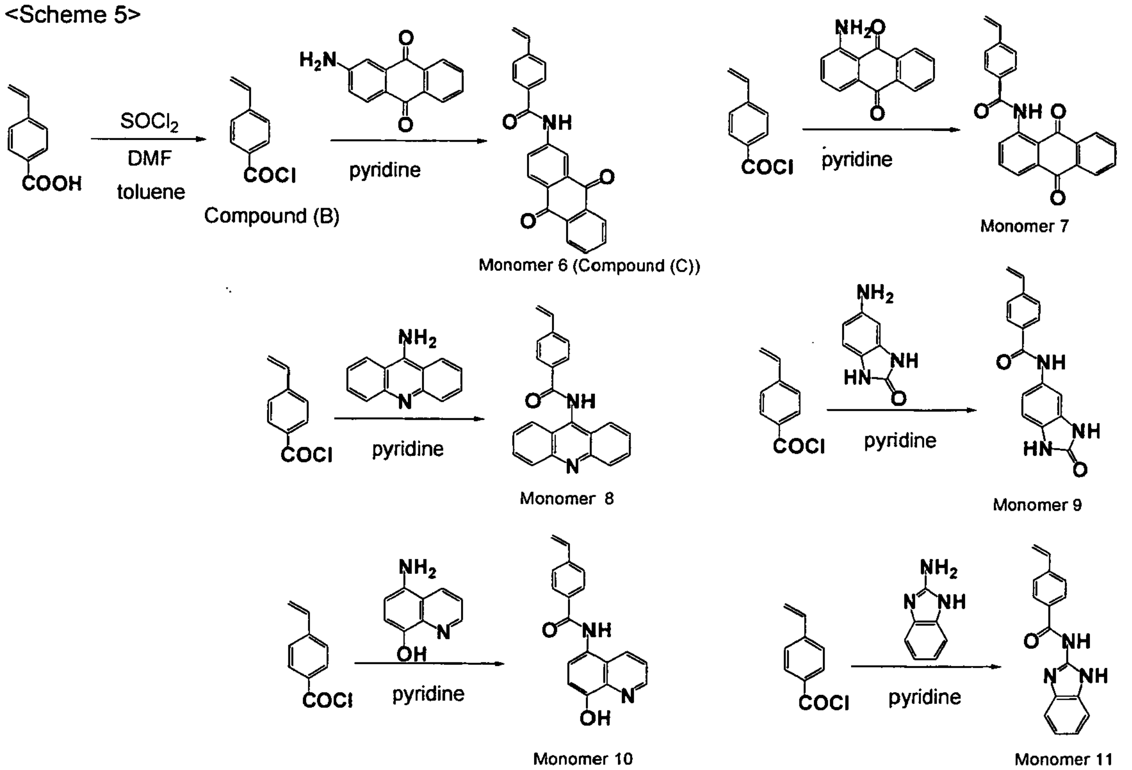


Compound (B)

Monomer 6 (Compound (C))

Monomer 7

Monomer 8

Monomer 9

Monomer 10

Monomer 11

Entering 16.6 g (0.112 mol) of 4-vinyl benzoic acid, 80 ml of toluene, and two drops of N,N-dimethylformamide into a 200-ml three-neck flask, and while stirring under the room temperature, 9.7 ml (0.14 mol) of thionyl chloride was added, followed by stirring the resultant under heating at 60°C for 2 hours. Then, inside the system was cooled down to around 40°C, and the toluene and the excess thionyl chloride were removed under the reduced pressure to obtain Compound (B). Without refining compound (B) furthermore, it was used in the next reaction immediately.

Entering 22.5 g (0.101 mol) of 2-aminoanthraquinone and 110 ml of pyridine into a 500-ml three-neck flask, and while stirring the resultant under cooling by ice, the above compound (B) was dropped down slowly through a dropping funnel. After stirring the resultant under cooling by ice 30 minutes, it was further stirred under heating at 60°C for 3 hours. Then, it was cooled down to the room temperature, and while stirring the resultant reaction mixture, water was added. Crude crystals generated were separated by filtration, and after washing by pouring water and methanol, the collected crude crystals were entered into a 500-ml three-neck flask, and adding 500 ml of methanol, the resultant mixture was stirred under heating at 60°C. Afterwards, the crystals were separated by filtration, washed by methanol, and dried to obtain 21.5 g of Compound (C). (Yield: 75 %) $^1$H-NMR (300 MHz, $CDCl_3$) δ = 5.48 (br.d, 1H,J = 12.0 Hz), 6.07 (br.d, 1H,J = 17.4 Hz), 6.89 (br.dd, 1H,J = 12.0, 17.4 Hz), 7.78 (br.d, 2H,J = 8.4 Hz), 7.94-8.05 (m, 4H), 8.08 (br.d, 2H,J = 8.4 Hz), 8.19-8.24 (m, 1H), 8.29-8.34 (m, 1H), 9.19 (dd, 1H,J = 1.5, 6.9 Hz), 13.1 (br.s, 1H)

Synthesis of Monomer 7

In the same manner as the synthesis of Monomer 6, 20.2 g of Monomer 7 was obtained from 22.5 g (0.101 mol) of 1-aminoanthraquinone. (Yield: 71 %) $^1$H-NMR (300 MHz, $CDCl_3$) δ = 5.46 (br.d, 1H,J = 12.0 Hz), 6.04 (br.d, 1H, J = 17.7 Hz), 6.92 (br.dd, 1H,J = 12.0, 17.7 Hz), 7.72 (br.d, 2H,J = 9.0 Hz), 7.92-8.03 (m, 2H), 8.14 (br.d, 2H,J = 9.0 Hz), 8.34 (br.d, 2H,J = 9.0 Hz), 8.49 (br.d, 2H,J = 9.0 Hz), 8.80 (br.d, 2H,J = 9.0 Hz), 10.1 (br.s, 1H)

Synthesis of Monomer 8

In the same manner as the synthesis of Monomer 6, Monomer 8 was obtained. $^1$H-NMR (300 MHz, dmso-$d_6$) δ = 5.40 (d, 1H,J = 11.4 Hz), 5.97 (d, 1H,J = 17.7 Hz), 6.81 (dd, 1H,J = 10.9, 17.4 Hz), 7.33-7.41 (m, 1H), 7.58 (d, 2H, J = 8.4 Hz), 7.68-7.76 (m, 1H), 7.84 (d, 1H,J = 8.4 Hz), 7.92 (d, 2H,J = 8.4 Hz), 8.44 (d, 2H,J = 8.4 Hz)

Synthesis of Monomer 9

In the same manner as the synthesis of Monomer 6, Monomer 9 was obtained. $^1$H-NMR (300 MHz, dmso-$d_6$) δ = 5.39 (d, 1H,J = 11.7 Hz), 5.98 (d, 1H,J = 17.7 Hz), 6.82 (dd, 1H,J = 11.7, 17.7 Hz), 6.88 (d, 1H,J = 8.4 Hz), 7.24-7.29 (m, 1H), 7.55-7.61 (m, 1H), 7.62 (d, 2H,J = 8.4 Hz), 7.94 (d, 2H,J = 8.4 Hz), 10.1 (s, 1H), 10.54 (s, 1H), 10.62 (s, 1H)

Synthesis of Monomer 10

In the same manner as the synthesis of Monomer 6, Monomer 10 was obtained. $^1$H-NMR (300 MHz, dmso-$d_b$) δ = 5.42 (d, 1H,J = 11.7 Hz), 6.02 (d, 1H,J = 17.7 Hz), 6.85 (dd, 1H,J = 11.7, 17.7 Hz), 7.11 (d, 1H,J = 8.4 Hz), 7.46 (d, 1H,J = 8.4 Hz), 7.69 (dd, 1J,J = 11.7, 17.7 Hz), 7.66 (br.d, 2H,J = 8.4 Hz), 8.06 (d, 2H,J = 8.4 Hz), 8.06 (d, 2H,J = 8.4 Hz), 8.18-8.29 (m, 1H), 8.87-8.91 (m, 1H)

Synthesis of Monomer 11

In the same manner as the synthesis of Monomer 6, Monomer 11 was obtained. $^1$H-NMR (300 MHz; dmso-$d_6$) δ = 5.42 (d, 1H,J =1 1.7 Hz), 6.01 (d, 1H,J = 17.7 Hz), 6.84 (dd, 1H,J = 11.7, 17.7 Hz), 7.10-7.18 (m, 1H), 7.28-7.40 (m, 1H), 7.43-7.50 (m, 1H), 7.63 (d, 2H,J = 8.4 Hz), 8.13 (d, 2H,J = 8.4 Hz), 12.3 (br.s, 1H)

Synthesis of Monomer 12

< Scheme 6 >

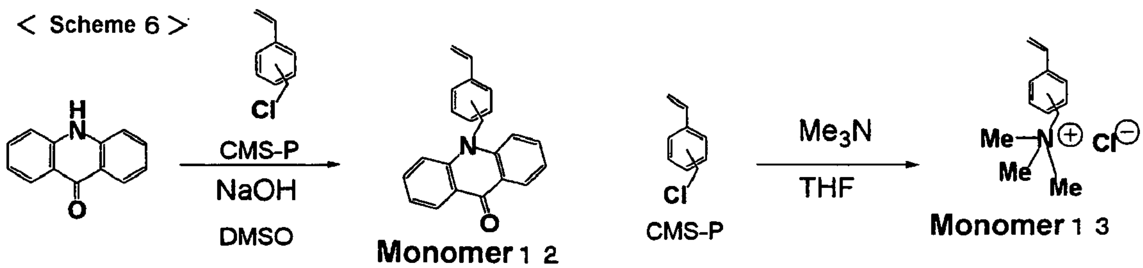


Monomer 12

Monomer 13

Entering 150 g (0.77 mol) of acridone, 840 ml of dimethylsulfoxide, and 33.9 g (0.85 mol) of sodium hydroxide into a 2-L three-neck flask, and while stirring the resultant under the room temperature, 176 g (1.15 mol) of CMS-P was dropped over 10 minutes or longer. Then, the resultant reaction mixture was further stirred under heating at 60°C for 8 hours. Afterwards, inside the system was cooled down to around room temperature, followed by adding 600 ml of 1:1 methanol/water mixed solution; and further stirred the resultant for 1 hour. Crude crystals generated were separated by filtration and after washing by pouring 1 L of 1:1 methanol/water mixed solution, further washing by pouring 1 L of methanol and drying, to obtain 175 g of Monomer 12. (Yield: 74 %) $^1$H-NMR (300 MHz, dmso-$d_6$) δ = 5.24(dd, 1H,J = 5.4, 11.7 Hz), 5.72-5.8 (m, 1H), 5.82 (br.s, 2H), 6.69 (dd, 1H,J = 10.8, 17.4 Hz), 6.95 (br.d, J = 8.4 Hz), 7.14 (br.d, J = 7.2 Hz), 7.23-7.46 (m, 4H), 7.65 (br.d, 2H,J = 9.8 Hz), 7.72-7.82 (m, 2H), 8.39 (br.d, 8.4 Hz)

Synthesis of Monomer 13

After entering 50 g (0.33 mol) of CMS-P, 71 g (0.36 mol) of trimethylamine 30% aqueous solution into a 500-ml three-neck flask, the resultant reaction mixture was stirred under heating at 80°C for 4 hours. Then, after removing the solvent under the reduced pressure condition, 200 ml of ethyl acetate was added and the resultant mixture was stirred under the room temperature. Crude crystals generated were separated by filtration, and after washing by pouring ethyl acetate, 35 g of Monomer 13 was obtained. (Yield: 51 %) $^1$H-NMR (300 MHz, dmso-$d_6$) δ = 3.06 (s, 9H), 4.60 (s, 2H), 5.38 (d, 1H,J = 11.7 Hz), 5.97 (d, 1H, J = 17.4 Hz), 6.81 (dd, 1H,J = 11.7, 17.4 Hz), 7.54 (d, 2H, J = 8.4 Hz), 7.62 (d, 2H,J = 8.4 Hz)

(Synthesis of Polymer Compound)

Synthesis of Styrene/Methacrylic Acid copolymer

Entering 75 g of dimethylsulfoxide into a 500-ml three-neck flask, and under a nitrogen gas flow, while heating the solution at an inner temperature of 80°C, a mixed solution prepared by allowing 70 g (0.67 mol) of styrene, 30 g (0.35 mol) of methacrylic acid (MAA), 1.77 g (7.67 mmol) of V-601 (trade name, dimethyl 2,2'-azobis(2-methyl propionate), and 150 g of dimethylsulfoxide was dropped over 2 hours.
After completing the dropping, the resultant was stirred under heating at 80°C for 2 hours as it was and then, 0.88 g (3.8 mmol) of V-601 and 2 g of dimethylsulfoxide solution were further added, followed by stirring at 90°C for 1 hour. Adding 148 g of dimethylsulfoxide onto the resultant mixture, it was cooled by left standing to obtain dimethylsulfoxide solution of styrene/methacrylate copolymer (acid value: 200; weight average molecular weight: 33,000).

Polymer Compound 1

Entering 1 g of dimethylsulfoxide into a 100-ml three-neck flask, and under a nitrogen gas flow, while heating the solution at an inner temperature of 80°C, a mixed solution prepared by allowing 7.35 g (70.3 mmol) of styrene, 7.65 g (46.9 mmol) of Monomer 1, 0.32 g (1.39 mmol) of V-601, and 20 g of dimethylsulfoxide was dropped over 2.5 hours. After completing the dropping, the resultant was stirred under heating at 80°C for 2 hours as it was and then, 0.14 g (0.61 mmol) of V-601 and 0.5 g of dimethylsulfoxide solution were further added, followed by stirring at 90°C for 1 hour. Adding 22 g of dimethylsulfoxide onto the resultant mixture, it was cooled by left standing to obtain dimethylsulfoxide solution of Styrene/Monomer 1 copolymer (acid value: 175; weight average molecular weight: 39,000). As thus described, Polymer Compound 1 having a group of atoms represented by formula (I).

Polymer Compound 2

Dimethylsulfoxide solution of Styrene/Monomer 2 copolymer (acid value: 175; weight average molecular weight: 40,000) was obtained in the same manner as the synthesis of Polymer Compound 1 using the styrene monomer and the Monomer 2. As thus described, Polymer Compound 2 having a group of atoms represented by formula (I) was obtained.

Polymer Compound 3

Dimethylsulfoxide solution of Styrene/Monomer 3 copolymer (acid value: 175; weight average molecular weight: 32,000) was obtained in the same manner as the synthesis of Polymer Compound 1 using the styrene monomer and the Monomer 3. As thus described, Polymer Compound 3 having a group of atoms represented by formula (I) was obtained.

Polymer Compound 4

Dimethylsulfoxide solution of Styrene/Monomer 4 copolymer (acid value: 175; weight average molecular weight: 18,000) was obtained in the same manner as the synthesis of Polymer Compound 1 using the styrene monomer and the Monomer 4. As thus described, Polymer Compound 4 having a group of atoms represented by formula (IV) was obtained.

Polymer Compound 5

Dimethylsulfoxide solution of Styrene/Monomer 5 copolymer (acid value: 175; weight average molecular weight: 12,000) was obtained in the same manner as the synthesis of Polymer Compound 1 using the styrene monomer and the Monomer 5.

<Scheme 7>

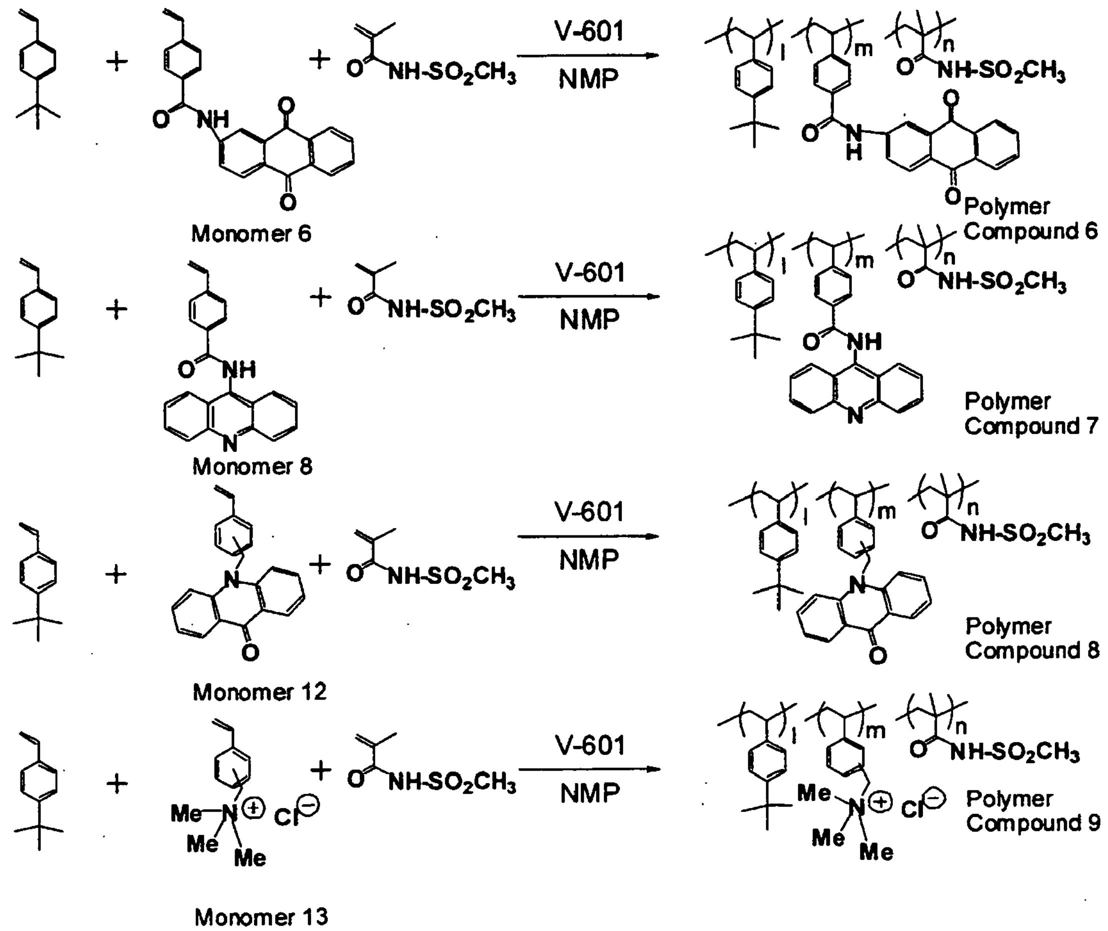


Polymer Compound 6

Under a nitrogen gas flow, 3.36 g (21.0 mmol) of *tert*-butylstyrene, 7.65 g (46.9 mmol) of Monomer 1, 5.00 g (14.1 mmol) of Monomer 5, and 80 g of *N*-methylpyrrolidone were entered into a 200-ml three-neck flask, and while heating at the inside temperature of 80°C, 0.27 g (1.17 mmol) of V-601 was added. After stirring at 80°C as it was, 0.27 g (1.17 mmol) of V-601 was added every 2 hours for 3 times, further stirring the resultant mixture at 90°C for 2 hours to obtain a dimethylsulfoxide of Polymer Compound 6 (acid value: 175; weight average molecular weight: 39,000) being *tert*-Butylstyrene/Monomer 6/Monomer 1 copolymer.

Polymer Compound 7

Polymer Compound 7 (acid value: 175; weight average molecular weight: 25,000) was obtained using the *tert*-butylstyrene monomer, the Monomer 8 and the Monomer 1 in the same manner as the synthesis of Polymer Compound 1.

Polymer Compound 8

Polymer Compound 8 (acid value: 175; weight average molecular weight: 25,000) was obtained using the *tert*-butylstyrene monomer, the Monomer 12 and the Monomer 1 in the same manner as the synthesis of Polymer Compound 1.

Polymer Compound 9

Polymer Compound 9 (acid value: 175; weight average molecular weight: 25,000) was obtained using the

*tert*-butylstyrene monomer, the Monomer 13 and the Monomer 1 in the same manner as the synthesis of Polymer Compound 1.

The pKa value of each monomer was calculated in accordance with a neutralization titration method in a system of tetrahydrofuran/water = 6:4 by means of an automatic titrator COM-2500 (trade name) manufactured by Hiranuma Sangyo Co., Ltd.

Table 1

| Monomer | pKa |
|---|---|
| Methacrylic acid | 3.98 |
| Monomer 1 | 3.96 |
| Monomer 2 | 3.96 |

From the above results, it was verified that the pKa value at dissociation portion of Monomers 1 and 2 was equivalent with that of methacrylic acid having a carboxy group.

<Scheme 8>

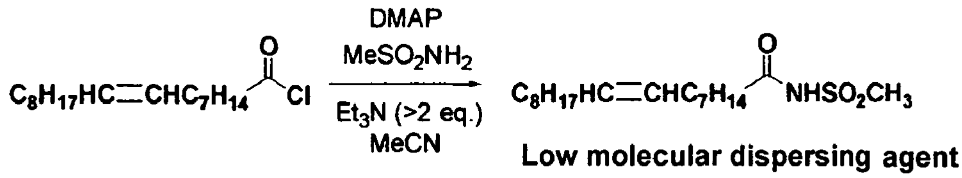


Low molecular dispersing agent 1

Synthesis of Low Molecular Dispersing Agent 1

Entering 15.0 g (0.158 mol) of methane sulfonamide, 150 ml of acetonitrile, 48.6 ml (0.347 mol) of triethylamine, and 1.93 g (0.016 mol) of 4-dimethylaminopyridine into a 500-mL three-neck flask, and while stirring the resultant being cooled by ice and under a nitrogen gas flow, 61.4 g (0.173 mol) of oleic chloride was dropped into the mixture over one hour. After completing the dropping and after stirring the mixture under heating for 5 hours as it was, the triethylamine hydrochloride generated was removed by filtration. Adding water and a concentrated hydrochloric acid into the filtrate liquid obtained to make the solution acidic, the filtrate was extracted with ethyl acetate. After washing the thus- collected organic layer using water and saturated sodium chloride solution, the organic layer was dried over magnesium sulfate. Then, after filtrating out the inorganic salt, it was concentrated by means of a rotary evaporator. Onto the residue obtained, 100 ml of 2-propanol was added and, as a result, white crystals precipitated. After filtrating again, the crystals were washed with 2-propanol to obtain 38.08 g of Low Molecular Dispersing Agent 1 as white crystals. (Yield: 67 %) $^1H$-NMR (300 MHz, $CDCl_3$) $\delta$ = 0.84(br.t, 3H), 1.15-1.34 (br, 20H), 1.38-1.52 (m, 2H), 1.86-2.02 (m, 4H), 2.24 (br.t, 2H), 3.20 (br.s, 3H), 5.26-5.34 (m, 2H), 11.6 (br.s, 1H)

(Example 1)

Entering 0.1 g of C. I. Pigment Yellow 74 (abbreviated as PY74 below) or C. I. Pigment Yellow 128 (abbreviated as PY128 below) into a 10-ml Vial Bottle, further adding 2.6 g of dimethylsulfoxide, 0.38 g of benzyltrimethylammonium hydroxide (described as $BnMe_3NOH$ below, 40% methanol solution, manufactured by Tokyo Chemical Industry Co., Ltd.) as alkali, and 0.4 g of Polymer Compound 1 (25 mass% dimethylsulfoxide solution), the resultant mixture was stirred while heating at 40°C, and was dissolved completely. The color of the solution was dark red. Entering 30 g of ion-exchange water into a 100 ml Vial Bottle, and while stirring with a stirrer, the pigments alkali solution of C. I. Pigment Yellow 74 was sucked up using Terumo Syringe (trade name) and 5 ml Terumo needle (trade name, aperture: 0.80 mm × length: 38 mm) both manufactured by Terumo Corporation, followed by discharging at a stretch. The resultant pigment dispersion liquid was extremely transparent. The particle diameter was measured using dynamic light scattering apparatus (LB-500 (trade name) manufactured by Horiba, Ltd.).

(Examples 2 to 7, and Comparative Example 1)

Examples 2 to 7, and Comparative Example 1 were carried out in the same manner as Example 1 except that Polymer Compound 1 in Example 1 was replaced to a polymer compound whose composition ratio of the monomers in

Polymer Compound 1 was changed, any one of Polymer Compounds 2 to 4, or the above mentioned Styrene/Methacrylic Acid copolymer (St/MAA) to obtain pigments dispersions. The measurement results of the particle diameter of the pigment dispersions in Comparative Example 1 and Examples 2 to 6 are described in Table 2 below.

Table 2

| | Polymer | Acid Value (Preparation of Ingredients) KOH mg/polymer 1g | Particle diameter (nm) | | m:n |
|---|---|---|---|---|---|
| | | | PY74 | PY128 | |
| Comparative example 1 | St/MAA | 200 | 40 | 52 | 70:30 |
| Example 1 (This invention) | Polymer compound 1 | 200 | 41 | 89 | 42:58 |
| Example 2 (This invention) | Polymer compound 1 | 175 | 36 | 51 | 49:51 |
| Example 3 (This invention) | Polymer compound 1 | 150 | 120 | 88 | 56:44 |
| Example 4 (This invention) | Polymer compound 2 | 175 | 60 | 90 | 75:25 |
| Example 5 (This invention) | Polymer compound 3 | 200 | 43 | 63 | 64:36 |
| Example 6 (This invention) | Polymer compound 4 | 175 | 39 | 52 | 41:59 |
| Example 7 (This invention) | Polymer compound 5 | 175 | 41 | 49 | 39:61 |

Due to the function of the specific polymer compound having an electron-withdrawing group (Polymer Compounds 1 to 5), despite that the pigment fine particles were of nanometer size, the dispersion of the present invention exhibited favorable dispersibility without causing any flocculation or so.

(Examples 8 to 11)

Examples 8 to 11 were carried out in the same manner as Example 1 except that C. I. Pigment Yellow 74 was replaced to C. I. Pigment Yellow 138, C. I. Pigment Yellow 155, C. I. Pigment Red 122 or C. I. Pigment Red 254 to obtain pigment dispersions. The pigment dispersions containing the pigment fine particles with small particle diameter as in the case of using the above-mentioned Pigment Yellows 74 and 128 could be obtained.

Table 3

| | Pigment | Polymer | Particle diameter (nm) |
|---|---|---|---|
| This invention 8 (This invention) | PY138 | Polymer compound | 1 43 |
| This invention 9 (This invention) | PY155 | Polymer compound | 1 47 |
| This invention 10 (This invention) | PR122 | Polymer compound | 1 44 |
| This invention 11 (This invention) | PR254 | Polymer compound | 1 53 |

(Comparative Example 2)

Entering 0.1 g of C. I. Pigment Yellow 74 into a 10-ml Vial Bottle, further adding 2.6 g of dimethylsulfoxide, and 0.38 g of $BnMe_3NOH$ (40% methanol solution, manufactured by Tokyo Chemical Co., Ltd.) as alkali, the resultant mixture was stirred while heating at 40°C, and was dissolved completely. The color of the solution was dark red. The pigments-dissolved solution is named as Liquid I. Then, entering 30 g of ion-exchange water, 0.4 g of Styrene/Methacrylic Acid copolymer (25 mass% dimethylsulfoxide solution), and 0.14 g of $BnMe_3NOH$ (40% methanol solution (manufactured by Tokyo Chemical Industry Co., Ltd.)) into a 100-ml Vial Bottle, the resultant mixture solution was stirred to dissolve completely. The resultant solution is named as Liquid II. While stirring Liquid II with a stirrer, the pigment alkali solution

Liquid I of C. I. Pigment Yellow 74 was sucked up using Terumo Syringe 5 ml (trade name) and Terumo needle (trade name, aperture: 0.80 mm × length: 38 mm) both manufactured by Terumo Corporation, followed by discharging at a stretch. The resultant pigment dispersion liquid was extremely transparent. The values of Mv and Mn of the dispersion are shown in Table 4.

(Example 12)

Example 12 was carried out in the same manner as Comparative Example 2 except that Styrene/Methacrylic Acid copolymer was replaced to Polymer Compound 1 to obtain pigments dispersion. The values of Mv and Mn of the dispersion are shown in Table 4.

Table 4

| | Particle diameter (Mv; nm) | Particle diameter (Mn; nm) | Mv/Mn |
|---|---|---|---|
| Comparative example 2 | 43 | 28 | 1.5 |
| Example 12 | 40 | 27 | 1.5 |

Even though Polymer Compound 1 having the group of atoms represented by formulae (I) or (V) and also having the repeating unit(s) represented by formulae (VI) or (VII) was added to the poor solvent (aqueous medium), the pigment dispersion which contained the pigment fine particles having sufficiently small particle size of nanometer size and also of uniform particle sizes could be obtained.

The pigment dispersions prepared in Comparative Examples 1 and 2, and in Examples 1 and 12 were left standing at the room temperature, and the particle diameter fluctuations after time lapses were measured.

Table 5

| | Pigment | Dispersing agent | Particle diameter (nm) | |
|---|---|---|---|---|
| | | | Fresh | 7 days |
| Comparative example 1 | PY74 | Styrene/Methacrylic Acid copolymer | 40 | 45 |
| Example 1 (This invention) | PY74 | Polymer compound 1 | 41 | 45 |
| Comparative example 2 | PY74 | Styrene/Methacrylic Acid copolymer | 43 | 46 |
| Example 12 (This invention) | PY74 | Polymer compound 1 | 40 | 42 |

It is apparent that the pigment dispersions of the present invention prepared using the above mentioned Polymer Compound 1 had high dispersion stability about their pigment fine particles and that the particle sizes are stable without enlarging for a long term.

(Example 13)

Adding 4.0 g of C. I. Pigment Red 122, 109.6 g of dimethylsulfoxide, and 11.73 g of tetramethylammonium hydroxide ($Me_4NOH$, 25% methanol solution) as alkali into 8.00 g of the above Polymer Compound 1 (25% by mass dimethylsulfoxide solution), the resultant mixture was stirred under heating at 40°C, and dissolved completely to obtain dark bluish violet pigments-dissolved solution.

Entering 1,200 g of ion-exchange water into a 5-L beaker, while stirring it under cooling by ice, the above mentioned pigments-dissolved solution was discharged immediately by means of pulsation-free liquid feeding pump NP-KX-500 (trade name) manufactured by NIHON SEIMITU KAGAKU CO., LTD at 100 ml/min to obtain pigment dispersion. After stirring the dispersion under cooling by ice for 30 minutes, it was delivered to a three-neck flask of 2 L, and heated at 50°C of an external temperature setting for 4 hours. Then, after cooling it down to a room temperature, pH was adjusted to 3.5 by dropping hydrochloric acid, and pigment particles were aggregated from the pigment dispersion. The resultant aggregates were filtrated under reduced pressure by using a membrane filter (average pore size: 0.2 μm), and then washed twice with ion-exchanged water. Adding 100 ml of acetone onto the resultant pigment powder, the mixture was stirred and filtrated to obtain desalted and solvent-less pigment particle dispersion powder a.

Subsequently, 3.92 g of ion-exchange water and 0.83 g of 15 % tetramethylammonium hydroxide aqueous solution were added onto 0.97 g of the powder so that the pigment content became 10 %, and the resultant mixture was subjected to an ultrasonic dispersion treatment by means of ultrasonic homogenizer US-150T manufactured by NIHONSEIKI KAISHA LTD for 9 hours to obtain high concentration Pigment Dispersion A. The average particle diameter of the Pigment Dispersion Liquid A measured in accordance with dynamic light scattering method was 22 nm (TEM average particle size: 20 nm) and the viscosity was 3.78m Pa•s.

(Examples 14 and 15)

Examples 14 and 15 were carried out in the same manner as Example 13 except that the pigment used in Example 13 was replaced to C. I. Pigment Red 254 or C. I. Pigment Violet 19 to obtain desalted and solvent-less pigment dispersion powders b and c. Then, the powders b and c were respectively added to the medium containing ion-exchange water and tetramethylammonium hydroxide in the same manner as Example 12, and the resultant was mixed and subjected to ultrasonic dispersion to obtain Pigment Dispersions B and C having a pigment content of 10 % respectively. The average particle diameter of the fine particles among the Pigment Dispersion B measured in accordance with dynamic light scattering method was 58 nm (TEM average particle diameter: 39 nm), and the average particle diameter of the fine particles among the Pigment Dispersion C was 48 nm (TEM average particle diameter: 40 nm).

(Comparative Example 3)

Allowing 20 g of C. I. Pigment Red 122, 1.3 g of sodium oleate, and 78.7 g ion-exchange water to mix each other, the resultant mixture was dispersed by means of a bead mill for 4 hours to obtain Pigment Dispersion D. The average particle diameter of the Pigment Dispersion D measured in accordance with dynamic light scattering method was 80.1 nm (TEM average particle diameter: 79.2 nm).

(Comparative Examples 4 and 5)

Comparative Examples 4 and 5 were carried out in the same manner as Comparative Example 3 except that C. I. Pigment Red 122 was replaced to C. I. Pigment Red 254 or C. I. Pigment Violet 19, and the resultant mixtures were dispersed by means of a bead mill for 4 hours to obtain Pigment Dispersions E and F. The average particle diameter of the Pigment Dispersion E measured in accordance with dynamic light scattering method was 87.5 nm (TEM average particle diameter: 84.9 nm). The average particle diameter of the Pigment Dispersion F measured in accordance with dynamic light scattering method was 85.0 nm (TEM average particle diameter: 93.4 nm).

(Example 16)

Entering 0.1 g of C. I. Pigment Yellow 74 into a 10-ml Vial Bottle, further adding 3.0 g of dimethylsulfoxide, 0.11 g of $BnMe_3NOH$ (40% methanol solution, manufactured by Tokyo Chemical Co., Ltd.) as alkali, and 0.20 g of polyvinyl pyrrolidone, the resultant mixture was stirred while heating at 40°C, and was dissolved completely. The color of the solution was dark red. The pigments-dissolved solution is named as Liquid I. Then, entering 29.7 g of ion-exchange water, 0.1 g of the above-described surfactant (Low Molecular Dispersing Agent 1), and 0.12 g of $BnMe_3NOH$ (40% methanol solution (manufactured by Tokyo Chemical Industries Co., Ltd.)) into a 50-ml Vial Bottle, the resultant mixture was stirred to dissolve completely. The resultant solution is named as Liquid II. While stirring Liquid II with a stirrer, the pigment alkali solution Liquid I of C. I. Pigment Yellow 74 was sucked up using Terumo Syringe 5 ml (trade name) and Terumo needle (trade name, aperture: 0.80 mm × length: 38 mm) both manufactured by Terumo Corporation, followed by discharging at a stretch. The resultant pigment dispersion was extremely transparent.

(Examples 17 to 19)

Examples 17 to 19 were carried out in the same manner as the Example 16 except that PY74 was replaced to PY128, PR122, and PR254 respectively and that alkali was replaced to 0.10 g of tetramethylammonium hydroxide (25% methanol solution) to obtain pigments dispersions. The average particle diameters were measured in accordance with dynamic light scattering. The measured results are shown in Table 6 below.

Table 6

| | Pigment | Particle diameter (nm) |
|---|---|---|
| Example 16 | PY74 | 42 |
| Example 17 | PY128 | 20 |
| Example 18 | PR122 | 25 |

(continued)

| | Pigment | Particle diameter (nm) |
|---|---|---|
| Example 19 | PR254 | 23 |

From the above results, it is apparent that the particle diameter of the fine particles contained in the dispersion of the present invention was extremely small and the dispersion had excellent transparency.

(Comparative Example 6)

Comparative Example 6 was carried out in the same manner as Example 12 except that the Styrene/Methacrylic Acid copolymer (acid value: 200, weight average molecular weight: 33,000) instead of Polymer Compound 1 to obtain Comparative Pigment Dispersion G. The average particle diameter of the Pigment Dispersion G measured in accordance with dynamic light scattering method was 28 nm (TEM average particle size: 25 nm).

(Preparation of Ink Composition)

(Example 20)

Using 50 mass parts of the Pigment Dispersion A (Example 13), after allowing the Dispersion A, 7.5 mass parts of diethylene glycol, 5 mass parts of glycerin, 5 mass parts of trimethylolpropane, 0.2 mass part s of Acetyrenol EH (trade name, manufactured by Kawaken Fine Chemicals Co., Ltd.) and 32.3 mass parts of ion-exchange water to mix each other, the resultant was subjected to ultrasonic treatment to obtain Ink Composition α.

(Comparative Example 7)

After allowing 50 mass parts of Dispersion G obtained in Comparative Example 6, 7.5 mass parts of diethylene glycol, 5 mass parts of glycerin, 5 mass parts of trimethylolpropane, 0.2 mass part s of Acetyrenol EH and 32.3 mass parts of ion-exchange water to mix each other, the resultant was subjected to ultrasonic treatment to obtain Ink Composition β.

(Examples 21 to 24)

Pigment dispersions were prepared in the same manner as Example 20 except that Polymer Compound 1 in the Pigment Dispersion A was replaced to Polymer Compounds 6, 7, 8 and 9, respectively, to obtain the pigment dispersions. Further, the pigment dispersions were subjected to the same treatment as in Example 20 to obtain the Ink Compositions γ to ζ.

[Evaluation of Storage Stability]

Regarding about the resultant Ink Compositions α to ζ, dynamic light scattering average particle diameter on the day of the preparation was measured. Then, the ink compositions were stored for a certain time under 60°C, followed by measuring the average particle diameter again in accordance with dynamic light scattering. The particle diameter after the time lapse in this occasion is described in Table 7.

Table 7

| | Pigment | Dispersing agent | Initial Particle Diameter | Particle Diameter after Time Lapse |
|---|---|---|---|---|
| Example 20 | PR122 | Polymer compound 1 | 22 nm | 35 nm |
| Example 21 | PR122 | Polymer compound 6 | 33 nm | 35 nm |
| Example 22 | PR122 | Polymer compound 7 | 35 nm | 40 nm |
| Example 23 | PR122 | Polymer compound 8 | 39 nm | 43 nm |
| Example 24 | PR122 | Polymer compound 9 | 34 nm | 39 nm |
| Comparative example 7 | PR122 | Styrene/Methacrylic Acid copolymer | 28 nm | 64 nm |

As shown by the results in the table, it is verified that the storage stabilities of the ink compositions prepared from the dispersion obtained using the Polymer Compounds 1, 7, 8, 9 and 10 in the present invention were extremely high.

(Preparation of Ink Composition)

(Examples 13a to 15a)

50 g of each of the pigment dispersions A to C was mixed with 7.5 g of diethylene glycol, 5 g of glycerol, 5 g trimethylolpropane, 0.2 g of Acetyrenol EH (trade name, manufactured by Kawaken Fine Chemical Co., Ltd.), and 32.3 g of ion-exchanged water to each obtain ink compositions A to C.

(Comparative Examples 3a to 5a)

Each of the pigment dispersions D to F was diluted with ion-exchanged water so as to get a concentrated liquid each having a pigment content of 10 % by mass. 50 g of each of the concentrated solutions was mixed with 7.5 g of diethylene glycol, 5 g of glycerol, 5 g of trimethylolpropane, 0.2 g of Acetyrenol EH, and 32.3 g of ion-exchanged water. Thereafter, the resultant mixture was subjected to an ultrasonic treatment to each obtain ink compositions D to F.

[Evaluation of Light Fastness]

A light fastness test was performed in such a manner and conditions that the ink composition A was spin coated on a glass substrate, and the resultant coating was set in a fade meter and irradiated by a xenon lamp with illuminance of 170,000 lux for 4 days. As a UV filter, there was disposed a TEMPAX filter (trade name, manufactured by Eagle Engineering; quality of material: TEMPAX glass (trade name, manufactured by SCHOTT)) between a light source and the sample. The following is the test results of the ink composition A. Residual rate of absorbance {(Absorbance after irradiation)/(Absorbance before irradiation) $\times$ 100}: 82.1 %

A fade test was performed in the same manner as the above, except that the ink composition D was spin coated on a glass substrate. The residual rate of absorbance of the ink composition D was 68.5%. From these results, it is understood that light fastness of the ink can be remarkably improved by the present invention.

[Evaluation of Transparency]

Evaluation of transparency was performed visibly according to the criterion described below with respect to the ink compositions A to C obtained in Examples 13a to 15a, and the ink compositions D to F obtained in Comparative Examples 3a to 5a. Further, each of the above-described ink compositions was coated with a bar coater on a 60 μm thick polyethylene terephthalate (PET) sheet (trade name: PPL / for laser printer (Xerox film OHP FILM), manufactured by Xerox Corporation), and was followed by drying to produce a printed article. Thereafter, the transparency of the printed area was evaluated visibly according to the criterion described below. 2: excellent 1: poor

[Evaluation of Discharging Property]

Each of the ink compositions A to F that were prepared as described above was charged into a cartridge of an inkjet printer PX-G930 (manufactured by Seiko-Epson). Using the inkjet printer, a solid image (reflection density: 1.0) was printed at the whole surface of an inkjet paper (a photographic base paper "Gloss" manufactured by Seiko-Epson) to count numbers of "white streaks" generated during print. Evaluation of discharging property was performed according to the criterion as set below: 3: There was no generation of white streaks (non-printed area) all over the printing surface. 2: Generation of white streaks was slightly observed, which was no problem in practice. 1: Generation of white streaks was frequently observed all over the printing surface, which was not an allowable quality in practice.

The results of each of evaluations are shown in Table 8.

Table 8

| Ink Composition | Transparency of Ink Composition | Transparency of Printed Area | Discharging Property of Ink |
|---|---|---|---|
| Example 13a | 2 | 2 | 3 |
| Example 14a | 2 | 2 | 2 |
| Example 15a | 2 | 2 | 3 |

(continued)

| Ink Composition | Transparency of Ink Composition | Transparency of Printed Area | Discharging Property of Ink |
|---|---|---|---|
| Comparative Example 3a | 1 | 1 | 1 |
| Comparative Example 4a | 1 | 2 | 1 |
| Comparative Example 5a | 1 | 1 | 1 |

As shown in Table 8, the ink composition (recording liquid) prepared using the dispersion of the present invention and the printed article using the ink composition had extremely high transparency and were superior in discharging property and color fastness to light.

[Preparation of Pigment Paste]

To the pigment powder a prepared in Example 13, tetramethylammonium hydroxide was added in a small amount necessary for neutralization, and was followed by addition of a small amount of No. 5 solvent (hereinafter referred to as solvent) and kneading with a super mixer ARE-250 (trade name, manufactured by Thinky corporation), thereby to obtain a pigment paste a. Similarly, pigment pastes b and c were obtained from the pigment powder b and c prepared in Examples 14 and 15, respectively. To the pigment pastes b and c, tetramethylhydroxide was added in a small amount necessary for neutralization, and was followed by addition of a small amount of the solvent and kneading with the super mixer ARE-250 (manufactured by Thinky corporation), thereby to obtain a pigment pastes b and c for use in this example.

Subsequently, hydrochloric acid was added drop-wise to the dispersions D to F prepared in Comparative Examples 3 to 5 to adjust pH to 3.5. Thereby pigment particles were aggregated from the dispersions. Thereafter, the thus-obtained aggregates were filtrated under reduced pressure by using a membrane filter (average pore size 0.2 μm), and then washed twice with ion-exchanged water. Thereby dispersions d to f containing desalted and solvent-removed pigment particles were obtained.

(Preparation of Resin Varnish)

Rosin-modified phenol resin (TESPOL 1355 (trade name) manufactured by Hitachi Kasei Polymer Co., Ltd.) was dissolved by heating in a mixed solvent of linseed oil and No. 5 solvent to obtain resin varnish A (resin concentration: 55% by mass). Further, rosin-modified phenol resin (TESPOL 1304 (trade name) manufactured by Hitachi Kasei Polymer Co., Ltd.) was dissolved by heating in a mixed solvent of linseed oil and No. 5 solvent to obtain resin varnish B (resin concentration: 55% by mass).

(Preparation of Resin for dispersing pigments)

A mixture of 100 parts of 12-hydroxystearic acid, 10 parts of xylene and 0.1 parts of tetra-n-butyl titanate was placed in a separable flask equipped with a condenser, a water separator, a thermometer and a nitrogen-introducing tube, and heated with stirring at a temperature of 180°C to 200°C for 6 hours. At this time, mixing was performed under nitrogen gas stream while separating the produced water to the water separator. Subsequently, xylene was removed by distillation under reduced pressure to obtain a polyester resin having a carboxyl group (hereinafter, described as a resin for dispersing pigments). The resin was a pale brown polymer having weight average molecular weight of 4,000 and an acid value of 30.

(Ink Composition)

Ink bases 1 to 6 were prepared according to the formulae set forth below. It should be noted that at the beginning of the preparation, the solvent was added to each of pigment pastes a to f and subj ected to a thorough ultrasonic treatment, and thereafter other components were added thereto with stirring, and then kneaded by a three-roll mill.

Table 9

| (Formula of Ink Base) | | | | | | |
|---|---|---|---|---|---|---|
| | Unit (mass parts) | | | | | |
| Ingredient | Base 1 | Base 2 | Base 3 | Base 4 | Base 5 | Base 6 |
| Pigment Paste a | 40 | - | - | - | - | - |
| Pigment Paste b | - | 40 | - | - | - | - |
| Pigment Paste c | - | - | 40 | - | - | - |
| Pigment Paste d | - | - | - | 40 | - | - |
| Pigment Paste e | - | - | - | - | 40 | - |
| Pigment Paste f | - | - | - | - | - | 40 |
| Resin for Dispersing Pigments | 8 | 8 | 8 | 8 | 8 | 8 |
| Resin Varnish A | 42 | 42 | 42 | 42 | 42 | 42 |
| Solvent | 10 | 10 | 10 | 10 | 10 | 10 |

Ink compositions 1 to 6 were prepared using the above ink bases in accordance with the formula set forth below. It should be noted that the ink base 1 corresponds to the ink composition 1, and likewise the ink bases 2 to 6 correspond to the ink compositions 2 to 6 respectively.

| (Formula of Ink) | |
|---|---|
| Ingredient | mass parts |
| Ink Base | 40 |
| Resin Varnish B | 50 |
| Wax | 5 |
| Solvent | 5 |

In the above formula, as the wax, there was used a polyethylene wax compound manufactured by Shamrock Co.
In the preparation of the ink composition, the solvent was added to the ink base and subj ected to a thorough ultrasonic treatment, and thereafter other components were added thereto with stirring, and then the solvent was further added thereto so that the pigment content was ultimately 15%.

[Evaluation of Transparency]

Each of the ink compositions 1 to 6 was coated on a 60 μm thick polyethylene terephthalate (PET) sheet using a bar coater and dried to evaluate transparency visibly according to the criterion described below. 2: excellent 1: poor

[Evaluation of Light Fastness]

Each of the ink compositions 1 to 6 was coated on a Premium Glossy Photo Paper (trade name, manufactured by Seiko-Epson Co.) using a bar coater and dried. Thereafter, an initial reflection density ($I_0$) of each of the resultant coatings was measured, and then each of the coatings was irradiated by a xenon lamp with illuminance of 170,000 lux for 4 days to measure a reflection density ($I_1$). A ratio of $I_1/I_0$ x 100 (%) was calculated and evaluation was performed according to the criterion as set forth below. 3: 95% to 100% 2: 90% or more and less than 95% 1: less than 90%
The results of each of evaluations are shown in Table 10.

Table 10

| | Transparency | Light Fastness |
|---|---|---|
| Ink Composition 1 (This invention) | 2 | 3 |
| Ink Composition 2 (This invention) | 2 | 3 |
| Ink Composition 3 (This invention) | 2 | 2 |

(continued)

| | Transparency | Light Fastness |
|---|---|---|
| Ink Composition 4 (Comparative Example) | 1 | 2 |
| Ink Composition 5 (Comparative Example) | 1 | 2 |
| Ink Composition 6 (Comparative Example) | 1 | 1 |

As seen from Table 10, printed articles formed by using the ink compositions of the present invention respectively are excellent in both transparency and light fastness, even though the ink compositions were of high concentration.

From the above results, it is concluded that the particles of the water-insoluble colorant in the dispersion of the present invention are made small to fine down to nanometer sizes, and the aggregation is suppressed thereby enabling to maintain favorite dispersibility. Further, the present invention enables to produce dispersion having the above mentioned superior performance efficiently and with an excellent purity. Furthermore, because the ink composition prepared from the dispersion of the present invention and the printed article using the ink composition have high transparency and the ink composition is superior in discharging property due to the small particle sizes, they can be suitably used as the ink in the case where the color shade of the printed article is adjusted by the ejecting amount of the ink such as in the ink-jet recording system. The ink composition made from the dispersion of the present invention is superior in transparency and in color fastness to light, and accordingly, can provide a recording liquid, an image forming method and an image forming apparatus giving an image having high accuracy and high quality.

Having described our invention as related to the present embodiments, it is our intention that the invention not be limited by any of the details of the description, unless otherwise specified, but rather be construed broadly within its spirit and scope as set out in the accompanying claims.

This application claims priority on Patent Application No. 2008-081861 filed in Japan on March 26, 2008, which is entirely herein incorporated by reference.

## Claims

1. A dispersion of a water-insoluble colorant comprising:

   a medium containing water;
   fine particles of the water-insoluble colorant; and
   a polymer compound or a surfactant that includes at least one kind of electron-withdrawing group or group of atoms represented by any one of formulae (I) to (IV) as its hydrophilic part:

   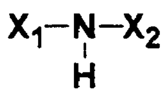
   Formula (I)

   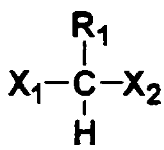
   Formula (II)

   $-B(OH)_2$
   Formula (III)

   $-SO_2M$
   Formula (IV)

   wherein at least one of $X_1$ and $X_2$ represents an electron-withdrawing linking group on the condition that when at least one of $X_1$ and $X_2$ is not the linking group, the at least one of $X_1$ and $X_2$ represents an electron-withdrawing substituent; $R_1$ represents a hydrogen atom or a substituent; and M represents a hydrogen atom or a metal atom.

2. The dispersion according to Claim 1, wherein $X_1$ and $X_2$ each are an electron-withdrawing linking group or an electron-withdrawing substituent whose $\sigma_m$-value in Hammett substituent constant is 0 or more.

3. The dispersion according to Claim 1 or 2, wherein $X_1$ and $X_2$ each are selected from the group consisting of -CO-, -SO-, $-SO_2-$, -CN, -NO, $-NO_2$, -OH, -PO-, a halogen atom, an aryl group, and a heterocyclic group.

4. The dispersion according to any one of Claims 1 to 3, wherein the group represented by formula (I) is a group of atoms represented by formula (V):

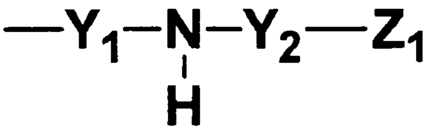 Formula (V)

wherein $Y_1$ and $Y_2$ each independently represent -CO- or $-SO_2-$; and $Z_1$ represents an alkyl group, a cycloalkyl group, an aryl group or a heterocyclic group.

5. The dispersion according to any one of Claims 1 to 4, wherein the polymer compound having the group of atoms represented by formula (I) as its hydrophilic part is a polymer compound having a repeating unit represented by formula (VI):

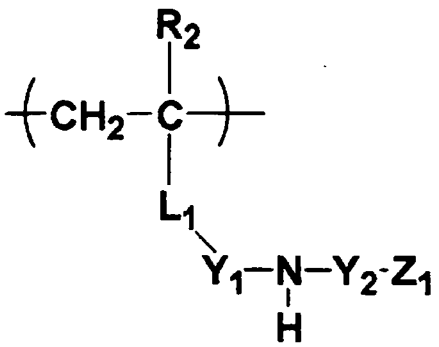 Formula (VI)

wherein $R_2$ represents a hydrogen atom or a substituent; $L_1$ represents a single bond or a divalent linking group; $Y_1$ and $Y_2$ each independently represent -CO- or $-SO_2-$; and $Z_1$ represents an alkyl group, a cycloalkyl group, an aryl group or a heterocyclic group.

6. The dispersion according to any one of Claims 1 to 5, wherein the polymer compound having the group of atoms represented by formula (I) as its hydrophilic part is a polymer compound having repeating units represented by formula (VII):

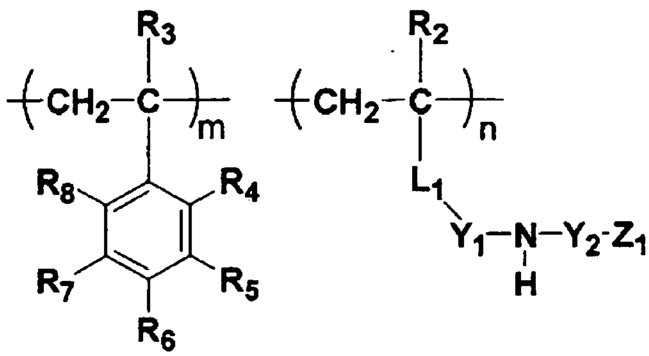 Formula (VII)

wherein $R_3$, $R_4$, $R_5$, $R_6$, $R_7$ and $R_8$ each independently represent a hydrogen atom or a substituent; $R_2$ represents a hydrogen atom or a substituent; $L_1$ represents a single bond or a divalent linking group; $Y_1$ and $Y_2$ each independently represent -CO-or $-SO_2-$; $Z_1$ represents an alkyl group, a cycloalkyl group, an aryl group or a heterocyclic group; and m and n each independently represents a copolymerization ratio of the repeating units.

7. The dispersion according to any one of Claims 1 to 5, wherein the polymer compound having the group of atoms represented by formula (I) as its hydrophilic part is a polymer compound having repeating units represented by any one of formula (VIII), formula (IX), formula (X) and formula (XI):

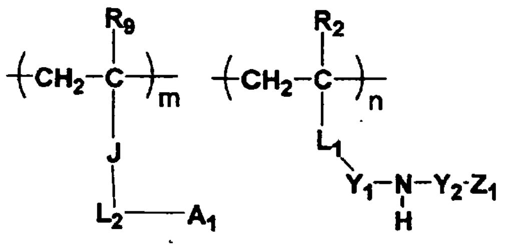

Formula (VIII)

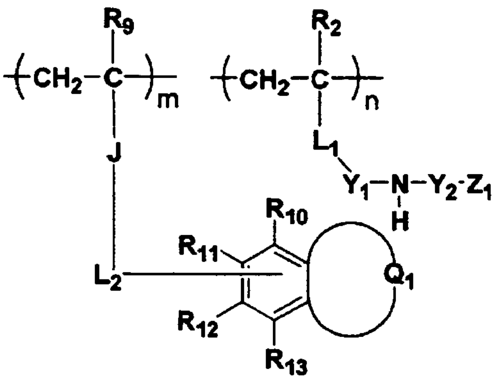

Formula (IX)

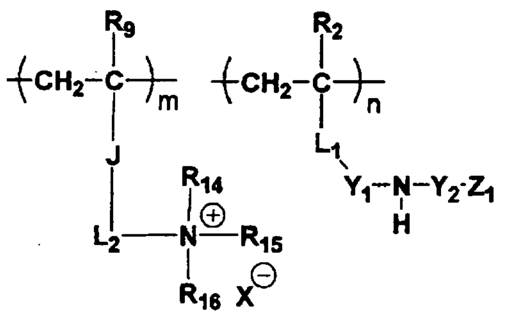

Formula (X)

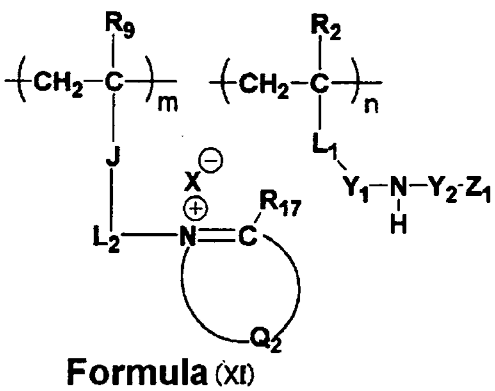

Formula (XI)

wherein, in formula (VIII), $R_9$ represents a hydrogen atom or a substituent; J represents -CO-, -COO-, -CONR$^{17}$-, -OCO- or a methylene group; $L_2$ represents a single bond or a divalent linking group; $A_1$ represents a heterocyclic group; $R_2$ represents a hydrogen atom or a substituent; $L_1$ represents a single bond or a divalent linking group; $Y_1$ and $Y_2$ each independently represent -CO- or -$SO_2$-; $Z_1$ represents an alkyl group, a cycloalkyl group, an aryl group or a heterocyclic group; and m and n each independently represents a copolymerization ratio of the repeating units;
wherein, in formula (IX), $R_9$ represents a hydrogen atom or a substituent; $R_{10}$, $R_{11}$, $R_{12}$ and $R_{13}$ each independently represent a single bond, a hydrogen atom or a substituent; when $R_{10}$ to $R_{13}$ each represent a substituent, they may bond to each other to a form ring; $Q_1$ represents a group of atoms necessary for forming, with the carbon atoms -C=C-, a ring; J represents -CO-, -COO-, -CONR$^{17}$-, -OCO- or a methylene group; $L_2$ represents a single bond or a divalent linking group; $R_2$ represents a hydrogen atom or a substituent; $L_1$ represents a single bond or a divalent linking group; $Y_1$ and $Y_2$ each independently represent -CO- or -$SO_2$-; $Z_1$ represents an alkyl group, a cycloalkyl group, an aryl group or a heterocyclic group; and m and n each independently represents a copolymerization ratio of the repeating units;
wherein, in formula (X), $R_9$ represents a hydrogen atom or a substituent; $R_{14}$, $R_{15}$ and $R_{16}$ each independently represents a substituted or unsubstituted alkyl group or a substituted or unsubstituted aryl group; $R_{14}$ to $R_{16}$ may bond each other to form a saturated or unsaturated ring; J represents -CO-, -COO-, -CONR$^{17}$-, -OCO- or a methylene group; $L_2$ represents a single bond or a divalent linking group; X is an anion group balancing with the cation electric charge on the nitrogen atom; $R_2$ represents a hydrogen atom or a substituent; $L_1$ represents a single bond or a divalent linking group; $Y_1$ and $Y_2$ each independently represent -CO- or -$SO_2$-; $Z_1$ represents an alkyl group, a cycloalkyl group, an aryl group or a heterocyclic group; and m and n each independently represents a copolymerization ratio of the repeating units; and
wherein, in formula (XI), $R_9$ represents a hydrogen atom or a substituent; $R_{17}$ represents a hydrogen atom or a substituent; $Q_2$ represents a group of atoms necessary for forming, with the carbon atom and the nitrogen atom -N=C($R_{17}$)-, a ring; J represents -CO-, -COO-, -CONR$^{17}$-, -OCO- or a methylene group; $L_2$ represents a single bond or a divalent linking group; $R_2$ represents a hydrogen atom or a substituent; $L_1$ represents a single bond or a divalent linking group; $Y_1$ and $Y_2$ each independently represent -CO- or -$SO_2$-; $Z_1$ represents an alkyl group, a cycloalkyl group, an aryl group or a heterocyclic group; m and n each independently represents a copolymerization ratio of

the repeating units; and X is an anion group balancing with the cation electric charge on the nitrogen atom.

8. The dispersion according to any one of Claims 1 to 7, wherein the average particle size of the fine particles of the water-insoluble colorant is 150 nm or less.

9. The dispersion according to any one of Claims 1 to 8, wherein the water-insoluble colorant is a pigment.

10. The dispersion according to any one of Claims 1 to 9,
wherein the fine particles show the same color as that shown by the water-insoluble colorant in the state of crystal, and wherein when the absorbance peak of the dispersion in a visible light region is set to 1, a light scattering intensity is 30,000 cps or less.

11. A polymer dispersing agent for water-insoluble colorant, comprising repeating units represented by formula (VII):

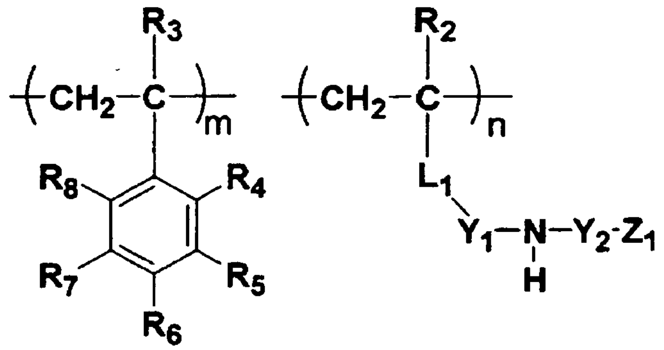

Formula (VII)

wherein $Y_1$ and $Y_2$ each independently represent -CO- or -$SO_2$-; $Z_1$ represents an alkyl group, a cycloalkyl group, an aryl group or a heterocyclic group; $R_2$ represents a hydrogen atom or a substituent; $L_1$ represents a single bond or a divalent linking group; $R_3$, $R_4$, $R_5$, $R_6$, $R_7$ and $R_8$ each independently represent a hydrogen atom or a substituent; and m and n each independently represents a copolymerization ratio of the repeating units.

12. The polymer dispersing agent for water-insoluble colorant according to Claim 11, wherein the repeating units represented by formula (VII) are repeating units represented by any one of formula (XII), formula (XIII), formula (XIV) and formula (XV):

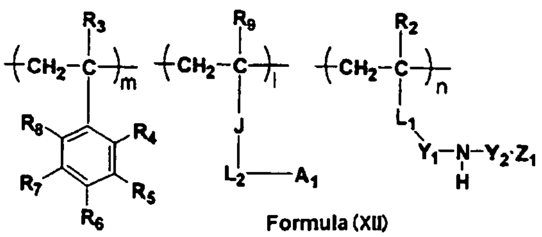

Formula (XII)

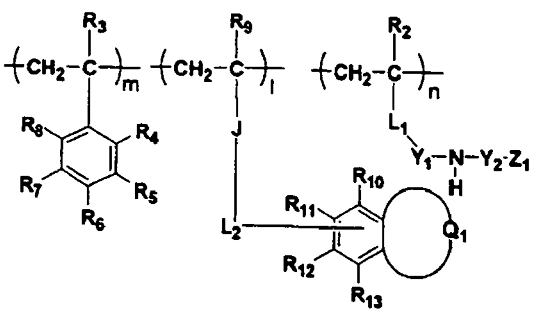

Formula (XIII)

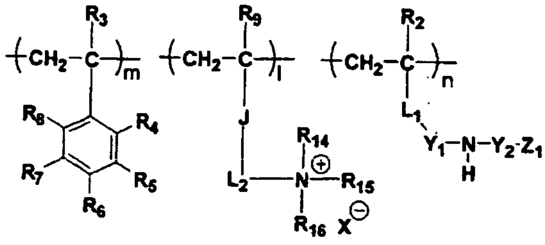

Formula (XIV)

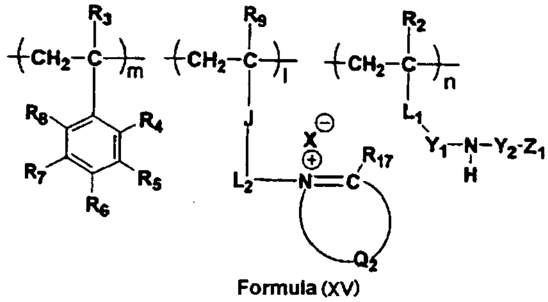

Formula (XV)

wherein, in formula (XII), 1, m and n each independently represents a copolymerization ratio of the repeating units; $R_9$ represents a hydrogen atom or a substituent; $L_2$ represents a single bond or a divalent linking group; J represents -CO-, -COO-, -CONR$^{17}$-, -OCO- or a methylene group; $A_1$ represents a heterocyclic group; and $R_2$ to $R_8$, $L_1$, $Y_1$, $Y_2$ and $Z_1$ have the same meanings as those in formula (VII), respectively;
wherein, in formula (XIII), 1, m and n each independently represents a copolymerization ratio of the repeating units; $R_9$ represents a hydrogen atom or a substituent; $R_{10,}$ $R_{11}$, $R_{12}$ and $R_{13}$ each independently represent a single bond, a hydrogen atom or a substituent; when $R_{10}$ to $R_{13}$ each represent a substituent, they may bond each other to form a ring; $Q_1$ represents a group of atoms necessary for forming, with the carbon atoms -C=C-, a ring; J represents -CO-, -COO-, -CONR$^{17}$-, -OCO- or a methylene group; and $R_2$ to $R_8$, $L_1$, $Y_1$, $Y_2$ and $Z_1$ have the same meanings as those in formula (VII), respectively;
wherein, in formula (XIV), 1, m and n each independently represents a copolymerization ratio of the repeating units; $R_9$ represents a hydrogen atom or a substituent; $R_{14}$, $R_{15}$ and $R_{16}$ each independently represents a substituted or unsubstituted alkyl group or a substituted or unsubstituted aryl group; $R_{14}$ to $R_{16}$ may bond each other to form a saturated or unsaturated ring; J represents -CO-, -COO-,- CONR$^{17}$-, -OCO- or a methylene group; $L_2$ represents a single bond or a divalent linking group; X is an anion group balancing with the cation electric charge on the nitrogen atom; and $R_2$ to $R_8$, $L_1$, $Y_1$, $Y_2$ and $Z_1$ have the same meanings as those in formula (VII), respectively; and
wherein, in formula (XV), 1, m and n each independently represents a copolymerization ratio of the repeating units; $R_9$ represents a hydrogen atom or a substituent; $R_{17}$ represents a hydrogen atom or a substituent; $Q_2$ represents a group of atoms necessary for forming, with the carbon atom and the nitrogen atom -N=C($R_{17}$)-, a ring; J represents -CO-, -COO-, -CONR$^{17}$-, -OCO- or a methylene group; $L_2$ represents a single bond or a divalent linking group; $R_2$ to $R_8$, $L_1$, $Y_1$, $Y_2$ and $Z_1$ have the same meanings as those in formula (VII), respectively; and X is an anion group balancing with the cation electric charge on the nitrogen atom.

**13.** Fine particles of a water-insoluble colorant, comprising:

the water-insoluble colorant; and
a polymer compound or a surfactant that includes at least one kind of electron-withdrawing group or group of atoms represented by any one of formulae (I) to (IV) as its hydrophilic part:

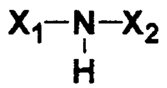

Formula (I)

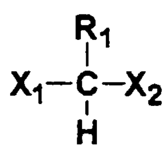

Formula (II)

$-B(OH)_2$

Formula (III)

$-SO_2M$

Formula (IV)

wherein at least one of $X_1$ and $X_2$ represents an electron-withdrawing linking group on the condition that when at least one of $X_1$ and $X_2$ is not the linking group, the at least one of $X_1$ and $X_2$ represents an electron-withdrawing substituent; $R_1$ represents a hydrogen atom or a substituent; and M represents a hydrogen atom or a metal atom.

**14.** A method of producing a substance containing a water-insoluble colorant, comprising:

dissolving an water-insoluble colorant into an aprotic water-soluble organic solvent in the presence of alkali;

and making a solution of the water-insoluble colorant and an aqueous medium to contact each other, to give a dispersion in which fine particles of the water-insoluble colorant are generated;

wherein a polymer compound or a surfactant that includes at least one kind of electron-withdrawing group or group of atoms represented by any one of formulae (I) to (IV) as its hydrophilic part is contained into the solution of the water-insoluble colorant and/or the aqueous medium, to obtain the dispersion containing the fine particles of the water-insoluble colorant, and the polymer compound or surfactant:

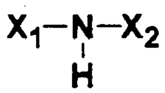

Formula (I)

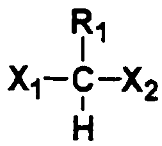

Formula (II)

$-B(OH)_2$

Formula (III)

$-SO_2M$

Formula (IV)

wherein at least one of $X_1$ and $X_2$ represents an electron-withdrawing linking group on the condition that when at least one of $X_1$ and $X_2$ is not the linking group, the at least one of $X_1$ and $X_2$ represents an electron-withdrawing substituent; $R_1$ represents a hydrogen atom or a substituent; and M represents a hydrogen atom or a metal atom.

**15.** The method of producing a substance containing a water-insoluble colorant according to Claim 14, wherein the polymer compound or the surfactant that includes at least one kind of group of atoms represented by any one of formulae (I) to (IV) as its hydrophilic part is contained into the aqueous medium.

**16.** The method of producing a substance containing a water-insoluble colorant according to Claim 14 or 15, wherein the solubility of the aprotic water-soluble organic solvent with respect to water is 5 mass% or more.

**17.** The method of producing a substance containing a water-insoluble colorant according to any one of Claims 14 to 16, wherein the alkali is at least one kind of alkali selected from the group consisting of hydroxides of alkaline metal, alkoxides of alkaline metal, hydroxides of alkaline earth metal, alkoxides of alkaline earth metal and organic strong bases.

**18.** The method of producing a substance containing a water-insoluble colorant according to any one of Claims 14 to 17, further comprising the steps of:

forming flocculated aggregates of the fine particles of the water-insoluble colorant included in the dispersion; and separating the aggregates of the fine particles of the water-insoluble colorant from the dispersion, to endow a re-dispersion property into water to the fine particles composing the aggregates.

**19.** The method of producing a substance containing a water-insoluble colorant according to Claim 18,
wherein the aggregates are formed by adding an acid, and
wherein the re-dispersion property is endowed to the aggregates by adding an alkali.

**20.** The method of producing a substance containing a water-insoluble colorant according to any one of Claims 14 to 19, which further comprises heating the dispersion or the aggregates.

**21.** The method of producing a substance containing a water-insoluble colorant according to any one of Claims 18 to 20, further comprising the steps of; dissociating the aggregation in the aggregates; and re-dispersing them into a medium containing water.

**22.** A dispersion of a water-insoluble colorant obtained in accordance with the method according to any one of Claims 14 to 21.

**23.** The dispersion of a water-insoluble colorant according to any one of Claims 1 to 10 and 22, wherein the water-insoluble colorant is an organic pigment selected from the group consisting of quinacridone organic pigments, diketopyrrolopyrrole organic pigments, perylene organic pigments, mono azo yellow organic pigments, condensed azo organic pigments, quinophthalone organic pigments, benz-imidazolone organic pigments, disazo yellow pigments and phthalocyanine pigments.

**24.** A recording liquid produced employing the dispersion according to any one of Claims 1 to 10, 22 and 23, wherein the water-insoluble colorant is contained in an amount of 0.1 to 20% by mass with respect to a total mass of the recording liquid.

**25.** The recording liquid according to Claim 24, wherein the recording liquid is an inkjet recording liquid.

**26.** An ink set using the inkjet recording liquid according to Claim 25.

**27.** A printed article having an image recorded thereon by a means that can provide, with a medium, the recording liquid according to Claim 24 or 25, or the recording liquid by using the ink set according to Claim 26, wherein the means has a function to adjust an applied amount or concentration of the recording liquid, thereby light-to-dark contrast of the printed article is adjusted.

**28.** An image-forming method, which comprises recording an image by providing, with a medium, the recording liquid according to Claim 24 or 25, or the recording liquid by using the ink set according to Claim 26.

**29.** An image-forming apparatus having a means that can record an image by providing, with a medium, the recording liquid according to Claim 24 or 25, or the recording liquid by using the ink set according to Claim 26.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006057044 A
- JP 2006328262 A
- JP 60035055 A
- JP 2003113341 A
- JP 2003026972 A
- JP 2004043776 A
- JP 2006342316 A
- JP 2007119586 A
- WO 2006121018 A
- JP 2005307154 A
- JP 2006039643 A
- JP 3936558 B
- JP 2008081861 A


### Non-patent literature cited in the description


- Latest Pigments Dispersion Practice Know-How and Examples. TECHNICAL INFORMATION INSTITUTE CO., LTD, October 2005, 208-211
- **Ryoji Noyori ; Masakatsu Shibazaki ; Keisuke Suzuki ; Kouhei Tamao ; Kazuhiro Nakasuji.** *Organic Chemistry I,* 174-179
- **Hammett, L. P.** The Effect of Structure upon the Reactions of Organic Compounds. Benzene Derivatives. *J. Am. Chem. Soc.,* 1937, vol. 59, 96-103
- **C. Hansch ; A. Leo ; R. W. Taft.** A Survey of Hammett Substituent Constants and Resonance and Field Parameters. *Chem. Rev.,* 1991, vol. 91, 165-195
- *Analytical Chemistry,* 2007, vol. 56 (9), 721-728